# EUROPÄISCHE PATENTSCHRIFT

(11) **EP 1 795 534 B1**
(45) Veröffentlichungstag und Bekanntmachung des Hinweises auf die Patenterteilung: **10.03.2010**
(21) Anmeldenummer: 06117703.6
(22) Anmeldetag: 24.07.2006
(51) Int. Cl.: C07F 7/18

(54) **Organosiliciumverbindungen, ihre Herstellung und ihre Verwendung**
Organosilicon compounds, their preparation and use
Composées organosilicies, leur préparation et leur utilisation

(30) Priorität: 17.08.2005 DE 102005038791
(43) Veröffentlichungstag der Anmeldung: 13.06.2007
(73) Patentinhaber: Evonik Degussa GmbH, 45128 Essen (DE)
(72) Erfinder: Korth, Karsten, 79639, Grenzach-Wyhlen (DE); Hasse, Andre, 52441, Linnich (DE); Witzsche, Susann, 79618, Rheinfelden (DE); Klockmann, Oliver, 52382, Niederzier (DE); Albert, Philipp, 79539, Lörrach (DE)

(56) Entgegenhaltungen:
- EP-A- 1 002 834
- US-A- 4 048 206
- SOROKIN, M. S. ET AL: "S-(Trimethoxysilylmethyl)- and S-(Silatranylmethyl)isothiuronium Halides and Their N-Substituted Derivatives" RUSSIAN JOURNAL OF GENERAL CHEMISTRY (TRANSLATION OF ZHURNAL OBSHCHEI KHIMII) , 74(4), 551-558 CODEN: RJGCEK; ISSN: 1070-3632, 2004, XP009084760

## Beschreibung

Die Erfindung betrifft Organosiliciumverbindungen, ihre Herstellung und ihre Verwendung.

Aus J. Gen. Chem. USSR (EN) 45, 1975, 1367 (Voronkov et al.) ist die Synthese von
CH₃-C(O)-S-CH₂-Si(O-CH₂-CH₂)₃N,
CH₃-C(O)-S-CH₂-CH₂-Si(O-CH₂-CH₂)₃N und
CH₃-C(O)-S-CH₂-CH₂-CH₂-Si(O-CH₂-CH₂)₃N
durch Umesterung der entsprechenden Methoxy- und Ethoxysilane mit Triethanolamin unter Freisetzung von Methanol oder Ethanol bekannt.

Aus US 4,048,206 ist die Synthese einer Verbindung der allgemeinen Formel X'-Z'-Si (OR')₃N, wobei X' = R"C(O)M', M' = S, R" = Alkyl, Z' = bivalenter Kohlenwasserstoff und R' = -CH₂-CH₂- oder -CH(CH₃)-CH₂- sein kann, bekannt. Diese Verbindungen können unter anderem als Additiv für synthetische Polymere verwendet werden.

Ferner ist aus J. Gen. Chem. USSR (EN) 49, 1979, 1130-1136 (Voronkov et al.) die Synthese von
R'-S-CH₂-CH₂-Si(O-CH(CH₃)CH₂)_{m'}(O-CH₂-CH₂)_{3-m'}N durch photochemisch unterstütze Addition von R'SH an CH₂=CH-Si(O-CH(CH₃)CH₂)_{m'}(O-CH₂-CH₂)_{3-m'}N bekannt.

Aus J. Gen. Chem. USSR (EN), 49, 1979, 529-536 sind Verbindungen der Formel R'-S-(CH₂)_{n'}Si(O-CH(CH₃)CH₂)_{3-m'}(O-CH₂-CH₂)_{m'}N bekannt.

Aus J. Gen. Chem. USSR (EN) 69(3), 1999, 394-398 (Sorokin et al.) ist die Synthese von Verbindungen der Formeln
CH₃-C(O)-S-CH₂-Si(O-CH₂-CH₂)₃N,
EtO-C(S)-S-CH₂-Si(O-CH₂-CH₂)₃N und
Et₂N-C(S)-S-CH₂-Si(O-CH₂-CH₂)₃N
aus den Alkalisalzen CH₃C(O)S-K, EtO-C(S)-S-K und Et₂N-C(S)-S-Na in o-Xylene bzw. DMF bekannt.

Ferner ist aus Bull. Acad. Sci. USSR Div. Chem. Sci. (EN), 36, 8, 1987, 1745-1747 (Voronkov et al.) die Synthese von (R'O)₂P(S)SCH₂Si(OCH₂CH₂)₃N und (R'O)₂P(S)S(CH₂)₃Si(OCH₂CH₂)₃N bekannt.

Nachteil der bekannten Verbindungen ist das Verarbeitungsverhalten in Kautschukmischungen, insbesondere hohe Mischungsviskositäten.

Aufgabe der Erfindung ist es, Organosiliciumverbindungen bereitzustellen, die keine flüchtigen Alkohole bei der Anbindung an den Füllstoff freisetzen können, gleichzeitig eine hohe Reaktivität gegenüber Füllstoff und Polymer besitzen und eine verbesserte Verarbeitbarkeit, beispielsweise eine niedrige Viskosität der Mischung, ein gutes Extrusionsverhalten, eine gute Fließfähigkeit, eine angemessene Mooney-Scorch- oder eine verbesserte Inkubationszeit, und/oder verbesserte dynamische Eigenschaften in Kautschukmischungen bewirken.

Gegenstand der Erfindung sind Organosiliciumverbindungen der allgemeinen Formel (I),

Q-[S-G-Si(-O-CX¹X²-CX¹X³-)₃N] (I)

wobei Q gleich
SiX⁴₃₋ₜX⁵-, mit t = 0, 1 oder 2,
Y-C(=O)-Z-C(=O)-, Y-C(=S)-Z-C(=S)-, Y-C(=NR)-Z-C(=NR)-,
Y-C(=O)-, Y-C(=S)-, Y-C(=NR)-, Y-S(=O)-, Y-S(=O)₂-,
(X⁶) (X⁷)P(=S)-, (X⁶) (X⁷)P(=O)-, X⁸-C(=O)-,
R-C(=S)-, R-C(=NR)-, R-S-C(=NR)-, R-S-C(=O)-,
R-S-C(=S)-, (X⁹)₂N-C(=O)-, (X⁹)₂N-C(=S)-, R-NR-C(=NR)-,
(X⁸)₂N-C(=O)-, (X⁸)₂N-C(=S)-, (X⁸)HN-C(=O)-, (X⁸)NH-C(=S)-,
R-O-C(=O)-, X⁹-O-C(=S)-, R-O-C(=NR)-, R-S(=O)-, R-S(=O)₂-,
R-O-S(=O)₂-, R-NR-S(=O)₂-, R-S-S(=O)₂-, R-S-S(=O)-,
R-O-S(=O)-, R-NR-S(=O)-, (R-S-)₂P(=O)-, (R-S-)₂P(=S)-,
(R-NR-)₂P(=S)-, (R-NR-)₂P(=O)-,R-(R-S-)P(=O)-,
R-(R-O-)P(=O)-, R-(R-S-)P(=S)-, R-(R-O-)P(=S)-,
R-(R-NR-)P(=O)-, R-(R-NR-)P(=S)-, (R-NR-)(R-S-)P(=O)-,
(R-O-) (R-NR-)P(=O)-, (R-O-) (R-S-)P(=O)-, (R-O-) (R-S-)P(=S)-, (R-NR-)(R-S-)P(=S)-, (R-O-)(R-NR-)P(=S)-,
(R-O-) (Y)P(=O)-, (R-O-) (Y)P(=S)-, (R-S-) (Y)P(=O)-, (R-S-)(Y)P(=S)-, (R-NR-) (Y)P(=O)-, (R-NR-) (Y) P (=S) -, R-(Y)P(=O)-, R-(Y)P(=S)-,Y₂P(=O)-, Y₂P(=S)- oder Y₂P(NR)- ist,
R gleich oder verschieden Wasserstoff (H), eine unverzweigte, zyklische oder verzweigte, substituierte oder unsubstituierte, gesättigte oder ungesättigte einbindige (C₁-C₂₄)-, vorzugsweise (C₃-C₂₄)-, besonders bevorzugt (C₅-C₁₈)-, ganz besonders bevorzugt (C₈-C₁₈)-, Kohlenwasserstoffkette,
eine unsubstituierte oder -NH₂, HS-, Cl-, Brsubstituierte (C₆-C₂₄)-, bevorzugt (C₁₀-C₂₄)-, besonders bevorzugt (C₁₄-C₂₄)-, Arylgruppe oder
eine unsubstituierte oder -NH₂, HS-, Cl-, Brsubstituierte (C₇-C₂₄)-, bevorzugt (C₉-C₂₄)-, besonders bevorzugt (C₁₂-C₂₄)-, Aralkylgruppe ist,
Y gleich oder verschieden und [-S-G-Si(-O-CX¹X²-CX¹X³-)₃N] ist,
G gleich oder verschieden ist und
für Q gleich C₆H₅-C(=O)-
G eine unverzweigte, zyklische oder verzweigte, substituierte oder unsubstituierte, gesättigte oder ungesättigte zweibindige (C₃-C₃₀)-, bevorzugt (C₃-C₂₄)-, besonders bevorzugt C₃- oder (C₅-C₂₀)-, ganz besonders bevorzugt C₃- oder (C₆-C₁₈)-, außerordentlich bevorzugt C₃- oder (C₇-C₁₈)-, Kohlenwasserstoffkette , gegebenenfalls können die Kohlenwasserstoffketten ungesättigte Anteile, wie Doppelbindungen oder /und Dreifachbindungen oder auch Alkylaromaten (Aralkyl) oder Aromaten enthalten oder mit diesen substituiert sein, bevorzugt können die substituierten Kohlenwasserstoffketten mit Halogen, beispielsweise Cl oder Br, -COOR oder HS- substituiert sein, ist,
und für alle anderen Q
G eine unverzweigte, zyklische oder verzweigte, substituierte oder unsubstituierte, gesättigte oder ungesättigte zweibindige (C₃-C₂₀)-, ganz besonders bevorzugt C₃- oder (C₅-C₁₈)-, außerordentlich bevorzugt C₃- oder (C₆-C₁₈)-, Kohlenwasserstoffkette, gegebenenfalls können die Kohlenwasserstoffketten ungesättigte Anteile, wie Doppelbindungen oder/und Dreifachbindungen oder auch Alkylaromaten (Aralkyl) oder Aromaten, enthalten oder mit diesen substituiert sein, bevorzugt können die substituierten Kohlenwasserstoffketten mit Halogen, beispielsweise Cl oder Br, -COOR oder HS- substituiert sein, ist,
Z eine unverzweigte, zyklische oder verzweigte, substituierte oder unsubstituierte, gesättigte oder ungesättigte zweibindige (C₁-C₂₄)-, vorzugsweise (C₂-C₂₄)-, besonders bevorzugt (C₄-C₂₀)-, ganz besonders bevorzugt (C₆-C₁₈)-, außerordentlich bevorzugt (C₁₀-C₁₈)-, Kohlenwasserstoffkette, gegebenenfalls können die Kohlenwasserstoffketten ungesättigte Anteile, wie Doppelbindungen oder/und Dreifachbindungen oder auch Alkylaromaten (Aralkyl) oder Aromaten enthalten oder mit diesen substituiert sein, bevorzugt können die substituierten Kohlenwasserstoffketten mit Halogen, beispielsweise Cl oder Br, -COOR oder HS- substituiert sein, oder eine mit mindestens zwei NH-Gruppen funktionalisierte zweibindige, aliphatische oder aromatische, gesättigte oder ungesättigte Kohlenwasserstoffkette, beispielsweise -NH-T¹-NH- oder-NH-T¹-CH₂-T²-NH-, wobei T¹ und T² gleich oder verschieden sein können und eine zweibindige Kohlenwasserstoffkette, Aromat oder Alkylaromat sein kann, gegebenenfalls substituiert mit -Cl, -Br, -NH₂,-NO₂, -O-Alkyl (C₁-C₁₀) oder Methyl, ist,
X¹, X² und X³ jeweils unabhängig voneinander Wasserstoff (-H), (C₁-C₁₆)-Alkyl, bevorzugt (C₁-C₈)-Alkyl, besonders bevorzugt Methyl oder Ethyl, oder
Aryl, bevorzugt Phenyl, bedeuten,
X⁴ und X⁵ jeweils unabhängig voneinander
Wasserstoff (-H), eine unverzweigte, zyklische oder verzweigte, substituierte oder unsubstituierte, gesättigte oder ungesättigte einbindige (C₁-C₂₄)-, bevorzugt (C₄-C₂₀)-, ganz besonders bevorzugt (C₈-C₂₀)-, außerordentlich bevorzugt Methyl, Ethyl, Butyl, C₈-Alkyl, C₁₆-Alkyl oder C₁₈-Alkyl, Kohlenwasserstoffkette,
eine (C₁-C₁₈)- Alkoxygruppe, bevorzugt Methoxy, Ethoxy, Propoxy, C₈-Alkoxy, C₁₂-Alkoxy, C₁₆-Alkoxy oder C₁₈-Alkoxy, eine Arylgruppe, bevorzugt Phenyl,
eine Alkylethergruppe O-(CR^{I}₂- CR^{I}₂)-O-Alk oder Alkylpolyethergruppe O-(CR^{I}₂- CR^{I}₂O)_{y}-Alk, mit y = 2-25, bevorzugt y=2-15, besonders bevorzugt y=3-10, ganz besonders bevorzugt y=3-6, R^{I} unabhängig voneinander H oder eine Alkylgruppe, vorzugsweise eine CH₃-Gruppe, Alk eine lineare oder verzweigte, gesättigte oder ungesättigte Alkylkette mit 1-30 Kohlenstoffatomen (C1-C30), bevorzugt C1-C20, besonders bevorzugt C4-C18, ganz besonders bevorzugt C8-C16, ist,
eine Aralkylgruppe, bevorzugt -CH₂-CH₂-Phenyl,
ein Halogen, bevorzugt F-, Cl- oder Br-,
ein Rest Alk-(COO), bevorzugt Acetoxy, C₁₁H₂₃(COO), C₁₃H₂₇(COO), C₁₅H₃₁(COO) oder C₁₇H₃₅(COO),
oder Y, bevorzugt
[-S-CH₂-Si(-O-CH₂-CH₂-)₃N], [-S-CH₂-CH₂-Si(-O-CH₂-CH₂-)₃N],
[-S-CH₂-CH₂-CH₂-Si(-O-CH₂-CH₂-)₃N],
[-S-CH₂-CH(CH₃)-CH₂-Si(-O-CH₂-CH₂-)₃N],
[-S-CH(CH₃)-CH₂-CH₂-Si(-O-CH₂-CH₂-)₃N],
[-S-CH₂-Si(-O-CH(CH₃)-CH₂-)₃N],
[-S-CH₂-CH₂-Si(-O-CH(CH₃)-CH₂-)₃N],
[-S-CH₂-CH₂-CH₂-Si(-O-CH(CH₃)-CH₂-)₃N],
[-S-CH₂-CH(CH₃)-CH₂-Si(-O-CH(CH₃)-CH₂-)₃N] oder
[-S-CH(CH₃)-CH₂-CH₂-Si(-O-CH(CH₃)-CH₂-)₃N], bedeuten,
X⁶ und X⁷ jeweils unabhängig voneinander,
Wasserstoff (-H), -OH, -SH,
eine unverzweigte, zyklische oder verzweigte, substituierte oder unsubstituierte, gesättigte oder ungesättigte einbindige (C₁-C₂₄)-, bevorzugt (C₃-C₂₀)-, besonders bevorzugt (C₆-C₂₀)-, ganz besonders bevorzugt (C₈-C₂₀)-, außerordentlich bevorzugt Methyl, Ethyl, n-Propyl, iso-Propyl, n-Butyl, t-Butyl, C₆-Alkyl, C₆-Cycloalkyl, C₈-Alkyl, C₁₆-Alkyl oder C₁₈-Alkyl, Kohlenwasserstoffkette,
eine (C₄-C₂₄)- Alkoxygruppe, bevorzugt (C₆-C₂₄) Alkoxy, besonders bevorzugt (C₈-C₂₄) Alkoxy, ganz besonders bevorzugt (C₁₀-C₁₈) Alkoxy, außerordentlich bevorzugt C₆-Alkoxy, C₆-Cycloalkyloxy, C₈-Alkoxy, C₁₂-Alkoxy, C₁₆-Alkoxy oder C₁₈-Alkoxy,
eine Arylgruppe, bevorzugt Phenyl,
eine Alkylethergruppe O-(CR^{I}₂-CR^{I}₂)-O-Alk oder Alkylpolyethergruppe O-(CR^{I}₂-CR^{I}₂O)_{y}-Alk,
eine Aralkylgruppe, bevorzugt -CH₂-CH₂-Phenyl,
ein Halogen, bevorzugt F-, Cl- oder Br-, oder
ein Rest Alk-(COO), bevorzugt Acetoxy, C₁₁H₂₃(COO), C₁₃H₂₇(COO), C₁₅H₃₁(COO) oder C₁₇H₃₅(COO), bedeuten,
X⁸ gleich oder verschieden ist und Wasserstoff (H), eine unverzweigte, zyklische oder verzweigte, substituierte oder unsubstituierte, gesättigte oder ungesättigte einbindige (C₂-C₂₄)-, vorzugsweise (C₇-C₂₄)-, besonders bevorzugt C₇- oder (C₉-C₁₉)-, außerordentlich bevorzugt C₇- oder (C₁₁-C₁₇), Kohlenwasserstoffkette,
eine substituierte, bevorzugt -NH₂, HS-, Cl-, Br-, O-Alkyl, -NCO oder -NCS substituierte, (C₆-C₂₄)-, bevorzugt (C₁₀-C₂₄)-, besonders bevorzugt (C₁₄-C₂₄)-, Arylgruppe,
eine unsubstituierte (C₆-C₂₄)-, bevorzugt (C₁₀-C₂₄)-, besonders bevorzugt (C₁₄-C₂₄)-. Arylgruppe oder
eine unsubstituierte oder substituierte, bevorzugt mit-NH₂, HS-, Cl-, Br-, 0-Alkyl, -NCO oder -NCS substituierte, (C₇-C₂₄)-, bevorzugt (C₉-C₂₄)-, besonders bevorzugt (C₁₂-C₂₄)-, Aralkylgruppe bedeutet,
X⁹ gleich oder verschieden ist und Wasserstoff (H), eine unverzweigte, zyklische oder verzweigte, substituierte oder unsubstituierte, gesättigte oder ungesättigte einbindige (C₄-C₂₄)-, vorzugsweise (C₆-C₂₄)-, besonders bevorzugt (C₇-C₁₈)-, außerordentlich bevorzugt (C₉-C₁₆), Kohlenwasserstoffkette,
eine substituierte, bevorzugt mit -NH₂, HS-, Cl-, Br-, O-Alkyl, -NCO oder -NCS substituierte, (C₆-C₂₄)-, bevorzugt (C₁₀-C₂₄)-, besonders bevorzugt (C₁₄-C₂₄)-, Arylgruppe,
eine unsubstituierte (C₇-C₂₄)-, bevorzugt (C₁₀-C₂₄)-, besonders bevorzugt (C₁₄-C₂₄)-, Arylgruppe oder
eine unsubstituierte oder substituierte, bevorzugt mit-NH₂, HS-, Cl-, Br-, O-Alkyl, -NCO oder -NCS substituierte, (C₇-C₂₄)-, bevorzugt (C₉-C₂₄)-, besonders bevorzugt (C₁₂-C₂₄)-, Aralkylgruppe bedeutet.

R kann bevorzugt Methyl, Ethyl, Propyl, Butyl, Cyclohexyl-, C₇H₁₅-, C₉H₁₉- C₁₁H₂₃-, C₁₃H₂₇-, C₁₅H₃₁-, Phenyl-, p-Tolyl-, o-Tolyl- oder m-Tolyl-Gruppe sein. Die substituierten Kohlenwasserstoffgruppen R können mit Halogen, -COOR oder HS- substituiert sein.

G kann bevorzugt -CH₂-, -CH₂CH₂-, -CH₂CH₂CH₂-,
-CH₂CH₂CH₂CH₂-, -CH(CH₃)-, -CH₂CH(CH₃)-, -CH(CH₃)CH₂-,
-C(CH₃)₂-, -CH(C₂H₅)-, -CH₂CH₂CH(CH₃)-, -CH(CH₃)-CH₂CH₂-,
-CH₂CH(CH₃)CH₂-, -CH₂-C₆H₄-CH₂-, -CH₂-C₆H₄-CH₂-CH₂- oder
-CH₂-CH₂-C₆H₄-CH₂-CH₂- sein.

Z kann bevorzugt -CH₂-, -CH₂CH₂-, -CH₂CH₂CH₂-,
-CH₂CH₂CH₂CH₂-, -CH₂CH₂CH₂CH₂CH₂-, -CH₂CH₂CH₂CH₂CH₂CH₂-,-CH(CH₃)-, -CH₂CH(CH₃)-, -CH(CH₃)CH₂-, -C(CH₃)₂-, -CH(C₂H₅)-,
-CH₂CH₂CH(CH₃)-, -CH(CH₃)-CH₂CH₂-, -CH₂CH(CH₃)CH₂-, -C₄H₈-,
-C₆H₁₂-, -C₈H₁₆-, -C₁₀H₂₀-, -C₁₂H₂₄-, -C₆H₄-, -CH₂-C₆H₄-CH₂-,
-CH₂-C₆H₄-CH₂-CH₂-, -CH₂-CH₂-C₆H₄-CH₂-CH₂-, -NH-(CH₂)₂-NH-,-NH-(CH₂)₃-NH-, -NH-(CH₂)₄-NH-, -NH-(CH₂)₅-NH-, -NH-(CH₂)₆-NH-, -NH-(CH₂)₇-NH-, -NH-(CH₂)₈-NH-, -NH-(CH₂)₉-NH-, -NH-(CH₂)₁₀-NH-, -NH-(CH₂)₁₁-NH-, -NH-(CH₂)₁₂-NH-, 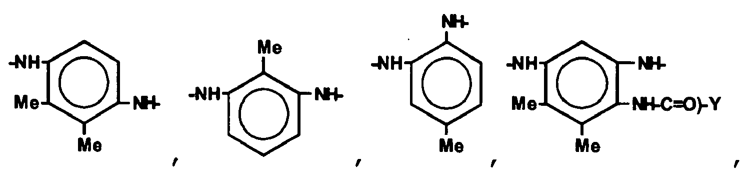 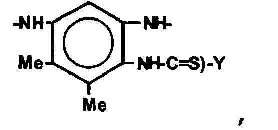 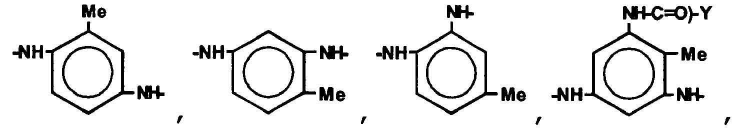 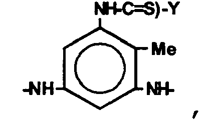 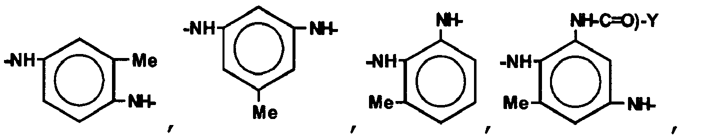 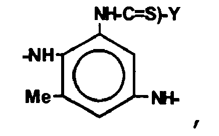 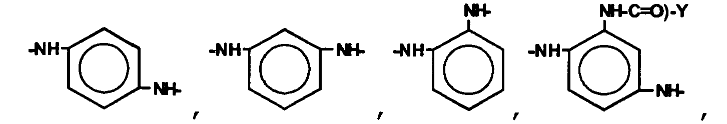 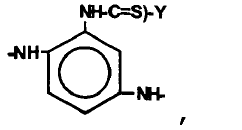 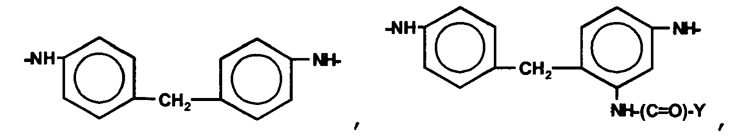 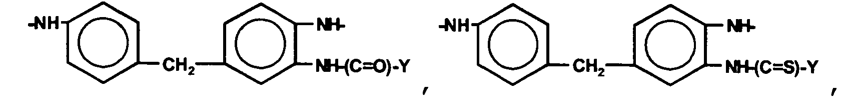 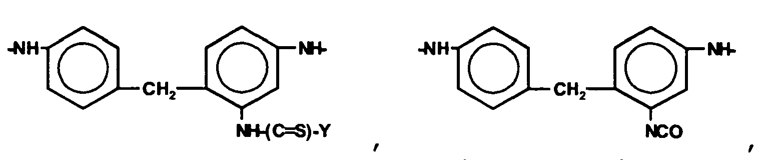 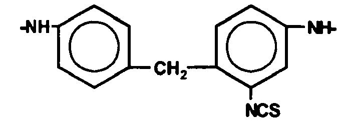 oder 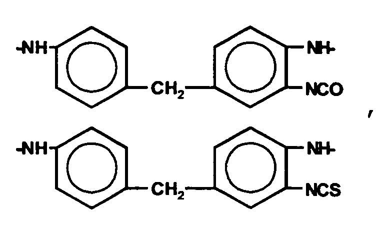 sein.

X⁴ und X⁵ können bevorzugt Methyl, Ethyl, Propyl, Butyl, Cyclohexyl-, C₇H₁₅-, C₈H₁₇- C₉H₁₉- C₁₁H₂₃-, C₁₃H₂₇-, C₁₅H₃₁-, C₁₆H₃₃-, Phenyl-, p-Tolyl-, o-Tolyl- oder m-Tolyl-Gruppe sein.

X⁸ kann bevorzugt Propyl, Butyl, Cyclohexyl-, C₇H₁₅-, C₈H₁₇-, C₉H₁₉- C₁₁H₂₃-, C₁₃H₂₇-, C₁₅H₃₁-, C₁₇H₃₅-, Phenyl-, p-Tolyl-, o-Tolyl- oder m-Tolyl-Gruppe sein. Die substituierten Kohlenwasserstoffketten X⁸ können mit Halogen, -COOR oder HS- substituiert sein.

X⁹ kann bevorzugt Propyl, Butyl, Cyclohexyl-, C₇H₁₅-, C₉H₁₉- C₁₁H₂₃-, C₁₃H₂₇-, C₁₅H₃₁-, p-Tolyl-, o-Tolyl- oder m-Tolyl-Gruppe sein. Die substituierten Kohlenwasserstoffketten X⁹ können mit Halogen, -COOR oder HS- substituiert sein.

Für X⁸ und X⁹ können folgende substituierte Arylgruppen und Aralkylgruppen besonders bevorzugt sein:

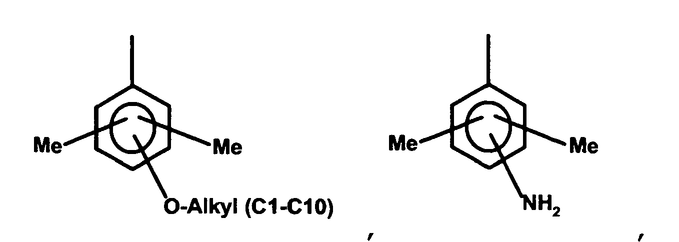

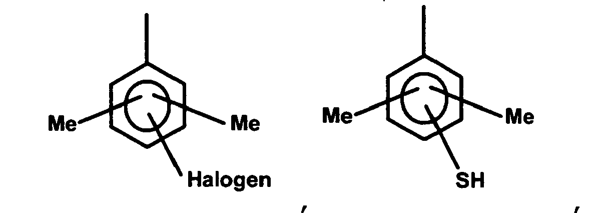

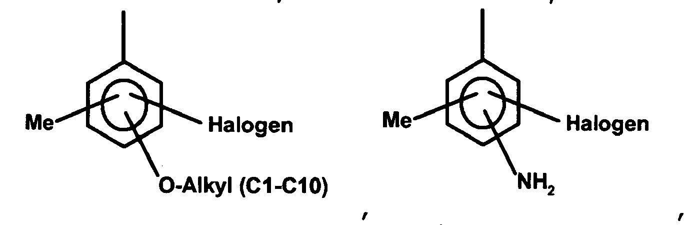

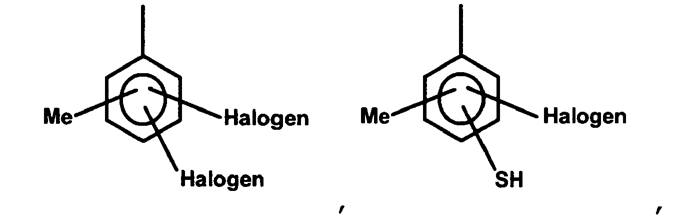

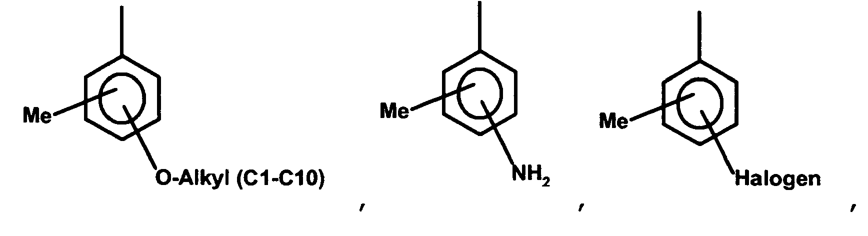

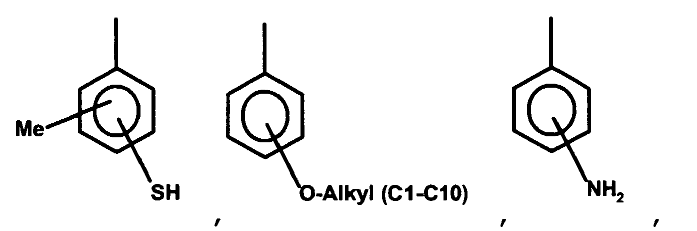

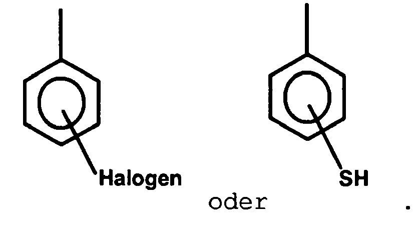

Organosiliciumverbindungen der allgemeinen Formel (I) können Mischungen von Organosiliciumverbindungen der allgemeinen Formeln (I) sein. Organosiliciumverbindungen der allgemeinen Formel (I) können Hydrolysate der Organosiliciumverbindungen der allgemeinen Formel (I) sein.

Organosiliciumverbindungen der allgemeinen Formel (I), mit Q gleich X⁸-C(=O)- können sein:
C₅H₁₁-C(O)-S-CH₂-Si(-O-CH₂-CH₂-)₃N,
C₅H₁₁-C(O)-S-CH₂-CH₂-Si(-O-CH₂-CH₂-)₃N,
C₅H₁₁-C(O)-S-CH₂-CH₂-CH₂-Si(-O-CH₂-CH₂-)₃N,
C₅H₁₁-C(O)-S-CH(CH₃)-CH₂-CH₂-Si(-O-CH₂-CH₂-)₃N,
C₅H₁₁-C(O)-S-CH₂-CH(CH₃)-CH₂-Si(-O-CH₂-CH₂-)₃N,

C₇H₁₅-C(O)-S-CH₂-Si(-O-CH₂-CH₂-)₃N,
C₇H₁₅-C(O)-S-CH₂-CH₂-Si(-O-CH₂-CH₂-)₃N,
C₇H₁₅-C(O)-S-CH₂-CH₂-CH₂-Si(-O-CH₂-CH₂-)₃N,
C₇H₁₅-C(O)-S-CH₂-CH(CH₃)-CH₂-Si(-O-CH₂-CH₂-)₃N,
C₇H₁₅-C(O)-S-CH(CH₃)-CH₂-CH₂-Si(-O-CH₂-CH₂-)₃N,

C₉H₁₉-C(O)-S-CH₂-Si(-O-CH₂-CH₂-)₃N,
C₉H₁₉-C(O)-S-CH₂-CH₂-Si(-O-CH₂-CH₂-)₃N,
C₉H₁₉-C(O)-S-CH₂-CH₂-CH₂-Si(-O-CH₂-CH₂-)₃N,
C₉H₁₉-C(O)-S-CH₂-CH(CH₃)-CH₂-Si(-O-CH₂-CH₂-)₃N,
C₉H₁₉-C(O)-S-CH (CH₃)-CH₂-CH₂-Si(-O-CH₂-CH₂-)₃N,

C₁₁H₂₃-C(O)-S-CH₂-Si(-O-CH₂-CH₂-)₃N,
C₁₁H₂₃-C(O)-S-CH₂-CH₂-Si(-O-CH₂-CH₂-)₃N,
C₁₁H₂₃-C(O)-S-CH₂-CH₂-CH₂-Si(-O-CH₂-CH₂-)₃N,
C₁₁H₂₃-C(O)-S-CH₂-CH(CH₃)-CH₂-Si(-O-CH₂-CH₂-)₃N,
C₁₁H₂₃-C(O)-S-CH (CH₃)-CH₂-CH₂-Si(-O-CH₂-CH₂-)₃N,

C₁₃H₂₇-C(O)-S-CH₂-Si(-O-CH₂-CH₂-)₃N,
C₁₃H₂₇-C(O)-S-CH₂-CH₂-Si(-O-CH₂-CH₂-)₃N,
C₁₃H₂₇-C(O)-S-CH₂-CH₂-CH₂-Si(-O-CH₂-CH₂-)₃N,
C₁₃H₂₇-C(O)-S-CH₂-CH(CH₃)-CH₂-Si(-O-CH₂-CH₂-)₃N,
C₁₃H₂₇-C(O)-S-CH(CH₃)-CH₂-CH₂-Si(-O-CH₂-CH₂-)₃N,

C₁₅H₃₁-C(O)-S-CH₂-Si(-O-CH₂-CH₂-)₃N,
C₁₅H₃₁-C(O)-S-CH₂-CH₂-Si(-O-CH₂-CH₂-)₃N,
C₁₅H₃₁-C(O)-S-CH₂-CH₂-CH₂-Si(-O-CH₂-CH₂-)₃N,
C₁₅H₃₁-C(O)-S-CH₂-CH(CH₃)-CH₂-Si(-O-CH₂-CH₂-)₃N,
C₁₅H₃₁-C(O)-S-CH(CH₃)-CH₂-CH₂-Si(-O-CH₂-CH₂-)₃N,

C₁₇H₃₅-C(O)-S-CH₂-Si(-O-CH₂-CH₂-)₃N,
C₁₇H₃₅-C(O)-S-CH₂-CH₂-Si(-O-CH₂-CH₂-)₃N,
C₁₇H₃₅-C(O)-S-CH₂-CH₂-CH₂-Si(-O-CH₂-CH₂-)₃N,
C₁₇H₃₅-C(O)-S-CH₂-CH(CH₃)-CH₂-Si(-O-CH₂-CH₂-)₃N,
C₁₇H₃₅-C(O)-S-CH(CH₃)-CH₂-CH₂-Si(-O-CH₂-CH₂-)₃N,

Phenyl-C(O)-S-CH₂-CH₂-CH₂-Si(-O-CH₂-CH₂-)₃N,
Phenyl-C(O)-S-CH₂-CH(CH₃)-CH₂-Si(-O-CH₂-CH₂-)₃N,
Phenyl-C(O)-S-CH(CH₃)-CH₂-CH₂-Si(-O-CH₂-CH₂-)₃N,

C₅H₁₁-C(O)-S-CH₂-Si(-O-CH(CH₃)-CH₂-)₃N,
C₅H₁₁-C(O)-S-CH₂-CH₂-Si(-O-CH(CH₃)-CH₂-)₃N,
C₅H₁₁-C(O)-S-CH₂-CH₂-CH₂-Si(-O-CH (CH₃)-CH₂-)₃N,
C₅H₁₁-C(O)-S-CH₂-CH(CH₃)-CH₂-Si(-O-CH(CH₃)-CH₂-)₃N,
C₅H₁₁-C(O)-S-CH(CH₃)-CH₂-CH₂-Si(-O-CH(CH₃)-CH₂-)₃N,

C₇H₁₅-C(O)-S-CH₂-Si(-O-CH(CH₃)-CH₂-)₃N,
C₇H₁₅-C(O)-S-CH₂-CH₂-Si(-O-CH(CH₃)-CH₂-)₃N,
C₇H₁₅-C(O)-S-CH₂-CH₂-CH₂-Si(-O-CH(CH₃)-CH₂-)₃N,
C₇H₁₅-C(O)-S-CH₂-CH(CH₃)-CH₂-Si(-O-CH(CH₃)-CH₂-)₃N,
C₇H₁₅-C(O)-S-CH (CH₃)-CH₂-CH₂-Si(-O-CH(CH₃)-CH₂-)₃N,

C₉H₁₉-C(O)-S-CH₂-Si(-O-CH(CH₃)-CH₂-)₃N,
C₉H₁₉-C(O)-S-CH₂-CH₂-Si(-O-CH(CH₃)-CH₂-)₃N,
C₉H₁₉-C(O)-S-CH₂-CH₂-CH₂-Si(-O-CH(CH₃)-CH₂-)₃N,
C₉H₁₉-C(O)-S-CH₂-CH(CH₃)-CH₂-Si(-O-CH(CH₃)-CH₂-)₃N,
C₉H₁₉-C(O)-S-CH (CH₃)-CH₂-CH₂-Si(-O-CH(CH₃)-CH₂-)₃N,

C₁₁H₂₃-C(O)-S-CH₂-Si(-O-CH(CH₃)-CH₂-)₃N,
C₁₁H₂₃-C(O)-S-CH₂-CH₂-Si(-O-CH(CH₃)-CH₂-)₃N,
C₁₁H₂₃-C(O)-S-CH₂-CH₂-CH₂-Si(-O-CH(CH₃)-CH₂-)₃N,
C₁₁H₂₃-C(O)-S-CH₂-CH (CH₃)-CH₂-Si(-O-CH (CH₃)-CH₂-)₃N,
C₁₁H₂₃-C(O)-S-CH(CH₃)-CH₂-CH₂-Si(-O-CH(CH₃)-CH₂-)₃N,

C₁₃H₂₇-C(O)-S-CH₂-Si(-O-CH(CH₃)-CH₂-)₃N,
C₁₃H₂₇-C(O)-S-CH₂-CH₂-Si(-O-CH (CH₃)-CH₂-)₃N,
C₁₃H₂₇-C(O)-S-CH₂-CH₂-CH₂-Si(-O-CH(CH₃)-CH₂-)₃N,
C₁₃H₂₇-C(O)-S-CH₂-CH(CH₃)-CH₂-Si(-O-CH(CH₃)-CH₂-)₃N,
C₁₃H₂₇-C(O)-S-CH(CH₃)-CH₂-CH₂-Si(-O-CH(CH₃)-CH₂-)₃N,

C₁₅H₃₁-C(O)-S-CH₂-Si(-O-CH(CH₃)-CH₂-)₃N,
C₁₅H₃₁-C(O)-S-CH₂-CH₂-Si(-O-CH(CH₃)-CH₂-)₃N,
C₁₅H₃₁-C(O)-S-CH₂-CH₂-CH₂-Si(-O-CH(CH₃)-CH₂-)₃N,
C₁₅H₃₁-C(O)-S-CH₂-CH(CH₃)-CH₂-Si(-O-CH(CH₃)-CH₂-)₃N,
C₁₅H₃₁-C(O)-S-CH(CH₃)-CH₂-CH₂-Si(-O-CH(CH₃)-CH₂-)₃N,

C₁₇H₃₅-C(O)-S-CH₂-Si(-O-CH(CH₃)-CH₂-)₃N,
C₁₇H₃₅-C(O)-S-CH₂-CH₂-Si(-O-CH(CH₃)-CH₂-)₃N,
C₁₇H₃₅-C(O)-S-CH₂-CH₂-CH₂-Si(-O-CH(CH₃)-CH₂-)₃N,
C₁₇H₃₅-C(O)-S-CH₂-CH(CH₃)-CH₂-Si(-O-CH(CH₃)-CH₂-)₃N,
C₁₇H₃₅-C(O)-S-CH(CH₃)-CH₂-CH₂-Si(-O-CH(CH₃)-CH₂-)₃N,

Phenyl-C(O)-S-CH₂-CH₂-CH₂-Si(-O-CH(CH₃)-CH₂-)₃N,
Phenyl-C(O)-S-CH₂-CH(CH₃)-CH₂-Si(-O-CH(CH₃)-CH₂-)₃N oder
Phenyl-C(O)-S-CH(CH₃)-CH₂-CH₂-Si(-O-CH(CH₃)-CH₂-)₃N.

Organosiliciumverbindungen der allgemeinen Formel (I) können sein:
Me₃Si-S-CH₂-Si(-O-CH₂-CH₂-)₃N,
Me₃Si-S-CH₂-CH₂-Si(-O-CH₂-CH₂-)₃N,
Me₃Si-S-CH₂-CH₂-CH₂-Si(-O-CH₂-CH₂-)₃N,
Me₃Si-S-CH₂-CH(CH₃)-CH₂-Si(-O-CH₂-CH₂-)₃N,
Me₃Si-S-CH(CH₃)-CH₂-CH₂-Si(-O-CH₂-CH₂-)₃N,

Me₂Si-[S-CH₂-Si(-O-CH₂-CH₂-)₃N]₂,
Me₂Si-[S-CH₂-CH₂-Si(-O-CH₂-CH₂-)₃N]₂,
Me₂Si-[S-CH₂-CH₂-CH₂-Si(-O-CH₂-CH₂-)₃N]₂,
Me₂Si-[S-CH₂-CH(CH₃)-CH₂-Si(-O-CH₂-CH₂-)₃N]₂,
Me₂Si-[S-CH(CH₃) -CH₂-CH₂-Si(-O-CH₂-CH₂-)₃N]₂,

MeSi-[S-CH₂-Si(-O-CH₂-CH₂-)₃N]₃,
MeSi-[S-CH₂-CH₂-Si(-O-CH₂-CH₂-)₃N]₃,
MeSi-[S-CH₂-CH₂-CH₂-Si(-O-CH₂-CH₂-)₃N]₃,
MeSi-[S-CH₂-CH(CH₃)-CH₂-Si(-O-CH₂-CH₂-)₃N]₃,
MeSi-[S-CH(CH₃)-CH₂-CH₂-Si(-O-CH₂-CH₂-)₃N]₃,

C₃H₇Si-[S-CH₂-Si(-O-CH₂-CH₂-)₃N]₃,
C₃H₇Si-[S-CH₂-CH₂-Si(-O-CH₂-CH₂-)₃N]₃,
C₃H₇Si-[S-CH₂-CH₂-CH₂-Si(-O-CH₂-CH₂-)₃N]₃,
C₃H₇Si-[S-CH₂-CH(CH₃)-CH₂-Si(-O-CH₂-CH₂-)₃N]₃,
C₃H₇Si-[S-CH(CH₃)-CH₂-CH₂-Si(-O-CH₂-CH₂-)₃N]₃,

C₄H₉Si-[S-CH₂-Si(-O-CH₂-CH₂-)₃N]₃,
C₄H₉Si-[S-CH₂-CH₂-Si(-O-CH₂-CH₂-)₃N]₃,
C₄H₉Si-[S-CH₂-CH₂-CH₂-Si(-O-CH₂-CH₂-)₃N]₃,
C₄H₉Si-[S-CH₂-CH(CH₃)-CH₂-Si(-O-CH₂-CH₂-)₃N]₃,
C₄H₉Si-[S-CH(CH₃)-CH₂-CH₂-Si(-O-CH₂-CH₂-)₃N]₃,

C₈H₁₇Si-[S-CH₂-Si(-O-CH₂-CH₂-)₃N]₃,
C₈H₁₇Si-[S-CH₂-CH₂-Si(-O-CH₂-CH₂-)₃N]₃,
C₈H₁₇Si-[S-CH₂-CH₂-CH₂-Si(-O-CH₂-CH₂-)₃N]₃,
C₈H₁₇Si-[S-CH₂-CH(CH₃)-CH₂-Si(-O-CH₂-CH₂-)₃N]₃,
C₈H₁₇Si-[S-CH(CH₃)-CH₂-CH₂-Si(-O-CH₂-CH₂-)₃N]₃,

C₁₆H₃₃Si-[S-CH₂-Si(-O-CH₂-CH₂-)₃N]₃,
C₁₆H₃₃Si-[S-CH₂-CH₂-Si(-O-CH₂-CH₂-)₃N]₃,
C₁₆H₃₃Si-[S-CH₂-CH₂-CH₂-Si(-O-CH₂-CH₂-)₃N]₃,
C₁₆H₃₃Si-[S-CH₂-CH(CH₃)-CH₂-Si(-O-CH₂-CH₂-)₃N]₃,
C₁₆H₃₃Si-[S-CH(CH₃)-CH₂-CH₂-Si(-O-CH₂-CH₂-)₃N]₃,

Me₃Si-S-CH₂-Si(-O-CH(CH₃)-CH₂-)₃N,
Me₃Si-S-CH₂-CH₂-Si(-O-CH(CH₃)-CH₂-)₃N,
Me₃Si-S-CH₂-CH₂-CH₂-Si(-O-CH(CH₃)-CH₂-)₃N,
Me₃Si-S-CH₂-CH(CH₃)-CH₂-Si(-O-CH(CH₃)-CH₂-)₃N,
Me₃Si-S-CH(CH₃)-CH₂-CH₂-Si(-O-CH(CH₃)-CH₂-)₃N,

Me₂Si-[S-CH₂-Si(-O-CH(CH₃)-CH₂-)₃N]₂,
Me₂Si-[S-CH₂-CH₂-Si(-O-CH(CH₃)-CH₂-)₃N]₂,
Me₂Si-[S-CH₂-CH₂-CH₂-Si(-O-CH(CH₃)-CH₂-)₃N]₂,
Me₂Si-[S-CH₂-CH(CH₃)-CH₂-Si(-O-CH(CH₃)-CH₂-)₃N]₂,
Me₂Si-[S-CH(CH₃)-CH₂-CH₂-Si(-O-CH(CH₃)-CH₂-)₃N]₂,

MeSi-[S-CH₂-Si(-O-CH(CH₃)-CH₂-)₃N]₃,
MeSi-[S-CH₂-CH₂-Si(-O-CH(CH₃)-CH₂-)₃N]₃,
MeSi-[S-CH₂-CH₂-CH₂-Si(-O-CH (CH₃)-CH₂-)₃N]₃,
MeSi-[S-CH₂-CH(CH₃)-CH₂-Si(-O-CH(CH₃)-CH₂-)₃N]₃,
MeSi-[S-CH(CH₃)-CH₂-CH₂-Si(-O-CH(CH₃)-CH₂-)₃N]₃,

C₃H₇Si-[S-CH₂-Si(-O-CH(CH₃)-CH₂-)₃N]₃,
C₃H₇Si-[S-CH₂-CH₂-Si(-O-CH(CH₃)-CH₂-)₃N]₃,
C₃H₇Si-[S-CH₂-CH₂-CH₂-Si(-O-CH(CH₃)-CH₂-)₃N]₃,
C₃H₇Si-[S-CH₂-CH(CH₃)-CH₂-Si(-O-CH(CH₃)-CH₂-)₃N]₃,
C₃H₇Si-[S-CH(CH₃)-CH₂-CH₂-Si(-O-CH(CH₃)-CH₂-)₃N]₃,

C₄H₉Si-[S-CH₂-Si(-O-CH(CH₃)-CH₂-)₃N]₃,
C₄H₉Si-[S-CH₂-CH₂-Si(-O-CH(CH₃)-CH₂-)₃N]₃,
C₄H₉Si-[S-CH₂-CH₂-CH₂-S₁(-O-CH(CH₃)-CH₂-)₃N]₃,
C₄H₉Si-[S-CH₂-CH(CH₃)-CH₂-Si(-O-CH(CH₃)-CH₂-)₃N]₃,
C₄H₉Si-[S-CH(CH₃)-CH₂-CH₂-Si(-O-CH(CH₃)-CH₂-)₃N]₃,

C₈H₁₇Si-[S-CH₂-Si(-O-CH(CH₃)-CH₂-)₃N]₃,
C₈H₁₇Si-[S-CH₂-CH₂-Si (-O-CH (CH₃)-CH₂-)₃N]₃,
C₈H₁₇Si-[S-CH₂-CH₂-CH₂-Si(-O-CH(CH₃)-CH₂-)₃N]₃,
C₈H₁₇Si-[S-CH₂-CH(CH₃)-CH₂-Si(-O-CH(CH₃)-CH₂-)₃N]₃,
C₈H₁₇Si-[S-CH(CH₃)-CH₂-CH₂-Si(-O-CH(CH₃)-CH₂-)₃N]₃,

C₁₆H₃₃Si-[S-CH₂-Si(-O-CH (CH₃)-CH₂-)₃N]₃,
C₁₆H₃₃Si-[S-CH₂-CH₂-Si(-O-CH(CH₃)-CH₂-)₃N]₃,
C₁₆H₃₃Si-[S-CH₂-CH₂-CH₂-Si(-O-CH(CH₃)-CH₂-)₃N]₃,
C₁₆H₃₃Si-[S-CH₂-CH(CH₃)-CH₂-Si(-O-CH(CH₃)-CH₂-)₃N]₃ oder
C₁₆H₃₃Si-[S-CH(CH₃)-CH₂-CH₂-Si(-O-CH(CH₃)-CH₂-)₃N]₃.

Organosiliciumverbindung der allgemeinen Formel (I), mit Q gleich (X⁸)₂N-C(=O)- und M' = S oder O können sein:
C₃H₇NH-C(M')-S-CH₂-Si(-O-CH₂-CH₂-)₃N,
C₃H₇NH-C(M')-S-CH₂-CH₂-Si(-O-CH₂-CH₂-)₃N,
C₃H₇NH-C(M')-S-CH₂-CH₂-CH₂-Si(-O-CH₂-CH₂-)₃N,
C₃H₇NH-C(M')-S-CH (CH₃)-CH₂-CH₂-Si(-O-CH₂-CH₂-)₃N,
C₃H₇NH-C(M')-S-CH₂-CH(CH₃)-CH₂-Si(-O-CH₂-CH₂-)₃N,

C₃H₅NH-C(M')-S-CH₂-Si(-O-CH₂-CH₂-)₃N,
C₃H₅NH-C(M')-S-CH₂-CH₂-Si(-O-CH₂-CH₂-)₃N,
C₃H₅NH-C(M')-S-CH₂-CH₂-CH₂-Si(-O-CH₂-CH₂-)₃N,
C₃H₅NH-C(M')-S-CH (CH₃)-CH₂-CH₂-Si(-O-CH₂-CH₂-)₃N,
C₃H₅NH-C(M')-S-CH₂-CH(CH₃)-CH₂-Si(-O-CH₂-CH₂-)₃N,

C₄H₉NH-C(M')-S-CH₂-Si(-O-CH₂-CH₂-)₃N,
C₄H₉NH-C(M')-S-CH₂-CH₂-Si(-O-CH₂-CH₂-)₃N,
C₄H₉NH-C(M')-S-CH₂-CH₂-CH₂-Si(-O-CH₂-CH₂-)₃N,
C₄H₉NH-C(M')-S-CH(CH₃)-CH₂-CH₂-Si(-O-CH₂-CH₂-)₃N,
C₄H₉NH-C (M')-S-CH₂-CH(CH₃)-CH₂-Si(-O-CH₂-CH₂-)₃N,

C₇H₁₅NH-C(M')-S-CH₂-Si(-O-CH₂-CH₂-)₃N,
C₇H₁₅NH-C(M')-S-CH₂-CH₂-Si(-O-CH₂-CH₂-)₃N,
C₇H₁₅NH-C(M')-S-CH₂-CH₂-CH₂-Si(-O-CH₂-CH₂-)₃N,
C₇H₁₅NH-C(M')-S-CH₂-CH(CH₃)-CH₂-Si(-O-CH₂-CH₂-)₃N,
C₇H₁₅NH-C(M')-S-CH(CH₃)-CH₂-CH₂-Si(-O-CH₂-CH₂-)₃N,

C₉H₁₉NH-C (M')-S-CH₂-Si(-O-CH₂-CH₂-)₃N,
C₉H₁₉NH-C(M')-S-CH₂-CH₂-Si(-O-CH₂-CH₂-)₃N,
C₉H₁₉NH-C (M')-S-CH₂-CH₂-CH₂-Si(-O-CH₂-CH₂-)₃N,
C₉H₁₉NH-C(M')-S-CH₂-CH(CH₃)-CH₂-Si(-O-CH₂-CH₂-)₃N,
C₉H₁₉NH-C(M')-S-CH(CH₃)-CH₂-CH₂-Si(-O-CH₂-CH₂-)₃N,

C₁₁H₂₃NH-C(M')-S-CH₂-Si(-O-CH₂-CH₂-)₃N,
C₁₁H₂₃NH-C(M')-S-CH₂-CH₂-Si(-O-CH₂-CH₂-)₃N,
C₁₁H₂₃NH-C(M')-S-CH₂-CH₂-CH₂-Si(-O-CH₂-CH₂-)₃N,
C₁₁H₂₃NH-C(M')-S-CH₂-CH(CH₃)-CH₂-Si(-O-CH₂-CH₂-)₃N,
C₁₁H₂₃NH-C(M')-S-CH(CH₃)-CH₂-CH₂-Si(-O-CH₂-CH₂-)₃N,

C₁₃H₂₇NH-C(M')-S-CH₂-Si(-O-CH₂-CH₂-)₃N,
C₁₃H₂₇NH-C(M')-S-CH₂-CH₂-Si(-O-CH₂-CH₂-)₃N,
C₁₃H₂₇NH-C(M')-S-CH₂-CH₂-CH₂-Si(-O-CH₂-CH₂-)₃N,
C₁₃H₂₇NH-C(M')-S-CH₂-CH(CH₃)-CH₂-Si(-O-CH₂-CH₂-)₃N,
C₁₃H₂₇NH-C(M')-S-CH(CH₃)-CH₂-CH₂-Si(-O-CH₂-CH₂-)₃N,

C₁₅H₃₁NH-C(M')-S-CH₂-Si(-O-CH₂-CH₂-)₃N,
C₁₅H₃₁NH-C(M')-S-CH₂-CH₂-Si(-O-CH₂-CH₂-)₃N,
C₁₅H₃₁NH-C(M')-S-CH₂-CH₂-CH₂-Si(-O-CH₂-CH₂-)₃N,
C₁₅H₃₁NH-C(M')-S-CH₂-CH(CH₃)-CH₂-Si(-O-CH₂-CH₂-)₃N,
C₁₅H₃₁NH-C(M')-S-CH(CH₃)-CH₂-CH₂-Si(-O-CH₂-CH₂-)₃N,

PhenylNH-C(M')-S-CH₂-CH₂-CH₂-Si(-O-CH₂-CH₂-)₃N,
PhenylNH-C(M')-S-CH₂-CH (CH₃)-CH₂-Si(-O-CH₂-CH₂-)₃N,
PhenylNH-C(M')-S-CH(CH₃)-CH₂-CH₂-Si(-O-CH₂-CH₂-) ₃N,

C₄H₉NH-C(M')-S-CH₂-Si(-O-CH(CH₃)-CH₂-)₃N,
C₄H₉NH-C(M')-S-CH₂-CH₂-Si(-O-CH(CH₃)-CH₂-)₃N,
C₄H₉NH-C(M')-S-CH₂-CH₂-CH₂-Si(-O-CH(CH₃)-CH₂-)₃N,
C₄H₉NH-C(M')-S-CH₂-CH(CH₃)-CH₂-Si(-O-CH(CH₃)-CH₂-)₃N,
C₄H₉NH-C(M')-S-CH(CH₃)-CH₂-CH₂-Si(-O-CH(CH₃)-CH₂-)₃N,

C₇H₁₅NH-C(M')-S-CH₂-Si(-O-CH(CH₃)-CH₂-)₃N,
C₇H₁₅NH-C(M')-S-CH₂-CH₂-Si(-O-CH(CH₃)-CH₂-)₃N,
C₇H₁₅NH-C(M')-S-CH₂-CH₂-CH₂-Si(-O-CH(CH₃)-CH₂-)₃N,
C₇H₁₅NH-C(M')-S-CH₂-CH(CH₃)-CH₂-Si(-O-CH(CH₃)-CH₂-)₃N,
C₇H₁₅NH-C(M')-S-CH (CH₃)-CH₂-CH₂-Si(-O-CH(CH₃)-CH₂-)₃N,

C₉H₁₉NH-C(M')-S-CH₂-Si(-O-CH(CH₃)-CH₂-)₃N,
C₉H₁₉NH-C(M')-S-CH₂-CH₂-Si(-O-CH(CH₃)-CH₂-)₃N,
C₉H₁₉NH-C(M')-S-CH₂-CH₂-CH₂-Si(-O-CH(CH₃)-CH₂-)₃N,
C₉H₁₉NH-C(M')-S-CH₂-CH(CH₃)-CH₂-Si(-O-CH(CH₃)-CH₂-)₃N,
C₉H₁₉NH-C(M')-S-CH (CH₃)-CH₂-CH₂-Si(-O-CH(CH₃)-CH₂-)₃N,

C₁₁H₂₃NH-C(M')-S-CH₂-Si(-O-CH(CH₃)-CH₂-)₃N,
C₁₁H₂₃NH-C(M')-S-CH₂-CH₂-Si(-O-CH(CH₃)-CH₂-)₃N,
C₁₁H₂₃NH-C(M')-S-CH₂-CH₂-CH₂-Si(-O-CH(CH₃)-CH₂-)₃N,
C₁₁H₂₃NH-C(M')-S-CH₂-CH(CH₃)-CH₂-Si(-O-CH(CH₃)-CH₂-)₃N,
C₁₁H₂₃NH-C(M')-S-CH (CH₃)-CH₂-CH₂-Si(-O-CH(CH₃)-CH₂-)₃N,

C₁₃H₂₇NH-C(M')-S-CH₂-Si(-O-CH(CH₃)-CH₂-)₃N,
C₁₃H₂₇NH-C(M')-S-CH₂-CH₂-Si(-O-CH(CH₃)-CH₂-)₃N,
C1₃H₂₇NH-C(M')-S-CH₂-CH₂-CH₂-Si(-O-CH(CH₃)-CH₂-)₃N,
C₁₃H₂₇NH-C(M')-S-CH₂-CH(CH₃)-CH₂-Si(-O-CH(CH₃)-CH₂-)₃N,
C₁₃H₂₇NH-C(M')-S-CH(CH₃)-CH₂-CH₂-Si(-O-CH(CH₃)-CH₂-)₃N,

C₁₅H₃₁NH-C(M')-S-CH₂-Si(-O-CH(CH₃)-CH₂-)₃N,
C₁₅H₃₁NH-C(M')-S-CH₂-CH₂-Si(-O-CH(CH₃)-CH₂-)₃N,
C₁₅H₃₁NH-C(M')-S-CH₂-CH₂-CH₂-Si(-O-CH(CH₃)-CH₂-)₃N,
C₁₅H₃₁NH-C(M')-S-CH₂-CH(CH₃)-CH₂-Si(-O-CH(CH₃)-CH₂-)₃N,
C₁₅H₃₁NH-C(M')-S-CH(CH₃)-CH₂-CH₂-Si(-O-CH(CH₃)-CH₂-)₃N,

PhenylNH-C(M')-S-CH₂-CH₂-CH₂-Si(-O-CH(CH₃)-CH₂-)₃N,
PhenylNH-C(M')-S-CH₂-CH(CH₃)-CH₂-Si(-O-CH(CH₃)-CH₂-)₃N oder
PhenylNH-C(M')-S-CH(CH₃)-CH₂-CH₂-Si(-O-CH(CH₃)-CH₂-)₃N.

Organosiliciumverbindung der allgemeinen Formel (I), mit Q gleich Y-C(=M')-Z-C(C=M')- und M' = S oder O können sein:
N(-CH₂-CH₂-O-)₃Si-CH₂-S-C(M')-NH-(ortho)C₆H₄-NH-C(M')-S-CH₂-Si(-O-CH(CH₃)-CH₂-)₃N,
N(-CH₂-CH₂-O-)₃Si-CH₂-S-C(M')-NH-(meta)C₆H₄-NH-C(M')-S-CH₂-Si(-O-CH(CH₃)-CH₂-)₃N,
N(-CH₂-CH₂-O-)₃Si-CH₂-S-C(M')-NH-(para)C₆H₄-NH-C(M')-S-CH₂-Si(-O-CH(CH₃)-CH₂-)₃N,
N(-CH₂-CH₂-O-)₃Si-(CH₂)₂-S-C(M')-NH-(ortho)C₆H₄-NH-C(M')-S-(CH₂)₂-Si(-O-CH(CH₃)-CH₂-)₃N,
N(-CH₂-CH₂-O-)₃Si-(CH₂)₂-S-C(M')-NH-(meta)C₆H₄-NH-C(M')-S-(CH₂)₂-Si(-O-CH(CH₃)-CH₂-)₃N,
N(-CH₂-CH₂-O-)₃Si-(CH₂)₂-S-C(M')-NH-(para)C₆H₄-NH-C(M')-S-(CH₂)₂-Si(-O-CH(CH₃)-CH₂-)₃N,
N(-CH₂-CH₂-O-)₃Si-(CH₂)₃-S-C(M')-NH-(ortho)C₆H₄-NH-C(M')-S-(CH₂)₃-Si(-O-CH(CH₃)-CH₂-)₃N,
N(-CH₂-CH₂-O-)₃Si-(CH₂)₃-S-C(M')-NH-(meta)C₆H₄-NH-C(M')-S-(CH₂)₃-Si(-O-CH(CH₃)-CH₂-)₃N,
N(-CH₂-CH₂-O-)₃Si-(CH₂)₃-S-C(M')-NH-(para)C₆H₄-NH-C(M')-S-(CH₂)₃-Si(-O-CH(CH₃)-CH₂-)₃N, 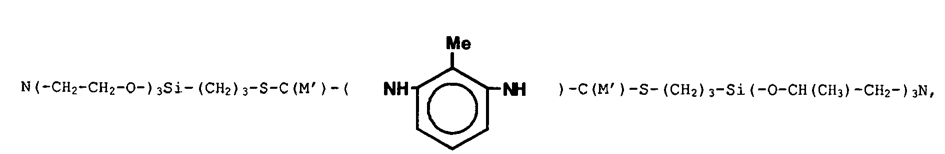 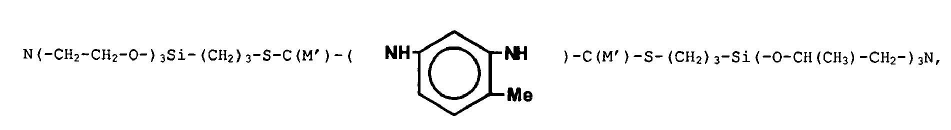 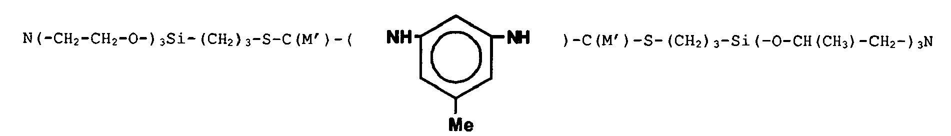 oder

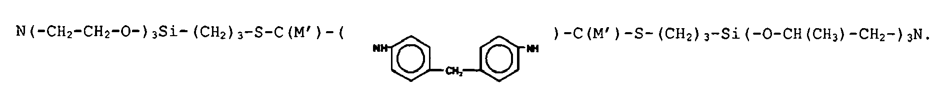

Organosiliciumverbindungen der allgemeinen Formel (I) können außerdem sein:
N(CH₂-CH₂-O)₃Si-CH₂-S-C(O)-C₂H₄-C(O)-S-CH₂-Si(O-CH₂-CH₂)₃N,
N(CH₂CH₂O)₃Si-(CH₂)₂-S-C(O)-C₂H₄-C(O)-S-(CH₂)₂-Si(OCH₂CH₂)₃N,
N(CH₂CH₂O)₃Si-(CH₂)₃-S-C(O)-C₂H₄-C(O)-S-(CH₂)₃-Si(OCH₂CH₂)₃N,

N(CH₂-CH₂-O)₃Si-CH₂-S-C(O)-C₄H₈-C(O)-S-CH₂-Si(O-CH₂-CH₂)₃N,
N(CH₂CH₂O)₃Si-(CH₂)₂-S-C(O)-C₄H₈-C(O)-S-(CH₂)₂-Si(OCH₂CH₂)₃N,
N(CH₂CH₂O)₃Si-(CH₂)₃-S-C(O)-C₄H₈-C(O)-S-(CH₂)₃-Si(OCH₂CH₂)₃N,

N(CH₂-CH₂-O)₃Si-CH₂-S-C(O)-C₆H₁₂-C(O)-S-CH₂-Si(O-CH₂-CH₂)₃N,
N(CH₂CH₂O)₃Si-(CH₂)₂-S-C(O)-C₆H₁₂-C(O)-S-(CH₂)₂-Si(OCH₂CH₂)₃N,
N(CH₂CH₂O)₃Si-(CH₂)₃-S-C(O)-C₆H₁₂-C(O)-S-(CH₂)₃-Si(OCH₂CH₂)₃N,

N(CH₂-CH₂-O)₃Si-CH₂-S-C(O)-C₈H₁₆-C(O)-S-CH₂-Si(O-CH₂-CH₂)₃N,
N(CH₂CH₂O)₃Si-(CH₂)₂-S-C(O)-C₈H₁₆-C(O)-S-(CH₂)₂-Si(OCH₂CH₂)₃N,
N(CH₂CH₂O)₃Si-(CH₂)₃-S-C(O)-C₈H₁₆-C(O)-S-(CH₂)₃-Si(OCH₂CH₂)₃N,

N(CH₂-CH₂-O)₃Si-CH₂-S-C(O)-C₁₀H₂₀-C(O)-S-CH₂-Si(O-CH₂-CH₂)₃N,
N(CH₂CH₂O)₃Si(CH₂)₂-S-C(O)-C₁₀H₂₀-C(O)-S-(CH₂)₂Si(OCH₂CH₂)₃N,
N(CH₂CH₂O)₃Si(CH₂)₃-S-C(O)-C₁₀H₂₀-C(O)-S-(CH₂)₃Si(OCH₂CH₂)₃N,

N(CH₂-CH₂-O)₃Si-CH₂-S-C(O)-C₆H₄-C(O)-S-CH₂-Si(O-CH₂-CH₂)₃N,
N(CH₂CH₂O)₃Si(CH₂)₂-S-C(O)-C₆H₄-C(O)-S-(CH₂)₂Si(OCH₂CH₂)₃N,
N(CH₂CH₂O)₃Si(CH₂)₃-S-C(O)-C₆H₄-C(O)-S-(CH₂)₃Si(OCH₂CH₂)₃N,

N(CH₂CH(CH₃)O)₃SiCH₂-S-C(O)-C₂H₄-C(O)-S-CH₂Si(OCH(CH₃)CH₂)₃N,
N(CH₂CH(CH₃)O)₃Si(CH₂)₂-S-C(O)-C₂H₄-C(O)-S-(CH₂)₂Si(OCH(CH₃)CH₂)₃N,
N(CH₂CH(CH₃)O)₃Si(CH₂)₃-S-C(O)-C₂H₄-C(O)-S-(CH₂)₃Si(OCH(CH₃)CH₂)₃N,

N(CH₂CH(CH₃)O)₃SiCH₂-S-C(O)-C₄H₈-C(O)-S-CH₂Si(OCH(CH₃)CH₂)₃N,
N(CH₂CH(CH₃)O)₃Si(CH₂)₂-S-C(O)-C₄H₈-C(O)-S-(CH₂)₂Si(OCH(CH₃)CH₂)₃N,
N(CH₂CH(CH₃)O)₃Si(CH₂)₃-S-C(O)-C₄H₈-C(O)-S-(CH₂)₃Si (OCH(CH₃)CH₂)₃N,

N(CH₂CH(CH₃)O)₃SiCH₂-S-C(O)-C₆H₁₂-C(O)-S-CH₂Si(OCH(CH₃)CH₂)₃N,
N(CH₂CH(CH₃)O)₃Si(CH₂)₂-S-C(O)-C₆H₁₂-C(O)-S-(CH₂)₂Si(OCH(CH₃)CH₂)₃N,
N(CH₂CH(CH₃)O)₃Si(CH₂)₃-S-C(O)-C₆H₁₂-C(O)-S-(CH₂)₃Si(OCH(CH₃)CH₂)₃N,

N(CH₂CH(CH₃)O)₃SiCH₂-S-C(O)-C₈H₁₆-C(O)-S-CH₂Si(OCH(CH₃)CH₂)₃N,
N(CH₂CH(CH₃)O)₃Si(CH₂)₂-S-C(O)-C₈H₁₆-C(O)-S-(CH₂)₂Si(OCH(CH₃)CH₂)₃N,
N(CH₂CH(CH₃)O)₃Si(CH₂)₃-S-C(O)-C₈H₁₆-C(O)-S-(CH₂)₃Si(OCH(CH₃)CH₂)₃N,

N(CH₂CH(CH₃)O)₃SiCH₂-S-C(O)-C₁₀H₂₀-C(O)-S-CH₂Si(OCH(CH₃)CH₂)₃N,
N(CH₂CH(CH₃)O)₃Si(CH₂)₂-S-C(O)-C₁₀H₂₀-C(O)-S-(CH₂)₂Si(OCH(CH₃)CH₂)₃N,
N(CH₂CH(CH₃)O)₃Si(CH₂)₃-S-C(O)-C₁₀H₂₀-C(O)-S-(CH₂)₃Si(OCH(CH₃)CH₂)₃N,

N(CH₂CH(CH₃)O)₃SiCH₂-S-C(O)-C₆H₄-C(O)-S-CH₂Si(OCH(CH₃)CH₂)₃N,
N(CH₂CH(CH₃)O)₃Si(CH₂)₂-S-C(O)-C₆H₄-C(O)-S-(CH₂)₂Si(OCH(CH₃)CH₂)₃N oder
N(CH₂CH(CH₃)O)₃Si(CH₂)₃-S-C(O)-C₆H₄-C(O)-S-(CH₂)₃Si(OCH(CH₃)CH₂)₃N.

Ein weiterer Gegenstand der Erfindung ist ein Verfahren zur Herstellung der erfindungsgemäßen Organosiliciumverbindungen, welches dadurch gekennzeichnet ist, daß man mindestens eine Organosiliciumverbindung der allgemeinen Formel (II)

X¹⁰[S-G-Si (-O-CX¹X²-CX¹X³-)₃N] (II)

wobei G, X¹, X² und X³ die oben angegebenen Bedeutungen haben und X¹⁰ gleich H, Alkalimetall, beispielsweise Li, Na oder K, Erdalkalimetall oder Ammoniumkation, beispielsweise Alkylammoniumkation, Dialkylammoniumkation, Trialkylammoniumkation oder Tetraalkylammoniumkation, ist, mit mindestens einem organischen oder anorganischen Säureanhydrid, einem organischen oder anorganischen Säurehalogenid oder organischen oder anorganischen Ester ausgewählt aus der Gruppe 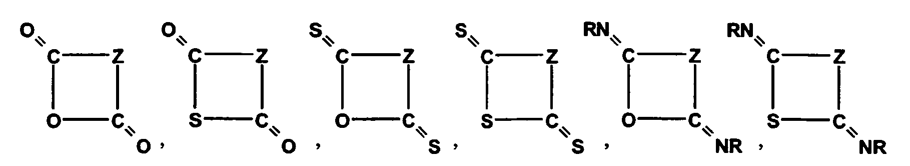 , Y-C(=O)-O-C(=O)-Y, Y-C(=S)-O-C(=S)-Y, Y-C(=NR)-O-C(=NR)-Y, Y-C(=O)-S-C(=O)-Y, Y-C(=S)-S-C(=S)-Y, Y-C(=NR)-S-C(=NR)-Y, Y-S(=O)-O-S(=O)-Y, Y-S(=O)₂-O-S(=O)₂-Y,
X⁸-C(=O)-O-C(=O)-X⁸, X⁸-C(=O)-S-C(=O)-X⁸,
R-C(=S)-O-C(=O)-R, R-C(=S)-S-C(=O)-R,
R-S-C(=O)-O-C(=O)-S-R, R-S-C(=O)-S-C(=O)-S-R,
R-S-C(=S)-O-C(=S)-S-R, R-S-C(=S)-S-C(=S)-S-R,
R-O-C(=O)-O-C(=O)-OR, R-O-C(=O)-S-C(=O)-OR,
R-O-C(=S)-O-C(=S)-OR, R-O-C(=S)-S-C(=S)-OR,
R-S(=O)-O-S(=O)-R, R-S(=O)-S-S(=O)-R,
R-O-S(=O)-O-S(=O)-O-R, R-O-S(=O)-S-S(=O)-O-R,
R-O-S(=S)-O-S(=S)-O-R, R-O-S(=S)-S-S(=S)-O-R,
R-S-S(=O)-O-S(=O)-S-R, R-S-S(=O)-S-S(=O)-S-R,
R-S-S(=S)-O-S(=S)-S-R, R-S-S(=S)-S-S(=S)-S-R,
R-S(=O)₂-O-S(=O)₂-R, R-S(=O)₂-S-S(=O)₂-R,
R-S(=S)₂-O-S(=S)₂-R, R-S(=S)₂-S-S(=S)₂-R,
R-O-S(=O)₂-O-S(=O)₂-O-R, R-O-S(=O)₂-S-S(=O)₂-O-R,
R-O-S(=S)₂-O-S(=S)₂-O-R, R-O-S(=S)₂-S-S(=S)₂-O-R,
R-S-S(=O)₂-O-S(=O)₂-S-R, R-S-S(=O)₂-S-S(=O)₂-S-R,
R-S-S(=S)₂-O-S(=S)₂-S-R, R-S-S(=S)₂-S-S(=S)₂-S-R,
SiX⁴ₛX⁵₂₋ₛ(Y)-S-SiX⁴ₛX⁵₂₋ₛ(Y), SiX⁴₃₋ₜX⁵ₜ-S-SiX⁴₃₋ₜX⁵ₜ, Y₂SiX⁴-S-SiX⁵Y₂, Y₂P(=O)-S-P(=O)Y₂, Y₂P(=S)-S-P(=S)Y₂,
SiX⁴₃₋ₜX⁵ₜ-Halogen, Halogen-C(=O)-Z-C(=O)-Halogen, Halogen-C(=S)-Z-C(=S)-Halogen, Halogen-C(=NR)-Z-C(=NR)-Halogen,
Y-C(=O)-Z-C(=O)-Halogen, Y-C(=S)-Z-C(=S)-Halogen, Y-C(=NR)-Z-C(=NR)-Halogen, Halogen-C(=O)-Halogen, Halogen-C(=S)-Halogen, Halogen-C(=NR)-Halogen, Halogen-S(=O)-Halogen, Halogen-S(=O)₂-Halogen, Y-C(=O)-Halogen, Y-C(=S)-Halogen, Y-C(=NR)-Halogen, Y-S(=O)-Halogen, Y-S(=O)₂-Halogen, (X⁶) (X⁷) P (=S)-Halogen,
(X⁶) (X⁷) P (=O) -Halogen, X⁸-C(=O)-Halogen, R-C (=S) -Halogen,
R-C (=NR) -Halogen, R-S-C (=NR) -Halogen, R-S-C(=O)-Halogen,
R-S-C (=S) -Halogen, (X⁹) ₂N-C (=O) -Halogen, (X⁹) ₂N-C (=S)-Halogen, R-NR-C(=NR)-Halogen, R-O-C(=O)-Halogen, X⁹-O-C (=S) -Halogen, R-O-C(=NR)-Halogen, R-S(=O)-Halogen, R-S(=O)₂-Halogen, R-O-S(=O)₂-Halogen, R-NR-S(=O)₂-Halogen,
R-S-S(=O)₂-Halogen, R-S-S(=O)-Halogen, R-O-S(=O)-Halogen,
R-NR-S(=O)-Halogen, (R-S-)₂P(=O)-Halogen, (R-S-)₂P(=S)-Halogen, (R-NR-)₂P(=S)-Halogen, (R-NR-)₂P(=O)-Halogen,R-(R-S-)P(=O)-Halogen, R-(R-O-)P(=O)-Halogen, R-(R-S-)P(=S)-Halogen, R-(R-O-)P(=S)-Halogen, R-(R-NR-)P(=O)-Halogen, R-(R-NR-)P(=S)-Halogen, (R-NR-)(R-S-)P(=O)-Halogen, (R-O-) (R-NR-)P(=O)-Halogen, (R-O-)(R-S-)P(=O)-Halogen, (R-O-) (R-S-)P(=S)-Halogen, (R-NR-)(R-S-)P(=S)-Halogen, (R-O-) (R-NR-)P(=S)-Halogen, (R-O-) P (=O)(O-R)₂, (R-O-)P (=S) (O-R)₂, (R-S-) P (=O)(O-R)₂, (R-S-) P (=S) (O-R)₂, (R-NR-) P (=O)(O-R)₂,
(R-NR-)P(=S) (O-R)₂, R-P(=O) (O-R)₂, R-P(=S) (O-R)₂,
(R-O-)(Y)P(=O)-Halogen, (R-O-)(Y)P(=S)-Halogen, (R-S-)(Y)P(=O)-Halogen, (R-S-)(Y)P(=S)-Halogen, (R-NR-)(Y)P(=O)-Halogen, (R-NR-)(Y)P(=S)-Halogen, R-(Y)P(=O)-Halogen, R-(Y)P(=S)-Halogen,
P(=O)(Halogen)₃, P(=S)(Halogen)₃, P(NR)(Halogen)₃,
Y-P(=O)(Halogen)₂, Y-P(=S)(Halogen)₂, Y-P(NR)(Halogen)₂,
Y₂P(=O)-Halogen, Y₂P(=S)-Halogen, Y₂P(NR)-Halogen,
SiX⁴₃₋ₜX⁵ₜ-O-R, SiX⁴₂- (O-R) ₂, SiX⁵- (O-R) ₃, R-O-C (=O) -Z-C(=O)-O-R, R-O-C(=S)-Z-C(=S)-O-R, R-O-C(=NR)-Z-C(=NR)-O-R, Halogen-C(=O)-Z-C(=O)-O-R, Halogen-C(=S)-Z-C(=S)-O-R,
Halogen-C(=NR)-Z-C(=NR)-O-R,R-O-C(=O)-Z-C(=O)-O-R, R-O-C(=S)-Z-C(=S)-O-R, R-O-C(=NR)-Z-C(=NR)-O-R, Y-C(=O)-Z-C(=O)-O-R, Y-C(=S)-Z-C(=S)-O-R, Y-C(=NR)-Z-C(=NR)-O-R,
Halogen-C(=O)-O-R, Halogen-C(=S)-O-R, Halogen-C(=NR)-O-R,
Halogen-S(=O)-O-R, Halogen-S(=O)₂-O-R, R-O-C(=O)-O-R, R-O-C(=S)-O-R, R-O-C(=NR)-O-R, R-O-S(=O)-O-R, R-O-S(=O)₂-O-R, Y-C(=O)-O-R, Y-C(=S)-O-R, Y-C(=NR)-O-R, Y-S(=O)-O-R, Y-S(=O)₂-O-R, (X⁶)(X⁷)P(=S)-O-R, (X⁶)(X⁷)P(=O)-O-R, X⁸-C(=O)-O-R, R-C(=S)-O-R, R-C(=NR)-O-R, R-S-C(=NR)-O-R, R-S-C(=O)-O-R,R-S-C(=S)-O-R, (X⁹)₂N-C(=O)-O-R, (X⁹)₂N-C(=S)-O-R, R-NR-C(=NR)-O-R, X⁹-O-C(=S)-O-R, R-S(=O)-O-R, R-S(=O)₂-O-R, R-NR-S(=O)₂-O-R, R-S-S(=O)₂-O-R, R-S-S(=O)-O-R, R-NR-S(=O)-O-R, (R-NR-)₂P(=S)-O-R, (R-NR-)₂P(=O)-O-R,R-(R-S-)P(=O)-O-R, R-(R-S-)P(=S)-O-R, R-(R-NR-)P(=O)-O-R, R-(R-NR-)P(=S)-O-R, (R-NR-)(R-S-)P(=O)-O-R, (R-O-) (R-NR-)P(=O)-O-R, (R-NR-)(R-S-)P(=S)-O-R, (R-S-)P(=O)(O-R)₂, (R-S-)P(=S)(O-R)₂, (R-NR-)P(=O)(O-R)₂, (R-NR-)P(=S)(O-R)₂, R-P(=O)(O-R)₂, R-P(=S)(O-R)₂, (R-S-)(Y)P(=O)-O-R, (R-S-)(Y)P(=S)-O-R, (R-NR-)(Y)P(=O)-O-R,
(R-NR-)(Y)P(=S)-O-R, R-(Y)P(=O)-O-R, R-(Y)P(=S)-O-R,
P(=O)(O-R)₃, P(=S)(O-R)₃,P(NR)(O-R)₃, Y-P(=O)(O-R)₂, Y-P (=S) (O-R)₂, Y-P (NR) (O-R)₂, Y₂P(=O)-O-R, Y₂P(=S)-O-R oder
Y₂P(NR)-O-R, SiX⁴₃₋ₜX⁵ₜ-S-R, SiX⁴₂-(S-R)₂, SiX⁵-(S-R)₃,R-O-C(=O)-Z-C(=O)-S-R, R-O-C(=S)-Z-C(=S)-S-R, R-O-C(=NR)-Z-C(=NR)-S-R, Halogen-C(=O)-Z-C(=O)-S-R, Halogen-C(=S)-Z-C(=S)-S-R, Halogen-C(=NR)-Z-C(=NR)-S-R,
R-S-C(=O)-Z-C(=O)-S-R, R-S-C(=S)-Z-C(=S)-S-R, R-S-C(=NR)-Z-C(=NR)-S-R, Y-C(=O)-Z-C(=O)-S-R, Y-C(=S)-Z-C(=S)-S-R,
Y-C(=NR)-Z-C(=NR)-S-R, Halogen-C(=O)-S-R, Halogen-C(=S)-S-R, Halogen-C(=NR)-S-R, Halogen-S (=O)-S-R, Halogen-S(=O)₂-S-R, R-S-C(=O)-S-R, R-S-C(=S)-S-R, R-S-C(=NR)-S-R,
R-S-S(=O)-S-R, R-S-S(=O)₂-S-R, Y-C(=O)-S-R, Y-C(=S)-S-R,
Y-C(=NR)-S-R, Y-S(=O)-S-R, Y-S(=O)₂-S-R,
(X⁶) (X⁷) P(=S)-S-R, (X⁶) (X⁷) P (=O) -S-R, X⁸-C (=O) -S-R,
R-C (=S)-S-R, R-C (=NR) -S-R, (X⁹)₂N-C(=O)-S-R, (X⁹)₂N-C(=S)-S-R, R-NR-C(=NR)-S-R, X⁹-O-C(=S)-S-R, R-S(=O)-S-R, R-S(=O)₂-S-R, R-NR-S(=O)₂-S-R, R-NR-S(=O)-S-R,
(R-NR-)₂P(=S)-S-R, (R-NR-)₂P(=O)-S-R, R-(R-O-)P(=O)-S-R, R-(R-O-)P(=S)-S-R, R-(R-NR-)P(=O)-S-R, R-(R-NR-)P(=S)-S-R, (R-O-)(R-NR-)P(=O)-S-R, (R-O-)(R-NR-)P(=S)-S-R,
(R-O-)P(=O) (S-R)₂, (R-O-)P(=S)(S-R)₂, (R-S-)P(=O) (S-R)₂,
(R-NR-)P(=O)(S-R)₂, (R-NR-)P(=S)(S-R)₂, R-P(=O)(S-R)₂, R-P (=S) (S-R)₂, (R-O-)(Y)P(=O)-S-R, (R-O-)(Y)P(=S)-S-R,
(R-NR-)(Y)P(=O)-S-R, (R-NR-)(Y)P(=S)-S-R, R-(Y)P(=O)-S-R,
R-(Y)P(=S)-S-R, P(=O)(S-R)₃, P(=S)(S-R)₃, P(NR)(S-R)₃,
Y-P(=O)(S-R)₂, Y-P(=S)(S-R)₂, Y-P(NR)(S-R)₂,
Y₂P(=O)-S-R, Y₂P(=S)-S-R oder Y₂P(NR)-S-R, wobei R, Y, Z, X⁴, X⁵, X⁶, X⁷, X⁸, X⁹ und t die oben angegebenen Bedeutungen haben und s= 1 oder 2 ist,
umsetzt.

Als organische oder anorganische Säurechloride können bevorzugt Carbonsäurechloride, Dicarbonsäurechloride, Dicarbonsäuredichloride, halogenhaltige Phosphorverbindungen, besonders bevorzugt P(=O)Cl₃ oder P(=S)Cl₃, oder halogenhaltige Organosiliciumverbindungen der Form x⁴X⁵X⁴SiCl, X⁴X⁵X⁴SiBr, X⁴X⁵SiCl₂, X⁴X⁵SiBr₂, X⁴SiCl₃ oder X⁴SiBr₃, besonders bevorzugt Me₃SiCl, C₃H₇-SiCl₃, C₄H₉-SiCl₃, C₈H₁₇-SiCl₃ oder C₁₆H₃₃-SiCl₃, eingesetzt werden.

Die Umsetzung kann in Gegenwart einer Hilfsbase in einem geeigneten Lösungsmittel erfolgen.

Als Hilfsbase kann man beispielsweise Amine, bevorzugt dialkylsubstituierte Amine, besonders bevorzugt trialkylsubstituierte Amine, einsetzen.

Als Lösungsmittel kann man nicht-protische Lösungsmittel einsetzen. Als nicht-protische Lösungsmittel kann man Alkane, bevorzugt Pentan, Cyclohexan oder Heptan, Aromaten oder substituierte Aromaten, bevorzugt Benzol, Toluol, Xylol oder Mesitylen, einsetzen.

Beispiele für Organosiliciumverbindungen der Formel (II) können sein:
HS-CH₂-Si(-O-CH₂-CH₂-)₃N,
HS-CH₂-CH₂-Si(-O-CH₂-CH₂-)₃N,
HS-CH₂-CH₂-CH₂-Si(-O-CH₂-CH₂-)₃N,
HS-CH₂-CH(CH₃)-CH₂-Si(-O-CH₂-CH₂-)₃N,
HS-CH₂-Si(-O-CH(CH₃)-CH₂-)₃N,
HS-CH₂-CH₂-Si(-O-CH(CH₃)-CH₂-)₃N,
HS-CH₂-CH₂-CH₂-Si(-O-CH(CH₃)-CH₂-)₃N oder
HS-CH₂-CH(CH₃)-CH₂-Si(-O-CH(CH₃)-CH₂-)₃N.

Die Organosiliciumverbindungen der allgemeinen Formel (II) können hergestellt werden, indem man Verbindungen der allgemeinen Formel (III),

N((CX¹X³-CX¹X³-O)₃Si-G-Sᵤ-G-Si(O-CX¹X²-CX¹X³)₃N (III)

wobei u≥2 ist, mit Alkalimetallen, Erdalkalimetallen oder Hydridverbindungen derselben, mit dem Ziel Verbindungen der allgemeinen Formel Alkali-S-G-Si(O-CX¹X²-CX¹X³)₃N bzw. N(CX¹X³-CX¹X³-O)₃Si-G-S-Erdalkali-S-G-Si(O-CX¹X²-CX¹X³)₃N zu bilden, umsetzt.

Ein weiterer Gegenstand der Erfindung ist ein Verfahren zur Herstellung der erfindungsgemäßen Organosiliciumverbindungen, welches dadurch gekennzeichnet ist, daß man eine Verbindung der allgemeinen Formel (IV),

Q(-SH) (IV)

wobei Q die oben angegebene Bedeutung hat, an eine, mindestens eine Doppelbindung (=) enthaltenden, Organosiliciumverbindung der allgemeinen Formel (V)

CX¹X²=CX²-G¹-Si(O-CX¹X²-CX¹X³)₃N (V)

addiert, wobei X¹, X² und X³ die oben angegebenen Bedeutungen haben und -CX¹X²-CHX²-G¹ oder HCX¹X²-CX²(-)-G¹ gleich G ist.

Die Addition kann radikalisch initiiert oder katalysiert sein. Die Addition kann durch UV-Licht beschleunigt und/oder gesteuert werden.

Bevorzugte Verbindungen der allgemeinen Formel (IV) Q(-SH) können Thiocarbonsäuren der allgemeinen Formel X⁸-C(=O)-SH sein. Bevorzugte Thiocarbonsäuren können Verbindungen X⁸-C(=O)-SH mit X⁸ gleich (C₃-C₂₄)-Alkyl, besonders bevorzugt (C₇-C₂₄)-Alkyl, ganz besonders bevorzugt (C₁₁-C₁₇)-Alkyl, Aralkyl, bevorzugt Tolyl-, oder Aryl, bevorzugt Phenyl-, sein. Bevorzugte Organosiliciumverbindungen der allgemeinen Formel (V) können CH₂=CH-CH₂-Si (O-CX¹X²-CX¹X³)₃N, CH₂=CH-CH₂-CH₂-Si(O-CX¹X²-CX¹X³) ₃N, CH(CH₃)=CH-CH₂-Si(O-CX¹X²-CX¹X³)₃N oder CH₂=CH-Si(O-CX¹X²-CX¹X³)₃N, ganz besonders bevorzugt CH₂=CH-CH₂-Si(O-CH₂-CH₂)₃N, CH₂=CH-CH₂-CH₂-Si(O-CH₂-CH₂)₃N, CH(CH₃)=CH-CH₂-Si(O-CH₂-CH₂)₃N oder CH₂=CH-Si(O-CH₂-CH₂)₃N, sein.

Ein weiterer Gegenstand der Erfindung ist ein Verfahren zur Herstellung der erfindungsgemäßen Organosiliciumverbindungen, welches dadurch gekennzeichnet ist, daß man eine Verbindung der allgemeinen Formel (VI)

Q(-S-X¹⁰) (VI)

wobei Q und X¹⁰ die oben genannten Bedeutungen haben, mit einer Verbindung der allgemeinen Formel (VII),

Halogen-G-Si(O-CX¹X²-CX¹X³)₃N (VII)

wobei G, X¹, X² und X³ die oben genannten Bedeutungen haben, umsetzt.

Bevorzugtes Halogen können Cl, Br und I sein.

Bevorzugt können Verbindungen der allgemeinen Formel (VI) gleich Q-(S-Alkalimetall) und Verbindungen der allgemeinen Formel (VII) Cl-G-Si(O-CH₂-CH₂)₃N sein. Ganz besonders bevorzugt können Verbindungen der allgemeinen Formel (VI) X⁸-C(O)-S-Alkalimetall oder R-C(S)-S-Alkalimetall mit Verbindungen der allgemeinen Formel (VII) Cl-CH₂-Si(O-CH₂-CH₂)₃N,Cl-CH₂-CH₂-Si(O-CH₂-CH₂)₃N, Cl-CH₂-CH₂-CH₂-Si(O-CH₂-CH₂)₃N, Cl-CH₂-CH(CH₃)-CH₂-Si(O-CH₂-CH₂)₃N oder Cl-CH (CH₃)-CH₂-CH₂-Si(O-CH₂-CH₂)₃N umgesetzt werden. Die Herstellung der Verbindung der allgemeinen Formel (VI) Q(-S-X¹⁰) bzw. die Reaktion derselben mit Verbindungen der allgemeinen Formel (VII) Halogen-G-Si(O-CX¹X²-CX¹X³)₃N kann mittels Phasentransferkatalyse durchgeführt werden.

Ein weiterer Gegenstand der Erfindung ist ein Verfahren zur Herstellung der erfindungsgemäßen Organosiliciumverbindungen, welches dadurch gekennzeichnet ist, daß man mindestens ein Silan der allgemeinen Formel VIII - XI,

Q-[S-G-Si(Alkoxy)₃] (VIII)

(Alkoxy)₃Si-G-S-C(=O)-Z-C(=O)-S-G-Si(Alkoxy)₃ (IX)

(Alkoxy)₃Si-G-S-C(=S)-Z-C(=S)-S-G-Si(Alkoxy)₃ (X)

(Alkoxy)₃Si-G-S-C(=NR)-Z-C(=NR)-S-G-Si(Alkoxy)₃ (XI)

in denen G, Q, und Z die oben angegebenen Bedeutungen haben und Alkoxy unabhängig voneinander (C₁-C₂₄)-Alkoxy, bevorzugt Methoxy, Ethoxy oder Propoxy, ist,
mit Verbindungen der allgemeinen Formel XII,

(HO-CX¹X²-CX¹X³-)₃N (XII)

in der X¹, X², und X³ die oben angegebene Bedeutung haben, unter Abspaltung von (Alkoxy)-H umsetzt und (Alkoxy)-H vom Reaktionsgemisch abtrennt.
Die Umsetzung kann katalysiert oder unkatalysiert erfolgen. Das (Alkoxy)-H kann vom Reaktionsgemisch kontinuierlich oder diskontinuierlich abgetrennt werden.

Beispiele für Verbindungen der allgemeinen Formel XII können sein: Triethanolamin, Triisopropanolamin und [HOCH(Phenyl)CH₂]₃N.

Ein niedriger Wassergehalt der verwendeten Verbindungen der Formel XII kann sich günstig auf die Zusammensetzung und die Produkteigenschaften der erfindungsgemäßen Verbindungen auswirken. Bevorzugt können die Verbindungen der Formel XII einen Wassergehalt von kleiner 1 Gew.-%, besonders bevorzugt von kleiner 0,5 Gew.-%, ganz besonders bevorzugt von kleiner 0,3 Gew.-%, außerordentlich bevorzugt von kleiner 0,2 Gew.-%, aufweisen.

Die Umsetzung kann in typischen organischen Lösungsmitteln mit einem Siedepunkt von kleiner 200°C, bevorzugt kleiner 160°C, besonders bevorzugt kleiner 130°C, ganz besonders bevorzugt kleiner 100°C, durchgeführt werden.

Eine Umsetzung in Abwesenheit von organischen Lösungsmitteln kann bevorzugt sein.

Eine der Ausgangsverbindung kann als Schmelze, Suspension oder Lösung vorliegen.

Ein oder mehrere der Reaktionsprodukte kann als Schmelze, Suspension oder Lösung vorliegen.

Die Umsetzung in Abwesenheit von organischen Lösungsmitteln kann wegen der höheren erzielten Ausbeute gegenüber Reaktionen in Lösungsmitteln bevorzugt sein.

Die Umsetzung in Abwesenheit von organischen Lösungsmitteln kann wegen der höheren erzielten Reinheit der erhaltenen Produkte gegenüber Reaktionen in Lösungsmitteln bevorzugt sein.

Die Umsetzung in Abwesenheit von organischen Lösungsmitteln kann wegen der Abwesenheit von Lösungsmittelspuren in den erhaltenen Produkten bevorzugt sein.

Die Umsetzung in Abwesenheit von organischen Lösungsmitteln kann wegen der Minimierung von flüchtigen organischen Verbindungen (volatile organic compounds = VOC) in den erhaltenen Produkten bevorzugt sein.

Die Umsetzung in Abwesenheit von organischen Lösungsmitteln kann wegen des Verzichts auf einen verfahrenstechnischen Trocknungsschritt, zur Entfernung von Lösungsmittelspuren, gegenüber der Umsetzung in organischen Lösungsmitteln bevorzugt sein.

Als Katalysator bei dem erfindungsgemäßen Verfahren können metallfreie oder metallhaltige Katalysatoren eingesetzt werden.

Als metallhaltige Katalysatoren können Metallverbindungen der 3.-7. Gruppe, der 13.-14.Gruppe und/oder der Lanthanidengruppe eingesetzt werden.

Als metallhaltige Katalysatoren können Übergangsmetallverbindungen eingesetzt werden.

Die metallhaltige Katalysatoren können Metallverbindungen, wie beispielsweise Metallchloride, Metalloxide, Metalloxychloride, Metallsulfide, Metallsulfochloride, Metallalkoholate, Metallthiolate, Metalloxyalkoholate, Metallamide, Metallimide oder Übergangsmetallverbindungen mit multiplen gebundenen Liganden, sein.

Beispielsweise können als Metallverbindungen Halogenide, Amide oder Alkoholate der 3. Hauptgruppe (M³⁺= B, Al, Ga, In, Tl : M³⁺(OMe)₃, M³⁺(OEt)₃, M³⁺(OC₃H₇)₃, M³⁺(OC₄H₉)₃),
Halogenide, Oxide, Sulfide, Imide, Alkoholate, Amide, Thiolate und Kombinationen der genannten Substituentenklassen mit multiple gebundenen Liganden an Verbindungen der Lanthaniden-Gruppe (Seltenen Erden, Ordnungszahl 58 bis 71 im Periodensystem der Elemente), Halogenide, Oxide, Sulfide, Imide, Alkoholate, Amide, Thiolate und Kombinationen der genannten Substituentenklassen mit multiple gebundenen Liganden an Verbindungen der 3. Nebengruppe (M³⁺= Sc, Y, La: M³⁺(OMe)₃, M³⁺(OEt)₃, M³⁺(OC₃H₇)₃, M³⁺(OC₄H₉)₃, cpM³⁺(Cl)₂, cp cpM³⁺(OMe)₂, cpM³⁺(OEt)₂, cpM³⁺(NMe₂)₂ mit cp = Cyclopentadienyl),
Halogenide, Sulfide, Amide, Thiolate oder Alkoholate der 4. Hauptgruppe (M⁴⁺=Si, Ge, Sn, Pb: M⁴⁺(OMe)₄, M⁴⁺(OEt)₄, M⁴⁺(OC₃H₇)₄, M⁴⁺(OC₄H₉)₄; M²⁺=Sn, Pb: M²⁺(OMe)₂, M²⁺(OEt)₂, M²⁺(OC₃H₇)₂, M²⁺(OC₄H₉)₂), Zinndilaurat, Zinndiacetat, Sn(OBu)₂,
Halogenide, Oxide, Sulfide, Imide, Alkoholate, Amide, Thiolate und Kombinationen der genannten Substituentenklassen mit multiple gebundenen Liganden an Verbindungen der 4. Nebengruppe (M⁴⁺=Ti,Zr,Hf: M⁴⁺(F)₄, M⁴⁺(Cl)₄, M⁴⁺(Br)₄, M⁴⁺(I)₄, M⁴⁺(OMe)₄, M⁴⁺(OEt)₄, M⁴⁺(OC₃H₇)₄, M⁴⁺(OC₄H₉)₄, cp₂Ti(Cl)₂, cp₂Zr(Cl)₂, cp₂Hf(Cl)₂, cp₂Ti(OMe)₂, cp₂Zr(OMe)₂, cp₂Hf(OMe)₂, cpTi(Cl)₃, cpZr(Cl)₃, cpHf(Cl)₃, cpTi(OMe)₃, cpZr(OMe)₃, cpHf(OMe)₃, M⁴⁺(NMe₂)₄, M⁴⁺(NEt₂)₄, M⁴⁺(NHC₄H₉)₄),
Halogenide, Oxide, Sulfide, Imide, Alkoholate, Amide, Thiolate und Kombinationen der genannten Substituentenklassen mit multiple gebundenen Liganden an Verbindungen der 5. Nebengruppe (M⁵⁺, M⁴⁺ oder M³⁺=V, Nb, Ta : M⁵⁺(OMe)₅, M⁵⁺(OEt)₅, M⁵⁺(OC₃H₇)₅, M⁵⁺(OC₄H₉)₅, M³⁺O(OMe)₃, M³⁺O(OEt)₃, M³⁺O(OC₃H₇)₃, M³⁺O(OC₄H₉)₃, cpV(OMe)₄, cpNb(OMe)₃, cpTa(OMe)₃, cpV(OMe)₂, cpNb(OMe)₃, cpTa(OMe)₃),
Halogenide, Oxide, Sulfide, Imide, Alkoholate, Amide, Thiolate und Kombinationen der genannten Substituentenklassen mit multiple gebundenen Liganden an Verbindungen der 6. Nebengruppe (M⁶⁺, M⁵⁺ oder M⁴⁺=Cr, Mo, W : M⁶⁺(OMe)₆, M⁶⁺(OEt)₆, M⁶⁺(OC₃H₇)₆, M⁶⁺(OC₄H₉)₆, M⁶⁺O(OMe)₄,
M⁶⁺O (OEt)₄, M⁶⁺O(OC₃H₇)₄, M⁶⁺O(OC₄H₉)₄, M⁶⁺O₂(OMe)₂,
M⁶⁺O₂(OEt)₂, M⁶⁺O₂(OC₃H₇)₂, M⁶⁺O₂(OC₄H₉)₂, M⁶⁺O₂(OSiMe₃)₂) oder Halogenide, Oxide, Sulfide, Imide, Alkoholate, Amide, Thiolate und Kombinationen der genannten Substituentenklassen mit multiple gebundenen Liganden an Verbindungen der 7. Nebengruppe (M⁷⁺, M⁶⁺, M⁵⁺ oder M⁴⁺=Mn, Re: M⁷⁺O(OMe)₅, M⁷⁺O(OEt)₅, M⁷⁺O(OC₃H₇)₅,
M⁷⁺O(OC₄H₉)₅, M⁷⁺O₂(OMe)₃, M⁷⁺O₂(DEt)₃, M⁷⁺O₂(OC₃H₇)₃,
M⁷⁺O₂(OC₄H₉)₃, M⁷⁺O₂(OSiMe₃)₃, M⁷⁺O₃(OSiMe₃), M⁷⁺O₃(CH₃)) verwendet werden.

Die Metall- und Übergangsmetallverbindungen können eine freie Koordinationsstelle am Metall besitzen.

Als Katalysatoren können auch Metall- oder Übergangsmetallverbindungen verwendet werden, die durch Wasserzugabe zu hydrolisierbaren Metall- oder Übergangsmetallverbindungen gebildet werden.

Beispielsweise können als metallhaltige Katalysatoren Titanalkoxide eingesetzt werden.

In einer besonderen Ausführungsform können Titanate, wie beispielsweise Tetra-n-butyl-orthotitanat, Tetraethylorthotitanat, Tetra-n-propyl-orthotitanat oder Tetra-iso-propyl-orthotitanat, als Katalysatoren eingesetzt werden.

Als metallfreie Katalysatoren können organische Säuren eingesetzt werden.

Als organische Säuren können beispielsweise Trifluoressigsäure, Trifluormethansulfonsäure, p-Toluolsulfonsäure, Trialkylammoniumverbindungen R₃NH⁺X⁻ oder Basen, wie beispielsweise Trialkylamine NR₃, eingesetzt werden.

Das erfindungsgemäße Verfahren kann bei Normaldruck oder reduziertem Druck, bevorzugt zwischen 1 und 600 mbar, besonders bevorzugt zwischen 5 und 400 mbar, ganz besonders bevorzugt zwischen 5 und 200 mbar, durchgeführt werden.

Das erfindungsgemäße Verfahren kann im Temperaturbereich zwischen 50°C und 200°C, bevorzugt zwischen 70°C und 180°C, besonders bevorzugt zwischen 90°C und 150°C, durchgeführt werden.

Dem Reaktionsgemisch können vor oder während der Reaktion Substanzen zugesetzt werden, die den Wassertransport aus dem Produkt durch Bildung azeotroper Gemische fördern. Die entsprechenden Substanzen können cyclische oder geradkettige Aliphaten, Aromaten, gemischt aromatischaliphatische Verbindungen, Ether, Alkohole oder Säuren sein. Beispielsweise können Hexan, Cyclohexan, Benzol, Toluol, Ethanol, Propanol, iso-Propanol, Butanol, Ethylenglycol, Tetrahydrofuran, Dioxan, Ameisensäure, Essigsäure, Ethylacetat oder Dimethylformamid eingesetzt werden.

Die Reaktion kann kontinuierlich oder diskontinuierlich durchgeführt werden.

Bei dem erfindungsgemäßen Verfahren können vor, während oder nach der Reaktion der Reaktionsmischung Additive zugesetzt werden. Die Additive können bevorzugt vor der Reaktion zugesetzt werden. Die Additive können eine elektrophile oder nukleophile Spaltung der Q-S-Bindung in Formel I vermindern.

Zur Vermeidung von Kondensationsreaktionen kann es vorteilhaft sein, die Reaktion in einer wasserfreien Umgebung, idealerweise in einer Inertgasatmosphäre, durchzuführen.

Die erfindungsgemäßen Organosiliciumverbindungen können als Haftvermittler zwischen anorganischen Materialien (zum Beispiel Glasfasern, Metallen, oxidischen Füllstoffen, Kieselsäuren) und organischen Polymeren (zum Beispiel Duroplasten, Thermoplasten, Elastomeren) beziehungsweise als Vernetzungsmittel und Oberflächenmodifizierungsmittel verwendet werden. Die erfindungsgemäßen Organosiliciumverbindungen können als Kopplungsreagenzien in gefüllten Kautschukmischungen, beispielsweise Reifenlaufflächen, verwendet werden.

Ein weiterer Gegenstand der Erfindung sind Kautschukmischungen, welche dadurch gekennzeichnet sind, daß sie Kautschuk, Füllstoff, wie beispielsweise gefällte Kieselsäure, gegebenenfalls weitere Kautschukhilfsmittel, sowie mindestens eine der erfindungsgemäßen Organosiliciumverbindungen der allgemeinen Formel (I) enthalten.

Die erfindungsgemäßen Organosiliciumverbindungen der allgemeinen Formel (I) können in Mengen von 0,1 bis 50 Gew-%, bevorzugt 0,1 bis 25 Gew.-%, besonders bevorzugt 1 bis 20 Gew.-%, bezogen auf die Menge des eingesetzten Kautschuks, eingesetzt werden.

Die Zugabe der erfindungsgemäßen Organosiliciumverbindungen der allgemeinen Formel (I), sowie die Zugabe der Füllstoffe kann bei Massetemperaturen von 100 bis 200 °C erfolgen. Sie kann jedoch auch bei tieferen Temperaturen von 40 bis 100 °C, zum Beispiel zusammen mit weiteren Kautschukhilfsmitteln, erfolgen.

Die erfindungsgemäßen Organosiliciumverbindungen können sowohl in reiner Form als auch aufgezogen auf einen inerten organischen oder anorganischen Träger, sowie vorreagiert mit einem organischen oder anorganischen Träger dem Mischprozeß zugegeben werden. Bevorzugte Trägermaterialien können gefällte oder pyrogene Kieselsäuren, Wachse, Thermoplaste, natürliche oder synthetische Silikate, natürlich oder synthetische Oxide, bevorzugt Aluminiumoxid, oder Ruße sein. Desweiteren können die erfindungsgemäßen Organosiliciumverbindungen auch vorreagiert mit dem einzusetzenden Füllstoff dem Mischprozeß zugegeben werden.

Die erfindungsgemäßen Organosiliciumverbindungen können physikalisch vermischt mit einem organischen Stoff, oder einem organischen Stoffgemisch dem Mischprozess zugegeben werden. Der organische Stoff, oder das organische Stoffgemisch kann Polymere oder Oligomere enthalten. Die Polymere oder Oligomere, können heteroatom-enthaltende Polymere oder Oligomere, zum Beispiel Ethylenvinylalkohol, Ethylenvinylacetat, Polyvinylacetat oder/und Polyvinylalkohole sein. Polymere oder Oligomere, können gesättigte oder ungesättigte Elastomere, bevorzugt Emulsions-SBR oder/und Lösungs-SBR, sein. Der Schmelzpunkt der Mischung aus erfindungsgemäßen Organsiliciumverbindungen und organischem Stoff oder einem organischen Stoffgemisch kann zwischen 50 und 200°C, bevorzugt zwischen 70 und 180°C, besonders bevorzugt zwischen 70 und 150°C, ganz besonders bevorzugt zwischen 70 und 130°C, außerordentlich bevorzugt zwischen 90 und 110°C, betragen. Der organische Stoff, oder das organische Stoffgemisch kann mindestens ein olefinisches Wachs und/oder langkettigen Carbonsäuren enthalten.

Als Füllstoffe können für die erfindungsgemäßen Kautschukmischungen die folgenden Füllstoffe eingesetzt werden:
- Ruße: Die hierbei zu verwendenden Ruße können nach dem Flammruß-, Furnace-, Gasruß oder Thermalruß-Verfahren hergestellt werden. Die Ruße können eine BET-Oberfläche von 20 bis 200 m²/g haben. Die Ruße können gegebenenfalls auch dotiert sein, wie zum Beispiel mit Si.
- Amorphe Kieselsäuren, hergestellt zum Beispiel durch Fällung von Lösungen von Silikaten (gefällte Kieselsäuren) oder Flammenhydrolyse von Siliciumhalogeniden (pyrogene Kieselsäuren). Die amorphen Kieselsäuren können eine spezifische Oberfläche von 5 bis 1000 m²/g, vorzugsweise 20 bis 400 m²/g (BET-Oberfläche) und eine Primärteilchengrösse von 10 bis 400 nm haben. Die Kieselsäuren können gegebenenfalls auch als Mischoxide mit anderen Metalloxiden, wie Al-, Mg-, Ca-, Ba-, Zn- und Titanoxiden, vorliegen.
- Synthetische Silikate, wie Aluminiumsilikat oder Erdalkalisilikate, beispielsweise Magnesiumsilikat oder Calciumsilikat. Die synthetischen Silikate können BET-Oberflächen von 20 bis 400 m²/g und Primärteilchendurchmessern von 10 bis 400 nm haben.
- Synthetische oder natürliche Aluminiumoxide und - hydroxide.
- Natürliche Silikate, wie Kaolin und andere natürlich vorkommende Kieselsäuren.
- Glasfaser und Glasfaserprodukte (Matten, Stränge) oder Mikroglaskugeln.

Bevorzugt können amorphe Kieselsäuren, hergestellt durch Fällung von Lösungen von Silikaten (gefällte Kieselsäuren), mit BET-Oberflächen von 20 bis 400 m²/g in Mengen von 5 bis 150 Gew.-Teilen, jeweils bezogen auf 100 Teile Kautschuk, eingesetzt werden.

Die genannten Füllstoffe können alleine oder im Gemisch eingesetzt werden. In einer besonders bevorzugten Ausführung des Verfahrens können 10 bis 150 Gew.-Teile helle Füllstoffe, gegebenenfalls zusammen mit 0 bis 100 Gew.-Teilen Ruß, sowie 1 bis 20 Gew.-Teile einer Verbindung der erfindungsgemäßen Organosiliciumverbindungen, jeweils bezogen auf 100 Gew.-Teile Kautschuk, zur Herstellung der Mischungen eingesetzt werden.

Für die Herstellung der erfindungsgemäßen Kautschukmischungen eignen sich neben Naturkautschuk auch Synthesekautschuke. Bevorzugte Synthesekautschuke sind beispielsweise bei W. Hofmann, Kautschuktechnologie, Genter Verlag, Stuttgart 1980, beschrieben. Sie umfassen unter anderem
- Polybutadien (BR),
- Polyisopren (IR),
- Styrol/Butadien-Copolymerisate, beispielsweise Emulsions-SBR (E-SBR) oder Lösungs-SBR (L-SBR), vorzugsweise mit einem Styrolgehalt von 1 bis 60 Gew.-%, besonders bevorzugt 2 bis 50 Gew.-%, bezogen auf das Gesamtpolymer,
- Chloropren (CR),
- Isobutylen/Isopren-Copolymerisate (IIR),
- Butadien/Acrylnitril-Copolymere, vorzugsweise mit einem Acrylnitrilgehalt von 5 bis 60 Gew.-%, vorzugsweise 10 bis 50 Gew.-%, bezogen auf das Gesamtpolymer (NBR),
- teilhydrierter oder vollständig hydrierter NBR-Kautschuk (HNBR),
- Ethylen/Propylen/Dien-Copolymerisate (EPDM) oder
- oben genannte Kautschuke, die zusätzlich funktionelle Gruppen besitzen, wie z.B. Carboxy- , Silanol- oder Epoxygruppen, beispielsweise Epoxidierter NR, Carboxy-funktionalisierter NBR oder Silanol- (-SiOH) bzw. Siloxy-funktionalisierter (-Si-OR) SBR,
sowie Mischungen dieser Kautschuke. Für die Herstellung von PKW-Reifenlaufflächen sind insbesondere anionisch polymerisierte L-SBR-Kautschuke (Lösungs-SBR) mit einer Glastemperatur oberhalb von -50 °C sowie deren Mischungen mit Dienkautschuken von Interesse.

Die erfindungsgemäßen Kautschukvulkanisate können weitere Kautschukhilfsstoffe enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, wie Diphenylguanidin, Triethanolamin, Polyethylenglykol, Alkoxyterminiertes Polyethylenglykol Alkyl-O-(CH₂-CH₂-O)_{yI}-H mit y^{I} = 2-25, bevorzugt y^{I}=2-15, besonders bevorzugt y^{I}=3-10, ganz besonders bevorzugt y^{I}=3-6, oder
Hexantriol, die der Kautschukindustrie bekannt sind.

Die Vulkanisation der erfindungsgemäßen Kautschukmischungen kann ohne Zusatz von stickstoffhaltigen Aktivatoren, wie beispielsweise Guanidine und Amine, durchgeführt werden. In einer bevorzugten Ausführungsform kann das Kautschukvulkanisat frei von Guanidinderivaten sein.

Die Kautschukhilfsmittel können in bekannten Mengen, die sich unter anderem nach dem Verwendungszweck richten, eingesetzt werden. Übliche Mengen können zum Beispiel Mengen von 0,1 bis 50 Gew.-%, bezogen auf Kautschuk, sein. Als Vernetzer können Schwefel oder schwefelspendende Substanzen eingesetzt werden. Die erfindungsgemäßen Kautschukmischungen können darüber hinaus Vulkanisationsbeschleuniger enthalten. Beispiele für geeignete Vulkanisationsbeschleuniger können Mercaptobenzthiazole, Sulfenamide, Guanidine, Thiurame, Dithiocarbamate, Thioharnstoffe und Thiocarbonate sein. Die Vulkanisationsbeschleuniger und Schwefel können in Mengen von 0,1 bis 10 Gew.-%, bevorzugt 0,1 bis 5 Gew.-%, bezogen auf Kautschuk, eingesetzt werden.

Die Vulkanisation der erfindungsgemäßen Kautschukmischungen kann bei Temperaturen von 100 bis 200 °C, bevorzugt 130 bis 180 °C, gegebenenfalls unter Druck von 10 bis 200 bar erfolgen. Die Abmischung der Kautschuke mit dem Füllstoff, gegebenenfalls Kautschukhilfsmitteln und der erfindungsgemäßen Organosiliciumverbindung kann in bekannten Mischaggregaten, wie Walzen, Innenmischern und Mischextrudern, durchgeführt werden.

Die erfindungsgemäßen Kautschukmischungen können zur Herstellung von Formkörpern, zum Beispiel für die Herstellung von Luftreifen, Reifenlaufflächen, Kabelmänteln, Schläuchen, Treibriemen, Förderbändern, Walzenbelägen, Reifen, Schuhsohlen, Dichtungsringen und Dämpfungselementen, verwendet werden.

Die erfindungsgemäßen Organosiliciumverbindungen haben den Vorteil, daß kein leicht flüchtiger Alkohol, normalerweise Methanol oder Ethanol, bei der Hydrolyse der Si-O-R Bindungen freigesetzt wird und gleichzeitig die Reaktivität gegenüber dem anorganischen Füllstoff und dem organischen Polymer weiterhin hoch ist. Die Verarbeitungseigenschaften der Rohmischungen und die dynamischen Eigenschaften der Vulkanisate ergeben insgesamt ein sehr gutes, ausgewogenes Wertebild.

### Beispiele

Das verwendete HS-CH₂-CH₂-CH₂-Si(O-CH₂-CH₂)₃N wird aus HS-CH₂-CH₂-CH₂-Si(O-CH₂-CH₃)₃ mit Triethanolamin in Gegenwart von Ti(OBu)₄ bei Temperaturen von 110-130°C, reduziertem Druck und einer Reaktionszeit von 180-360 Min. durch Umesterung in Substanz synthetisiert.

Das HS-CH₂-CH₂-CH₂-Si(O-CH₂-CH₂)₃N enthält je nach Qualität des verwendeten HS-CH₂-CH₂-CH₂-Si(O-CH₂-CH₃)₃ zwischen 1 und 6 Gew.-% Cl-CH₂-CH₂-CH₂-Si(O-CH₂-CH₂)₃N.

Cl-CH₂-CH₂-CH₂-Si (O-CH₂-CH₃)₃ ist als Nebenbestandteil im verwendeten HS-CH₂-CH₂-CH₂-Si (O-CH₂-CH₃)₃ enthalten und wird unter den Reaktionsbedingungen zum Cl-CH₂-CH₂-CH₂-Si(O-CH₂-CH₂)₃N umgesetzt.

### Vergleichsbeispiel 1

### Herstellung von CH₃-C(O)-S-CH₂-CH₂-CH₂-Si(O-CH₂-CH₂)₃N

Zu einer Lösung aus 100 g HS-CH₂-CH₂-CH₂-Si(O-CH₂-CH₂)₃N in 1000 ml Toluol werden 38,5 g Triethylamin bei 0 °C gegeben. Die Mischung wird für 10 min bei 0°C gerührt. Zu der Mischung werden bei einer Temperatur zwischen -5°C und 0°C 29,4 g Essigsäurechlorid getropft. Nach 60 min Rühren zwischen 0° und Raumtemperatur wird die entstandene Suspension für 3 h auf 80°C erwärmt. Anschließend wird die Suspension filtriert, der Filterkuchen mit Toluol gewaschen, die erhaltenen Filtrate vereinigt und das Lösungsmittel am Rotationsverdampfer entfernt. Man erhält 114 g zähflüssiges Produkt. Das Produkt enthält laut NMR Analysen 87 mol% CH₃-C(O)-S-CH₂-CH₂-CH₂-Si(O-CH₂-CH₂)₃N, 9 mol% HS-CH₂-CH₂-CH₂-Si(O-CH₂-CH₂)₃N und 3 mol% Cl-CH₂-CH₂-CH₂-Si(O-CH₂-CH₂)₃N bezogen auf die siliciumhaltigen Bestandteile.

### Beispiel 1

### Herstellung von C₇H₁₅-C(O)-S-CH₂-CH₂-CH₂-Si(O-CH₂-CH₂)₃N

Zu einer Lösung aus 100 g HS-CH₂-CH₂-CH₂-Si(O-CH₂-CH₂)₃N in 1000 ml Toluol werden 40,6 g Triethylamin bei 0 °C gegeben. Die Mischung wird für 10 min bei 0°C gerührt. Zu der Mischung werden bei einer Temperatur zwischen -5°C und 0°C 65,3 g Oktansäurechlorid getropft. Nach 60 min Rühren zwischen 0° und Raumtemperatur wird die entstandene Suspension filtriert, der Filterkuchen gewaschen, die erhaltenen Filtrate vereinigt und das Lösungsmittel am Rotationsverdampfer entfernt. Man erhält 141,6 g zähflüssiges Produkt. Das Produkt enthält laut NMR Analysen 93 mol% C₇H₁₅-C(O)-S-CH₂-CH₂-CH₂-Si(O-CH₂-CH₂)₃N, 5 mol% HS-CH₂-CH₂-CH₂-Si(O-CH₂-CH₂)₃N und 2 mol% Cl-CH₂-CH₂-CH₂-Si(O-CH₂-CH₂)₃N bezogen auf die siliciumhaltigen Bestandteile.

### Beispiel 2

### Herstellung von C₁₁H₂₃-C(O)-S-CH₂-CH₂-CH₂-Si(O-CH₂-CH₂)₃N

Zu einer Lösung aus 100 g HS-CH₂-CH₂-CH₂-Si(O-CH₂-CH₂)₃N in 1000 ml Toluol werden 38,5 g Triethylamin bei 0 °C gegeben. Die Mischung wird für 10 min bei 0°C gerührt. Zu der Mischung werden bei einer Temperatur zwischen -5°C und 0°C 83,2 g Dodekansäurechlorid getropft. Nach 15 h Rühren zwischen 0° und Raumtemperatur wird die entstandene Suspension filtriert, der Filterkuchen gewaschen, die erhaltenen Filtrate vereinigt und das Lösungsmittel am Rotationsverdampfer entfernt. Man erhält 162,4 g zähflüssiges Produkt. Das Produkt enthält laut NMR Analysen >86 mol% C₁₁H₂₃-C(O)-S-CH₂-CH₂-CH₂-Si(O-CH₂-CH₂)₃N, 9 mol% HS-CH₂-CH₂-CH₂-Si(O-CH₂-CH₂)₃N und 3 mol% Cl-CH₂-CH₂-CH₂-Si(O-CH₂-CH₂)₃N bezogen auf die siliciumhaltigen Bestandteile.

### Beispiel 3

### Herstellung von C₁₅H₃₁-C(O)-S-CH₂-CH₂-CH₂-Si(O-CH₂-CH₂)₃N

Zu einer Lösung aus 100 g HS-CH₂-CH₂-CH₂-Si(O-CH₂-CH₂)₃N in 1000 ml Toluol werden 38,5 g Triethylamin bei 0 °C gegeben. Die Mischung wird für 15 min bei 0°C gerührt. Zu der Mischung werden bei einer Temperatur zwischen -10°C und 0°C 104,5 g Palmitinsäurechlorid getropft. Nach 18 h Rühren bei Raumtemperatur wird die entstandene Suspension filtriert, der Filterkuchen gewaschen, die erhaltenen Filtrate vereinigt und das Lösungsmittel am Rotationsverdampfer entfernt. Man erhält 186,3 g zähflüssiges Produkt. Das Produkt enthält laut NMR Analysen 88 mol% C₁₅H₃₁-C(O)-S-CH₂-CH₂-CH₂-Si(O-CH₂-CH₂)₃N, 8 mol% HS-CH₂-CH₂-CH₂-Si(O-CH₂-CH₂)₃N und 3 mol% Cl-CH₂-CH₂-CH₂-Si(O-CH₂-CH₂)₃N bezogen auf die siliciumhaltigen Bestandteile.

### Beispiel 4

### Herstellung von N(CH₂CH₂-O)₃Si(CH₂)₃S-C(O)-C₄H₈-C(O)-S(CH₂)₃Si(O-CH₂CH₂)₃N

Zu einer Lösung aus 100 g HS-CH₂-CH₂-CH₂-Si(O-CH₂-CH₂)₃N in 1000 ml Toluol werden 40,5 g Triethylamin bei 0 °C gegeben. Die Mischung wird für 15 min bei 0°C gerührt. Zu der Mischung werden bei einer Temperatur zwischen -10°C und 0°C 53,5 g Adipinsäuredichlorid getropft. Nach 2 h Rühren bei Raumtemperatur wird die entstandene Suspension für 2 h auf 70°C erwärmt. Die erhaltene Suspension wird filtriert, der Filterkuchen gewaschen, die erhaltenen Filtrate vereinigt und das Lösungsmittel am Rotationsverdampfer entfernt. Man erhält 98,4 g zähflüssiges Produkt. Das Produkt enthält laut NMR Analysen 93 mol% N(CH₂CH₂-O)₃Si(CH₂)₃S-C(O)-C₄H₈-C(O)-S(CH₂)₃Si(O-CH₂CH₂)₃N, 2 mol% HS-CH₂-CH₂-CH₂-Si(O-CH₂-CH₂)₃N und 4 mol% Cl-CH₂-CH₂-CH₂-Si(O-CH₂-CH₂)₃N bezogen auf die siliciumhaltigen Bestandteile.

### Beispiel 5

### Herstellung von N(CH₂CH₂-O)₃Si(CH₂)₃S-C(O)-C₁₀H₂₀-C(O)-S(CH₂)₃Si(O-CH₂CH₂)₃N

Zu einer Lösung aus 100 g HS-CH₂-CH₂-CH₂-Si(O-CH₂-CH₂)₃N in 1000 ml Toluol werden 38,5 g Triethylamin bei 0 °C gegeben. Die Mischung wird für 15 min bei 0°C gerührt. Zu der Mischung werden bei einer Temperatur zwischen -10°C und 0°C 50,8 g Dodecandisäurechlorid getropft. Nach 2 h Rühren bei Raumtemperatur wird die entstandene Suspension für 3 h auf 70°C erwärmt. Die erhaltene Suspension wird abgekühlt, filtriert, der Filterkuchen mit Toluol gewaschen, die erhaltenen Filtrate vereinigt und das Lösungsmittel am Rotationsverdampfer entfernt. Man erhält 132,4 g zähflüssiges Produkt. Das Produkt enthält laut NMR Analysen 91 mol% N(CH₂CH₂-O)₃Si(CH₂)₃S-C(O)-C₁₀H₂₀-C(O)-S(CH₂)₃Si(O-CH₂CH₂)₃N, 2 mol% HS-CH₂-CH₂-CH₂-Si(O-CH₂-CH₂)₃N und 4 mol% Cl-CH₂-CH₂-CH₂-Si(O-CH₂-CH₂)₃N bezogen auf die siliciumhaltigen Bestandteile.

### Beispiel 6

### Gummitechnische Untersuchungen

Die für die Kautschukmischungen verwendete Rezeptur ist in der folgenden Tabelle 1 angegeben. Dabei bedeutet die Einheit phr Gewichtsanteile, bezogen auf 100 Teile des eingesetzten Rohkautschuks. Die erfindungsgemäßen Organosiliciumverbindungen werden equimolar, d.h. nach gleicher Stoffmenge zu der Menge des Silans des Vergleichsbeispiels 1 eingesetzt. Folgende Kopplungsagentien werden untersucht:
Mischung 1: Vergleichsbeispiel 1
Mischung 2: 3-Octanoylthio-1-propyltriethoxysilan,
Handelsname: NXT der Firma General Electric
Mischung 3: Beispiel 1
Mischung 4: Beispiel 2
Mischung 5: Beispiel 3

Das allgemeine Verfahren zur Herstellung von Kautschukmischungen und deren Vulkanisate ist in dem Buch: "Rubber Technology Handbook", W. Hofmann, Hanser Verlag 1994 beschrieben.

**Tabelle 1:**

| Substanz (Kopplungsagens) | Mischung 1 Vergleichs-bsp. 1 | Mischung 2 NXT | Mischung 3 Bsp. 1 | Mischung 4 Bsp. 2 | Mischung 5 Bsp. 3 |
|---|---|---|---|---|---|
| | [phr] | [phr] | [phr] | [phr] | [phr] |
| **1. Stufe** | | | | | |
| Buna VSL 5025-1 | 96 | 96 | 96 | 96 | 96 |
| Buna CB 24 | 30 | 30 | 30 | 30 | 30 |
| Ultrasil 7000 GR | 80 | 80 | 80 | 80 | 80 |
| Kopplungsagens | 7 | 8,8 | 9 | 10,4 | 11,7 |
| ZnO | 3 | 3 | 3 | 3 | 3 |
| Stearinsäure | 2 | 2 | 2 | 2 | 2 |
| Naftolen ZD | 10 | 10 | 10 | 10 | 10 |
| Vulkanox 4020 | 1,5 | 1,5 | 1,5 | 1,5 | 1,5 |
| Protektor G 3108 | 1 | 1 | 1 | 1 | 1 |

| **2. Stufe** | | | | | |
|---|---|---|---|---|---|
| Batch Stufe 1 | | | | | |
| **3. Stufe** | | | | | |
| Batch Stufe 2 | | | | | |
| Vulkacit CZ | 1,5 | 1,5 | 1,5 | 1,5 | 1,5 |
| Perkacit TBzTD | 0,2 | 0,2 | 0,2 | 0,2 | 0,2 |
| Schwefel | 2,1 | 2,1 | 2,1 | 2,1 | 2,1 |

Bei dem Polymer VSL 5025-1 handelt es sich um ein in Lösung polymerisiertes SBR-Copolymer der Bayer AG, mit einem Styrolgehalt von 25 Gew.-% und einem Butadiengehalt von 75 Gew.-%. Das Copolymer enthält 37,5 phr Öl und weist eine Mooney-Viskosität (ML 1+4/100°C) von 50 auf.

Bei dem Polymer Buna CB 24 handelt es sich um ein cis-1,4-Polybutadien (Neodymtyp) der Bayer AG, mit cis-1,4-Gehalt von mindestens 96 % und einer Mooney-Viskosität von 44±5.

Ultrasil 7000 GR ist eine leicht dispergierbare Kieselsäure der Degussa AG und besitzt eine BET-Oberfläche von 170 m²/g.

Als aromatisches Öl wird Naftolen ZD der Chemetall verwendet, bei Vulkanox 4020 handelt es sich um PPD der Bayer AG und Protektor G3108 ist ein Ozonschutzwachs der Paramelt B.V.. Vulkacit CZ (CBS) ist ein Handelsprodukt der Bayer AG. Perkacit TBzTD (Tetrabenzylthiuramtetrasulfid) ist ein Produkt von Flexsys N.V..

Die Kautschukmischungen werden in einem Innenmischer entsprechend der Mischvorschrift in Tabelle 2 hergestellt.

**Tabelle 2**

| | | Stufe 1 |
|---|---|---|
| Einstellungen | | |
| Mischaggregat | | Werner & Pfleiderer E-Typ |
| Drehzahl | | 90 min⁻¹ |
| Stempeldruck | | 5,5 bar |
| Leervolumen | | 1,58 L |
| Füllgrad | | 0,56 |
| Durchflußtemp. | | 70 °C |
| Mischvorgang | | |
| 0 bis | 1 min | Buna VSL 5025-1 + Buna CB 24 |
| 1 bis | 2 min | 1/2 Kieselsäure, ZnO, Stearinsäure, |
| | | Naftolen ZD, Kopplungsagens |
| 2 bis | 4 min | 1/2 Kieselsäure, Vulkanox, Protektor |
| 4 bis | 5 min | Mischen |
| | 5 min | Lüften |
| 5 bis | 6 min | Mischen und ausfahren |
| | | |
| Batch-Temp. | | 140-150°C |
| Lagerung | | 24 h bei Raumtemperatur |
| | | |

| | | Stufe 2 |
|---|---|---|
| Einstellungen | | |
| Mischaggregat | | Wie in Stufe 1 bis auf: |
| Drehzahl | | 80 min⁻¹ |
| Durchflußtemp. | | 80 °C |
| Füllgrad | | 0,54 |
| Mischvorgang | | |
| 0 bis | 2 min | Batch Stufe 1 aufbrechen |
| 2 bis | 5 min | Batchtemperatur 145°C durch Drehzahlvariation halten |
| | 5 min | Ausfahren |
| | | |
| Batch-Temp. | | 140-150°C |
| Lagerung | | 4 h bei Raumtemperatur |

| | | |
|---|---|---|
| | | Stufe 3 |
| Einstellungen | | |
| Mischaggregat | | wie in Stufe 1 bis auf |
| Drehzahl | | 40 min⁻¹ |
| Füllgrad | | 0,52 |
| Durchflußtemp. | | 50 °C |

| Mischvorgang | | |
|---|---|---|
| 0 bis | 2 min | Batch Stufe 2, Beschleuniger, Schwefel |
| | | |
| | 2 min | ausfahren und auf Labormischwalzwerk Fell bilden |
| | | (Durchmesser 200 mm, Länge 450 mm, Durchflußtemperatur 50°C) |
| | | |
| | | Homogenisieren: |
| | | 5* links, 5* rechts einschneiden und |
| | | 3* bei weitem Walzenspalt (6 mm) und |
| | | 3* bei engem Walzenspalt (3 mm) |
| | | Fell ausziehen. |
| Batch-Temp. | | < 110°C |

In Tabelle 3 sind die Methoden für die Gummitestung zusammengestellt.

**Tabelle 3**

| Physikalische Testung | | Norm/Bedingungen |
|---|---|---|
| ML 1+4, 100°C, 3. Stufe | | DIN 53523/3, ISO 667 |
| Ball Rebound, 60°C (%) | | ASTM D 5308 |
| Goodrich-Flexometertest, | | DIN 53533, ASTM D 623 A |
| 0,250 inch Hub, 25 min, 23 °C | | |
| | Kontakttemperatur (°C) | |
| | Einstichtemperatur (°C) | |
| | Permanent Set (%) | |

Die Tabelle 4 zeigt die Ergebnisse der gummitechnischen Prüfung. Die Mischungen werden auf t99% der Rheometerprüfung aber nicht länger als 30 min bei 165°C vulkanisiert.

**Tabelle 4**

| **Rohmischungsdaten** | Einheit | Mischung 1 | Mischung 2 | Mischung 3 | Mischung 4 | Mischung 5 |
|---|---|---|---|---|---|---|
| ML 1+4, 3. Stufe | [-] | 64 | 59 | 57 | 56 | 54 |
| **Vulkanisatdaten** | Einheit | M1 | M2 | M3 | M4 | M5 |
| Ball-Rebound, 60°C | [%] | 66,7 | 67,0 | 69,8 | 69,3 | 69,0 |
| Kontakttemperatur | [°C] | 57 | 58 | 50 | 50 | 53 |
| Einstichtemperatur | [°C] | 109 | 111 | 96 | 98 | 102 |
| Permanent Set | [%] | 2,0 | 2,5 | 1,7 | 1,7 | 1,8 |

Die Ergebnisse der Tabelle 4 zeigen, daß durch die Verlängerung der blockierenden Gruppe von Acetyl über Octanoyl zu Palmityl die Mischungsviskosität abgesenkt werden kann. Beim Vergleich der Mischung 2 mit der Mischung 3 wird gezeigt, daß durch die Modifikation des Silans ebenfalls die Viskosität abgesenkt wird. Somit heben sich die erfindungsgemäßen Silane durch eine bessere Verarbeitbarkeit gegenüber dem Stand der Technik hervor.

Bei Betrachtung der Vulkanisatergebnisse kann man erkennen, daß sowohl der Ball-Rebound als auch der Wärmeaufbau der Mischungen 3, 4 und 5 mit den erfindungsgemäßen Silanen gegenüber den Mischungen 1 und 2 deutlich verbessert sind.

Somit wird gezeigt, daß ausschließlich durch die Kombination der Modifikation der Kieselsäure aktiven Kopplungsgruppe und gleichzeitigen Blockierung der Schwefelgruppe Vorteile sowohl in der Verarbeitbarkeit, als auch im dynamischen Verhalten erzeugt werden können.

Sowohl der höhere Ball-Rebound als auch der niedrigere Wärmeaufbau weisen darauf hin, daß Reifenlaufflächen mit den erfindungsgemäßen Silanen zu einem niedrigeren Rollwiderstand und damit Kraftstoffverbrauch führen. Zudem ist der dynamische Wärmeaufbau geringer, was die Langlebigkeit des Reifens erhöht. Es kann also mit den erfindungsgemäßen Organosiliciumverbindungen die Verarbeitbarkeit der Kautschukmischung und gleichzeitig das dynamische Verhalten verbessert werden.

Zusätzlich zeichnen sich die erfindungsgemäßen Organosiliciumverbindungen dadurch aus, daß kein flüchtiger Alkohol während des Mischens freigesetzt wird.

### Beispiel 7

### Herstellung von C₄H₉-NH-C(O)-S-CH₂-CH₂-CH₂-Si(O-CH₂-CH₂)₃N

In einem Kolben unter Schutzgas werden bei 25°C 70 g HS-CH₂-CH₂-CH₂-Si(O-CH₂-CH₂)₃N und 44, 5 g O=C=N-C₄H₉ (Firma Sigma-Aldrich) in 100 g Toluol (Seccosolv) zusammengegeben und für 24 h gerührt. Anschließend wird für 5 h bei 60°C gerührt. Die erhaltene Lösung wird am Rotationsverdampfer bei 80°C im Vakuum von flüchtigen Bestandteilen befreit. Es werden 100 g eines viskosen dunkelen, orangen Öls erhalten.

### Beispiel 8

### Herstellung von C₈H₁₇-NH-C(O)-S-CH₂-CH₂-CH₂-Si(O-CH₂-CH₂)₃N

In einem Kolben unter Schutzgas werden bei 25°C 40 g HS-CH₂-CH₂-CH₂-Si(O-CH₂-CH₂)₃N und 25 g O=C=N-C₈H₁₇ (Firma Sigma-Aldrich) in 100 g Toluol (Seccosolv) zusammengegeben und für 24 h gerührt. Anschließend wird für 5 h bei 60°C gerührt. Die erhaltene Lösung wird am Rotationsverdampfer bei 80°C im Vakuum von flüchtigen Bestandteilen befreit. Es werden 65 g eines viskosen gelben Öls erhalten.

### Beispiel 9

### Herstellung von C₆H₅-NH-C(O)-S-CH₂-CH₂-CH₂-Si(O-CH₂-CH₂)₃N

In einem Kolben unter Schutzgas werden bei 25°C 75 g HS-CH₂-CH₂-CH₂-Si(O-CH₂-CH₂)₃N und 55 g 0=C=N-C₆H₅ (Firma VWR) in 100 g Toluol (Seccosolv) zusammengegeben und für 48 h gerührt. Es bildet sich ein farbloser Niederschlag. Die erhaltene Suspension wird filtriert und der Filterkuchen mit 500 ml Pentan gewaschen. Der Filterkuchen wird anschließend bei 80-90°C im Vakuum getrocknet. Es werden 110 g eines farblosen Feststoffes erhalten.

### Beispiel 10

### Herstellung von C₄H₉-NH-C(S)-S-CH₂-CH₂-CH₂-Si(O-CH₂-CH₂)₃N

In einem Kolben unter Schutzgas werden bei 25°C 70 g HS-CH₂-CH₂-CH₂-Si(O-CH₂-CH₂)₃N und 50 g S=C=N-C₄H₉ (Firma KMF-Laborchemie) in 100 g Toluol (Seccosolv) zusammengegeben und für 48 h gerührt. Anschließend wird für 5 h bei 60°C gerührt. Die erhaltene Lösung wird am Rotationsverdampfer bei 80°C im Vakuum von flüchtigen Bestandteilen befreit. Es werden 102 g eines viskosen orange-braunen Öls erhalten.

### Beispiel 11

### Herstellung von C₈H₁₇-NH-C(S)-S-CH₂-CH₂-CH₂-Si(O-CH₂-CH₂)₃N

In einem Kolben unter Schutzgas werden bei 25°C 30 g HS-CH₂-CH₂-CH₂-Si(O-CH₂-CH₂)₃N und 25 g S=C=N-C₈H₁₇ (Firma KMF-Laborchemie) in 100 g Toluol (Seccosolv) zusammengegeben und für 24 h gerührt. Anschließend wird für 5 h bei 60°C gerührt. Die erhaltene Lösung wird am Rotationsverdampfer bei 80°C im Vakuum von flüchtigen Bestandteilen befreit. Es werden 55 g eines viskosen gelb-orangen Öls erhalten.

### Beispiel 12

### Herstellung von C₆H₅-NH-C(S)-S-CH₂-CH₂-CH₂-Si(O-CH₂-CH₂)₃N

In einem Kolben unter Schutzgas werden bei 25°C 75 g HS-CH₂-CH₂-CH₂-Si(O-CH₂-CH₂)₃N und 50 g S=C=N-C₆H₅ (Firma VWR) in 100 g Toluol (Seccosolv) zusammengegeben und für 48 h gerührt. Es bildet sich ein wachsfarbener Niederschlag, der sich auch in zusätzlichen 235 g Toluol nicht auflöst. Anschließend wird für 5 h bei 60°C gerührt. Die erhaltene Suspension wird filtriert und der Filterkuchen mit 700 ml Pentan gewaschen. Der Filterkuchen wird anschließend bei 80-90°C im Vakuum getrocknet. Es werden 100 g eines farblosen Feststoffes erhalten.

### Beispiel 13

### Herstellung von Me₃Si-S-CH₂-CH₂-CH₂-Si(O-CH₂-CH₂)₃N

Zu einer gekühlten Lösung aus 100 g HS-CH₂-CH₂-CH₂-Si(O-CH₂-CH₂)₃N in 1000 ml Toluol (Seccosolv) werden 44,5 g Triethylamin bei 1 °C gegeben. Die Mischung wird für 10 min bei 3-6°C gerührt. Zu der Mischung werden bei einer Temperatur zwischen 1°C und 10°C 47,8 g Trimethylsilylchlorid getropft. Nach 60 min Rühren wird die entstandene Suspension für 5 h auf 70°C erwärmt, anschließend abgekühlt und dann filtriert. Der Filterkuchen wird gewaschen, die erhaltenen Filtrate vereinigt und das Lösungsmittel am Rotationsverdampfer entfernt. Man erhält 129 g oranges zähflüssiges Produkt.

### Beispiel 14

### Herstellung von C₁₆H₃₃-Si-[S-CH₂-CH₂-CH₂-Si(O-CH₂-CH₂)₃N]₃

Zu einer gekühlten Lösung aus 100 g HS-CH₂-CH₂-CH₂-Si(O-CH₂-CH₂)₃N in 1000 ml Toluol (Seccosolv) werden 44,5 g Triethylamin bei 0°C gegeben. Die Mischung wird für 10 min bei 2-4°C gerührt. Zu der Mischung werden bei einer Temperatur zwischen 2°C und 10°C 46,8 g C₁₆H₃₃-SiCl₃ getropft. Nach 60 min Rühren wird die entstandene Suspension für 5 h auf 70°C erwärmt, anschließend abgekühlt und dann filtriert. Der Filterkuchen wird gewaschen, die erhaltenen Filtrate vereinigt und das Lösungsmittel am Rotationsverdampfer entfernt. Man erhält 130 g oranges zähflüssiges Produkt.

### Beispiel 15

### Herstellung von C₆H₅-(C=O)-S-CH₂-CH₂-CH₂-Si(O-CH(CH₃)-CH₂)₃N

Zu einer gekühlten Lösung aus 100 g HS-CH₂-CH₂-CH₂-Si(O-CH(CH₃)-CH₂)₃N in 1000 ml Toluol (Seccosolv) werden 36 g Triethylamin bei 2°C gegeben. Die Mischung wird für 10 min bei 2-4°C gerührt. Zu der Mischung werden bei einer Temperatur zwischen 2°C und 10°C 49,2 g Benzoesäurechlorid getropft. Nach 60 min Rühren wird die entstandene Suspension für 5 h auf 65°C erwärmt, anschließend abgekühlt und dann filtriert. Der Filterkuchen wird gewaschen, die erhaltenen Filtrate vereinigt und das Lösungsmittel am Rotationsverdampfer entfernt. Man erhält 138 g oranges zähflüssiges Produkt.

### Beispiel 16

### Herstellung von C₇H₁₅-(C=O)-S-CH₂-CH₂-CH₂-Si(O-CH(CH₃)-CH₂)₃N

Zu einer gekühlten Lösung aus 100 g HS-CH₂-CH₂-CH₂-Si(O-CH(CH₃)-CH₂)₃N in 1000 ml Toluol (Seccosolv) werden 35,4 g Triethylamin bei 3°C gegeben. Die Mischung wird für 10 min bei 2-4°C gerührt. Zu der Mischung werden bei einer Temperatur zwischen 2°C und 10°C 56,9 g Oktansäurechlorid getropft. Nach 60 min Rühren wird die entstandene Suspension für 5 h auf 65-70°C erwärmt, anschließend abgekühlt und dann filtriert. Der Filterkuchen wird gewaschen, die erhaltenen Filtrate vereinigt und das Lösungsmittel am Rotationsverdampfer entfernt. Man erhält 150 g oranges zähflüssiges Produkt.

### Beispiel 17

### Herstellung von C₁₁H₂₃-(C=O)-S-CH₂-CH₂-CH₂-Si(O-CH(CH₃)-CH₂)₃N

Zu einer gekühlten Lösung aus 100 g HS-CH₂-CH₂-CH₂-Si(O-CH(CH₃)-CH₂)₃N in 1000 ml Toluol (Seccosolv) werden 35,4 g Triethylamin bei 3°C gegeben. Die Mischung wird für 10 min bei 2-4°C gerührt. Zu der Mischung werden bei einer Temperatur zwischen 2°C und 10°C 76,6 g Dodekansäurechlorid getropft. Nach 60 min Rühren wird die entstandene Suspension für 5 h auf 68-72°C erwärmt, anschließend abgekühlt und dann filtriert. Der Filterkuchen wird gewaschen, die erhaltenen Filtrate vereinigt und das Lösungsmittel am Rotationsverdampfer entfernt. Man erhält 163 g oranges zähflüssiges Produkt.

### Beispiel 18: Gummitechnische Untersuchungen

Die für die Kautschukmischungen verwendete Rezeptur ist in der folgenden Tabelle 5 angegeben. Dabei bedeutet die Einheit phr Gewichtsanteile, bezogen auf 100 Teile des eingesetzten Rohkautschuks. Die erfindungsgemäßen Organosiliciumverbindungen werden equimolar, d.h. nach gleicher Stoffmenge zu der Menge des Silans des Vergleichsbeispiels 1 eingesetzt.

Die Kautschukmischungen werden in einem Innenmischer entsprechend der Mischvorschrift in Tabelle 6 hergestellt. In Tabelle 3 sind die Methoden für die Gummitestung zusammengestellt.

**Tabelle 5:**

| Substanz (Kopplungsagens) | Mischung 6 Vergleichs-bsp. 1 | Mischung 7 Bsp. 11 | Mischung 8 Bsp. 16 | Mischung 9 Bsp. 17 |
|---|---|---|---|---|
| | [phr] | [phr] | [phr] | [phr] |
| **1. Stufe** | | | | |
| Buna VSL 5025-1 | 96 | 96 | 96 | 96 |
| Buna CB 24 | 30 | 30 | 30 | 30 |
| Ultrasil 7000 GR | 80 | 80 | 80 | 80 |
| Kopplungsagens | 7,0 | 10,2 | 10,1 | 11,4 |
| ZnO | 3 | 3 | 3 | 3 |
| Stearinsäure | 2 | 2 | 2 | 2 |
| Naftolen ZD | 10 | 10 | 10 | 10 |
| Vulkanox 4020 | 1,5 | 1,5 | 1,5 | 1,5 |
| Protektor G 3108 | 1 | 1 | 1 | 1 |

| **2. Stufe** | | | | |
|---|---|---|---|---|
| Batch Stufe 1 | | | | |

| **3. Stufe** | | | | |
|---|---|---|---|---|
| Batch Stufe 2 | | | | |
| Vulkacit CZ | 1,5 | 1,5 | 1,5 | 1,5 |
| Perkacit TBzTD | 0,2 | 0,2 | 0,2 | 0,2 |
| Schwefel | 2,1 | 2,1 | 2,1 | 2,1 |

**Tabelle 6**

| Stufe 1 | | |
|---|---|---|
| Einstellungen | | |
| Mischaggregat | | Mischkammer Brabender 350 S |
| Drehzahl | | 80 min⁻¹ |
| Stempeldruck | | 5 bar |
| Leervolumen | | 0,39 L |
| Füllgrad | | 0,68 |
| Durchflußtemp. | | 80 °C |

| Mischvorgang | | |
|---|---|---|
| 0 bis | 1 min | Buna VSL 5025-1 + Buna CB 24 |
| 1 bis | 2 min | 1/2 Kieselsäure, ZnO, Stearinsäure, Naftolen ZD, Kopplungsagens |
| 2 bis | 4 min | 1/2 Kieselsäure, Vulkanox, Protektor |
| 4 bis | 5 min | Mischen |
| | 5 min | Lüften |
| 5 bis | 6 min | Mischen und ausfahren |
| | | |
| Batch-Temp. | | 140-150°C |
| Lagerung | | 24 h bei Raumtemperatur |
| | | |

| Stufe 2 | | |
|---|---|---|
| Einstellunqen | | |
| Mischaggregat | | Wie in Stufe 1 bis auf: |
| Drehzahl | | 90 min⁻¹ |
| Durchflußtemp. | | 90 °C |
| Füllgrad | | 0,66 |

| Mischvorgang | | |
|---|---|---|
| 0 bis | 2 min | Batch Stufe 1 aufbrechen |
| 2 bis | 5 min | Batchtemperatur 145°C durch Drehzahlvariation halten |
| | 5 min | Ausfahren |
| | | |
| Batch-Temp. | | 140-150°C |
| Lagerung | | 4 h bei Raumtemperatur |

| | | |
|---|---|---|
| Stufe 3 | | |
| Einstellungen | | |
| Mischaggregat | | wie in Stufe 1 bis auf |
| Drehzahl | | 40 min⁻¹ |
| Füllgrad | | 0,64 |
| Durchflußtemp. | | 50 °C |

| Mischvorgang | | |
|---|---|---|
| 0 bis | 2 min | Batch Stufe 2, Beschleuniger, Schwefel |
| | | |
| | 2 min | ausfahren und auf Labormischwalzwerk Fell bilden |
| | | (Durchmesser 200 mm, Länge 450 mm, Durchflußtemperatur 50°C) |
| | | |
| | | Homogenisieren: |
| | | 5* links, 5* rechts einschneiden und |
| | | 3* bei weitem Walzenspalt (6 mm) und |
| | | 3* bei engem Walzenspalt (3 mm) |
| | | Fell ausziehen. |
| Batch-Temp. | | < 110°C |

In Tablle 7 sind die Ergebnisse der gummitechnischen Untersuchungen zusammengefaßt.

**Tabelle 7**

| **Rohmischungsdaten** | Einheit | Mischung 6 | Mischung 7 | Mischung 8 | Mischung 9 |
|---|---|---|---|---|---|
| ML 1+4, 3. Stufe | [-] | 130 | 96 | 69 | 65 |

| **Vulkanisatdaten** | Einheit | Mischung 6 | Mischung 7 | Mischung 8 | Mischung 9 |
|---|---|---|---|---|---|
| Einstichtemperatur | [°C] | 129 | 117 | 124 | 122 |
| Permanent Set | [%] | 3,6 | 2,9 | 2,8 | 2,8 |

Wie man anhand der Ergebnisse erkennen kann, zeigen die Mischungen 7 bis 9 mit den erfindungsgemäßen Organosiliciumverbindungen eine niedrigere Viskosität und damit bessere Verarbeitungseigenschaften. Gleichzeitig besitzen sie auch einen geringen Wärmeaufbau und Permanent Set und somit vorteilhafte dynamische Eigenschaften.

### Beispiel 19

### Herstellung von C₇H₁₅-C(O)-S-CH₂-CH₂-CH₂-Si(O-CH₂-CH₂)₃N

In einer Apparatur werden unter Schutzgas bei 25°C 100 g S-[3-(Triethoxysilyl)propyl]octanthioat [CAS-Nr. 220727-26-4], 41 g Triethanolamin (von BASF AG) und 1 g NaOH zusammengegeben und auf 130°C erwärmt. Anschließend wird für 3 h bei 130°C und 50-200 mbar gerührt und das freiwerdende Ethanol abdestilliert. Es werden 125 g Produkt erhalten.

### Beispiel 20

### Herstellung von C₆H₅-C(O)-S-CH₂-CH₂-CH₂-Si(O-CH₂-CH₂)₃N

In einem Kolben unter Schutzgas werden bei 25°C 91 g Cl-CH₂-CH₂-CH₂-Si(O-CH₂-CH₂)₃N, 50 g Thiobenzoesäure und 250 g trockenes DMF zusammengegeben. Zu der Mischung werden 36,5 g Triethylamin getropft und die erhaltene Lösung für 120 min bei Raumtemperatur und anschließend für 240 min bei 140°C gerührt. Es wird abgekühlt und 300 ml trockenes Toluol zugegeben. Der Niederschlag wird durch Filtration abgetrennt, mit Toluol gewaschen und das Filtrat am Rotationsverdampfer, soweit möglich, vom Lösungsmittel befreit. Es werden 142 g eines viskosen, dunkelroten Produktes erhalten.

### Beispiel 21

### Herstellung von C₆H₅-C(O)-S-CH₂-CH₂-CH₂-Si(O-CH₂-CH₂)₃N

In einem Kolben unter Schutzgas werden bei 25°C 91 g Cl-CH₂-CH₂-CH₂-Si(O-CH₂-CH₂)₃N, 50 g Thiobenzoesäure und 300 g trockenes Toluol zusammengegeben. Zu der Mischung werden 36,5 g Triethylamin getropft und die erhaltene Lösung für 120 min bei Raumtemperatur und anschließend für 240 min bei 108°C gerührt. Die Suspension wird abgekühlt, der Niederschlag durch Filtration abgetrennt, mit Toluol gewaschen und das Filtrat am Rotationsverdampfer vom Lösungsmittel befreit. Es werden 127 g eines viskosen, dunkelroten Produktes erhalten.

## Patentansprüche

1. Organosiliciumverbindungen der allgemeinen Formel (I),
Q-[S-G-Si(-O-CX¹X²-CX¹X³-)₃N] (I)
wobei Q gleich
SiX⁴₃₋ₜX⁵ₜ-, mit t = 0,1 oder 2,
Y-C(=O)-Z-C(=O)-, Y-C(=S)-Z-C(=S)-, Y-C (=NR) -Z-C (=NR) - , Y-C (=O) -, Y-C(=S)-, Y-C(=NR)-, Y-S(=O)-, Y-S(=O)₂-, (X⁶)(X⁷)P(=S)-, (X⁶)(X⁷)P(=O)-, X⁸-C(=O)-, R-C(=S)-, R-C(=NR)-, R-S-C(=NR)-, R-S-C (=O) -, R-S-C (=S) -, (X⁹)₂N-C(=O)-, (X⁹) ₂N-C (=S) -, R-NR-C(=NR)-, (X⁸)₂N-C(=O)-, (X⁸)₂N-C(=S)-, (X⁸)HN-C(=O)-, (X⁸)NH-C(=S)-, R-O-C(=O)-, X⁹-O-C (=S) -, R-O-C (=NR) -, R-S (=O) - , R-S(=O)₂-, R-O-S(=O)₂-, R-NR-S(=O)₂-, R-S-S(=O)₂-, R-S-S(=O)-, R-O-S(=O)-, R-NR-S(=O)-, (R-S-)₂P(=O)-, (R-S-)₂P(=S)-, (R-NR-)₂P(=S)-, (R-NR-)₂P(=O)-, R-(R-S-) P (=O) -, R- (R-O-) P (=O) -, R- (R-S-) P (=S) -, R-(R-O-) P (=S) -, R-(R-NR-)P(=O)-, R- (R-NR-) P (=S) -, (R-NR-) (R-S-)P(=O)-, (R-O-)(R-NR-)P(=O)-, (R-O-)(R-S-)P(=O)-, (R-O-)(R-S-)P(=S)-, (R-NR-)(R-S-)P(=S)-, (R-O)(R-NR-)P(=S)-, (R-O-)(Y)P(=O)-, (R-O)(Y)P(=S)-, (R-S-)(Y)P(=O)-, (R-S-)(Y)P(=S)-, (R-NR-)(Y)P(=O)-, (R-NR-)(Y)P(=S)-, R- (Y) P (=O) -, R-(Y)P(=S)-, Y₂P(=O)-, Y₂P(=S)- oder Y₂P (NR) - ist,
R gleich oder verschieden Wasserstoff (H), eine unverzweigte, zyklische oder verzweigte, substituierte oder unsubstituierte, gesättigte oder ungesättigte einbindige (C₁-C₂₄) -Kohlenwasserstoffkette, eine unsubstituierte oder -NH₂, HS-, Cl-, Brsubstituierte (C₆-C₂₄) -Arylgruppe oder eine unsubstituierte oder -NH₂, HS-, Cl-, Brsubstituierte (C₇-C₂₄) -Aralkylgruppe ist,
Y gleich oder verschieden und [-S-G-Si(-O-CX¹X²-CX¹X³-)₃N] ist,
G gleich oder verschieden ist und
für Q gleich C₆H₅-C (=O) -
G eine unverzweigte, zyklische oder verzweigte, substituierte oder unsubstituierte, gesättigte oder ungesättigte zweibindige (C₃-C₃₀)-Kohlenwasserstoffkette , gegebenenfalls können die Kohlenwasserstoffketten ungesättigte Anteile enthalten oder mit diesen substituiert sein, ist, und für alle anderen Q
G eine unverzweigte, zyklische oder verzweigte, substituierte oder unsubstituierte, gesättigte oder ungesättigte zweibindige (C₃-C₂₀)-Kohlenwasserstoffkette, gegebenenfalls können die Kohlenwasserstoffketten ungesättigte Anteile enthalten oder mit diesen substituiert sein, ist,
Z eine unverzweigte, zyklische oder verzweigte, substituierte oder unsubstituierte, gesättigte oder ungesättigte zweibindige (C₁-C₂₄) Kohlenwasserstoffkette, gegebenenfalls können die Kohlenwasserstoffketten ungesättigte Anteile enthalten oder mit diesen substituiert sein, oder eine mit mindestens zwei NH-Gruppen funktionalisierte zweibindige, aliphatische oder aromatische, gesättigte oder ungesättigte Kohlenwasserstoffkette ist,
X¹, X² und X³ jeweils unabhängig voneinander Wasserstoff (-H), (C₁-C₁₆)- Alkyl oder Aryl bedeuten,
X⁴ und X⁵ jeweils unabhängig voneinander Wasserstoff (-H), eine unverzweigte, zyklische oder verzweigte, substituierte oder unsubstituierte, gesättigte oder ungesättigte einbindige (C₁-C₂₄)-Kohlenwasserstoffkette,
eine (C₁-C₁₈) - Alkoxygruppe, eine Arylgruppe, eine Alkylethergruppe O-(CR^{I}₂-CR^{I}₂)-O-Alk oder Alkylpolyethergruppe O-(CR^{I}₂-CR^{I}₂O)_{y}-Alk, mit y 2-25, R^{I} unabhängig voneinander H oder eine Alkylgruppe, Alk eine lineare oder verzweigte, gesättigte oder ungesättigte Alkylkette mit 1-30 Kohlenstoffatomen (C1-C30) ist,
eine Aralkylgruppe,
ein Halogen,
ein Rest Alk-(COO),
oder Y bedeuten,
X⁶ und X⁷ jeweils unabhängig voneinander, Wasserstoff (-H), -OH, -SH, eine unverzweigte, zyklische oder verzweigte, substituierte oder unsubstituierte, gesättigte oder ungesättigte einbindige (C₁-C₂₄) - Kohlenwasserstoffkette,
eine (C₄-C₂₄) - Alkoxygruppe, eine Arylgruppe, eine Alkylethergruppe O-(CR^{I}₂-CR^{I}₂)-O-Alk oder Alkylpolyethergruppe O-(CR^{I}₂-CR^{I}₂O)_{y}-Alk,
eine Aralkylgruppe,
ein Halogen oder
ein Rest Alk-(COO) bedeuten,
X⁸ gleich oder verschieden ist und Wasserstoff (H), eine unverzweigte, zyklische oder verzweigte, substituierte oder unsubstituierte, gesättigte oder ungesättigte einbindige (C₂-C₂₄) Kohlenwasserstoffkette,
eine -NH₂, HS-, Cl-, Br- substituierte (C₅-C₂₄)-Arylgruppe,
eine unsubstituierte (C₆-C₂₄)-Arylgruppe oder eine unsubstituierte oder -NH₂, HS-, Cl-, Brsubstituierte (C₁-C₂₄)-Aralkylgruppe bedeutet,
X⁹ gleich oder verschieden ist und Wasserstoff (H), eine unverzweigte, zyklische oder verzweigte, substituierte oder unsubstituierte, gesättigte oder ungesättigte einbindige (C₄-C₂₄) Kohlenwasserstoffkette,
eine -NH₂, HS-, Cl-, Br- substituierte (C₆-C₂₄)-Arylgruppe,
eine unsubstituierte (C₇-C₂₄) -Arylgruppe oder eine unsubstituierte oder -NH₂, HS-, Cl-, Brsubstituierte (C₇-C₂₄)-Aralkylgruppe bedeutet.

2. Organosiliciumverbindungen gemäß Anspruch 1, **dadurch gekennzeichnet, daß** diese auf einen inerten organischen oder anorganischen Träger aufgezogen beziehungsweise vermischt oder mit einem organischen oder anorganischen Träger vorreagiert sind.

3. Verfahren zur Herstellung der Organosiliciumverbindungen gemäß Anspruch 1, **dadurch gekennzeichnet, daß** man mindestens eine Organosiliciumverbindung der allgemeinen Formel (II),
X¹⁰[S-G-Si(-O-CX¹X²-CX¹X³- )₃N] (II)
wobei R, Y, Z, X⁴, X⁵, X⁶, X⁷, X⁸, X⁹ und t die gleichen Bedeutungen wie in Formel (I) haben und X¹⁰ gleich H, Alkalimetall, Erdalkalimetall oder Ammoniumkation ist, mit mindestens einer Verbindung ausgewählt aus der Gruppe 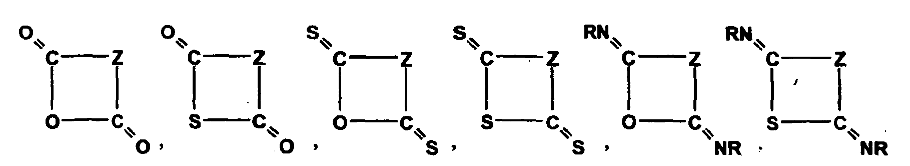 , Y-C(=O)-O-C(=O)-Y, Y-C(=S)-O-C(=S)-Y, Y-C(=NR)-O-C(=NR)-Y, Y-C(=O)-S-C(=O)-Y, Y-C(=S)-S-C(=S)-Y, Y-C(=NR)-S-C(=NR)-Y, Y-S(=O)-O-S(=O)-Y, Y-S(=O)₂-O-S(=O)₂-Y, X⁸-C(=O)-O-C(=O)-X⁸, X⁸-C(=O)-S-C(=O)-X⁸, R-C(=S)-O-C(=O)-R, R-C(=S)-S-C(=O)-R, R-S-C(=O)-O-C(=O)-S-R, R-S-C(=O)-S-C(=O)-S-R, R-S-C(=S)-O-C(=S)-S-R, R-S-C(=S)-S-C(=S)-S-R, R-O-C(=O)-O-C(=O)-OR, R-O-C(=O)-S-C(=O)-OR, R-O-C(=S)-O-C(=S)-OR, R-O-C(=S)-S-C(=S)-OR, R-S(=O)-O-S(=O)-R, R-S(=O)-S-S(=O)-R, R-O-S(=O)-O-S(=O)-O-R, R-O-S(=O)-S-S(=O)-O-R, R-O-S(=S)-O-S(=S)-O-R, R-O-S(=S)-S-S(=S)-O-R, R-S-S(=O)-O-S(=O)-S-R, R-S-S(=O)-S-S(=O)-S-R, R-S-S(=S)-O-S(=S)-S-R, R-S-S(=S)-S-S(=S)-S-R, R-S(=O)₂-O-S(=O)₂-R, R-S(=O)₂-S-S(=O)₂-R, R-S(=S)₂-O-S(=S)₂-R, R-S(=S)₂-S-S(=S)₂-R, R-O-S(=O)₂-O-S(=O)₂-O-R, R-O-S(=O)₂-S-S(=O)₂-O-R_{,} R-O-S(=S)₂-O-S(=S)₂-O-R, R-O-S(=S)₂-S-S(=S)₂-O-R, R-S-S(=O)₂-O-S(=O)₂-S-R, R-S-S(=O)₂-S-S(=O)₂-S-R, R-S-S(=S)₂-O-S(=S)₂-S-R, R-S-S(=S)₂-S-S(=S)₂-S-R, SiX⁴ₛX⁵₂₋ₛ (Y) -S-SiX⁴ₛX⁵₂₋ₛ (Y) , SiX⁴₃₋ₜX⁵ₜ-S-SiX⁴₃₋ₜX⁵ₜ, Y₂SiX⁴-S-SiX⁵Y₂, Y₂P(=O)-S-P(=O)Y₂, Y₂P(=S)-S-P(=S) Y₂,
SiX⁴ ₃₋ₜX⁵t-Halogen, Halogen-C (=O) -Z-C (=O) -Halogen, Halogen-C(=S)-Z-C(=S)-Halogen, Halogen-C(=NR)-Z-C(=NR)-Halogen, Y-C (=O) -Z-C (=O) -Halogen, Y-C (=S) -Z-C(=S)-Halogen, Y-C (=NR) -Z-C (=NR) -Halogen, Halogen-C(=O)-Halogen, Halogen-C(=S)-Halogen, Halogen-C(=NR)-Halogen, Halogen-S(=O)-Halogen, Halogen-S(=O)₂-Halogen, Y-C(=O)-Halogen, Y-C(=S)-Halogen, Y-C(=NR)-Halogen, Y-S(=O)-Halogen, Y-S(=O)₂-Halogen, (X⁶) (X⁷) P (=S) -Halogen, (X⁶)(X⁷)P(=O)-Halogen, X⁸-C(=O)-Halogen, R-C(=S)-Halogen, R-C(=NR)-Halogen, R-S-C(=NR)-Halogen, R-S-C(=O)-Halogen, R-S-C(=S)-Halogen, (X⁹)₂N-C(=O)-Halogen, (X⁹)₂N-C(=S)-Halogen, R-NR-C(=NR)-Halogen, R-O-C(=O)-Halogen, X⁹-O-C(=S)-Halogen, R-O-C(=NR)-Halogen, R-S(=O)-Halogen, R-S(=O)₂-Halogen, R-O-S(=O)₂-Halogen, R-NR-S(=O)₂-Halogen, R-S-S(=O)₂-Halogen, R-S-S(=O)-Halogen, R-O-S(=O)-Halogen, R-NR-S(=O)-Halogen, (R-S-)₂P(=O)-Halogen, (R-S-) ₂P (=S) -Halogen, (R-NR-)₂P(=S)-Halogen, (R-NR-)₂P(=O)-Halogen,R-(R-S-)P(=O)-Halogen, R-(R-O-)P(=O)-Halogen, R-(R-S-)P(=S)-Halogen, R-(R-O-)P(=S)-Halogen, R-(R-NR-)P(=0)-Halogen, R-(R-NR-)P(=S)-Halogen, (R-NR-)(R-S-)P(=0)-Halogen, (R-O-)(R-NR-)P(=O)-Halogen, (R-O-) (R-S-) P (=O) -Halogen, (R-O-) (R-S-)P(=S)-Halogen, (R-NR-)(R-S-)P(=S)-Halogen, (R-O-) (R-NR-) P (=S) -Halogen, (R-O-) P (=O) (O-R)₂, (R-O-) P(=S)(O-R)₂, (R-S-)P(=O)(O-R)₂, (R-S-) P(=S)(O-R)₂, (R-NR-)P(=O)(O-R)₂, (R-NR-)P(=S)(O-R)₂, R-P(=O)(O-R)₂, R-P(=S)(O-R)₂, (R-O-)(Y)P(=O)-Halogen, (R-O-) (Y) P (=S) -Halogen, (R-S-) (Y) P (=O) -Halogen, (R-S-)(Y)P(=S)-Halogen, (R-NR-)(Y)P(=O)-Halogen, (R-NR-)(Y)P(=S)-Halogen, R-(Y)P(=O)-Halogen, R-(Y) P (=S) -Halogen, P(=O) (Halogen) ₃, P (=S) (Halogen)₃, P (NR) (Halogen) ₃, Y-P(=O)(Halogen)₂, Y-P (=S) (Halogen) ₂, Y-P(NR) (Halogen) ₂, Y₂P(=O)-Halogen, Y₂P (=S) -Halogen, Y₂P(NR)-Halogen,
six⁴₃₋ₜX⁵ₜ-O-R, SiX⁴₂- (O-R) ₂, SiX⁵-(O-R)₃, R-O-C(=O)-Z-C (=O) -O-R, R-O-C(=S)-Z-C(=S)-O-R, R-O-C (=NR) -Z-C (=NR) - O-R, Halogen-C(=O)-Z-C(=O)-O-R, Halogen-C(=S)-Z-C(=S)-O-R, Halogen-C(=NR)-Z-C(=NR)-O-R,R-O-C(=O)-Z-C(=O)-O-R, R-O-C(=S)-Z-C(=S)-O-R, R-O-C(=NR)-Z-C(=NR)-O-R, Y-C (=O) -Z-C (=O) -O-R, Y-C(=S)-Z-C(=S)-O-R, Y-C (=NR) -Z-C(=NR)-O-R, Halogen-C(=O)-O-R, Halogen-C(=S)-O-R, Halogen-C(=NR)-O-R, Halogen-S(=O)-O-R, Halogen-S(=O)₂-O-R, R-O-C (=O) -O-R, R-O-C(=S)-O-R, R-O-C (=NR) -O-R, R-O-S(=O)-O-R,R-O-S(=O)₂-O-R, Y-C (=O) -O-R, Y-C(=S)-O-R, Y-C (=NR) -O-R, Y-S(=O)-O-R, Y-S(=O)₂-O-R, (X⁶)(X⁷)P(=S) O-R, (X⁶)(X⁷)P(=O)-O-R, X⁸-C(=O)-O-R, R-C(=S)-O-R, R-C(=NR)-O-R, R-S-C(=NR)-O-R, R-S-C(=O)-O-R,R-S-C(=S)-O-R, (X⁹)₂N-C(=O)-O-R, (X⁹) ₂N-C (=S) -O-R, R-NR-C (=NR) -O-R, X⁹-O-C(=S)-O-R, R-S (=O) -O-R, R-S(=O)₂-O-R, R-NR-S(=O)₂-O-R, R-S-S(=O)₂-O-R, R-S-S(=O)-O-R, R-NR-S(=O)-O-R, (R-NR-)₂P(=S)-O-R, (R-NR-)₂P(=O)-O-R,R-(R-S-)P(=O)-O-R, R-(R-S-)P(=S)-O-R, R-(R-NR-)P(=O)-O-R, R-(R-NR-)P(=S)-O-R, (R-NR-)(R-S-)P(=O)-O-R, (R-O-)(R-NR-)P(=O)-O-R, (R-NR-)(R-S-)P(=S)-O-R, (R-S-)P(=O)(O-R)₂, (R-S-)P(=S)(O-R)₂, (R-NR-) P (=O)(O-R)₂, (R-NR-) P (=S) (O-R) ₂, R-P(=O)(O-R)₂, R-P(=S)(O-R)₂, (R-S-) (Y) P (=O) -O-R, (R-S-)(Y)P(=S)-O-R, (R-NR-)(Y)P(=O)-O-R, (R-NR-)(Y)P(=S)-O-R, R-(Y)P(=O)-O-R, R-(Y)P(=S)-O-R, P(=O)(O-R)₃, P(=S) (O-R) ₃, P (NR) (O-R) ₃, Y-P (=O) (O-R) ₂, Y-P (=S) (O-R) ₂, Y-P(NR)(O-R)₂, Y₂P(=O)-O-R, Y₂P(=S)-O-R oder Y₂P(NR)-O-R, SiX⁴₃₋ₜX⁵ₜ-S-R, SiX⁴₂-(S-R)₂, SiX⁵-(S-R)₃, R-O-C(=O)-Z-C(=O)-S-R, R-O-C(=S)-Z-C(=S)-S-R, R-O-C(=NR)-Z-C(=NR)-S-R, Halogen-C(=O)-Z-C(=O)-S-R, Halogen-C(=S)-Z-C(=S)-S-R, Halogen-C(=NR)-Z-C(=NR)-S-R, R-S-C(=O)-Z-C(=O)-S-R, R-S-C(=S)-Z-C(=S)-S-R, R-S-C(=NR)-Z-C(=NR)-S-R, Y-C(=O)-Z-C(=O)-S-R, Y-C(=S)-Z-C(=S)-S-R, Y-C(=NR)-Z-C(=NR)-S-R, Halogen-C (=O) -S-R, Halogen-C(=S)-S-R, Halogen-C(=NR)-S-R, Halogen-S(=O)-S-R, Halogen-S(=O)₂-S- R-S-C(=O)-S-R, R-S-C(=S)-S-R, R-S-C(=NR)-S-R, R-S-S(=O)-S-R, R-S-S(=O)₂-S-R, Y-C(=O)-S-R, Y-C(=S)-S-R, Y-C(=NR)-S-R, Y-S(=O)-S-R, Y-S (=O) ₂-S-R, (X⁶)(X⁷)P(=S)-S-R, (X⁶)(X⁷)P(=O)-S-R, X⁸-C (=O) -S-R, R-C(=S)-S-R, R-C (=NR) -S-R, (X⁹)₂N-C(=O)-S-R, (X⁹)₂N-C(=S)-S-R, R-NR-C(=NR)-S-R, X⁹-O-C (=S) -S-R, R-S (=O) -S-R, R-S(=O)₂-S-R, R-NR-S(=O)₂-S- R-NR-S(=O)-S-R, (R-NR-)₂P(=S)-S-R, (R-NR-)₂P(=O)-S-R, R- (R-O-) P (=O) - S-R, R-(R-O-)P(=S)-S-R, R-(R-NR-)P(=O)-S-R, R-(R-NR-)P(=S)-S-R, (R-O-) (R-NR-)P(=O)-S-R, (R-O-)(R-NR-)P(=S)-S-R, (R-O-)P(=O)(S-R)₂. (R-O-)P(=S)(S-R)₂, (R-S-)P(=O)(S-R)₂, (R-NR-)P(=O)(S-R)₂, (R-NR-)P(=S)(S-R)₂. R-P(=O)(S-R)₂, R-P(=S)(S-R)₂. (R-O-)(Y)P(=O)-S-R, (R-O-)(Y)P(=S)- S-R, (R-NR-) (Y) P (=O) -S-R, (R-NR-) (Y) P (=S) -S-R, R-(Y)P(=O)-S-R, R- (Y) P (=S) -S-R, P(=O)(S-R)₃, P(=S)(S-R)₃, P(NR)(S-R)₃, Y-P(=O)(S-R)₂, Y-P(=S)(S-R)₂, Y-P (NR) (S-R) ₂, Y₂P(=O)-S-R, Y₂P(=S)-S-R oder Y₂P(NR)-S-R, wobei R, Y, Z, X⁴, X⁵, X⁶, X⁷, X⁸, X⁹ und t die gleichen Bedeutungen wie in Formel (I) haben und s= 1 oder 2 ist,
umsetzt.

4. Verfahren zur Herstellung der Organosiliciumverbindungen gemäß Anspruch 1, **dadurch gekennzeichnet, daß** man eine Verbindung der allgemeinen Formel (IV),
Q(-SH) (IV)
wobei Q die gleiche Bedeutung wie in Formel (I) hat, an eine, mindestens eine Doppelbindung (=) enthaltenden, Organosiliciumverbindung der allgemeinen Formel (V),
CX¹X²=CX²-G¹-Si (O-CX¹X²-CX¹X³)₃N (V)
wobei X¹, X² und X³ die gleichen Bedeutungen wie in Formel (I) haben, addiert, wobei -CX¹X²-CHX²-G¹ oder HCX¹X²-CX²(-)-G¹ gleich G ist.

5. Verfahren zur Herstellung der Organosiliciumverbindungen gemäß Anspruch 1, **dadurch gekennzeichnet, daß** man eine Verbindung der allgemeinen Formel (VI),
Q (-S-X¹⁰) (VI)
wobei Q die gleiche Bedeutung wie in Formel (I) und X¹⁰ die gleiche Bedeutung wie in Formel (II) haben, mit einer Verbindung der allgemeinen Formel (VII),
Halogen-G-Si (O-CX¹X²-CX¹X³) ₃N (VII)
wobei X¹, X², X³ und G die gleichen Bedeutungen wie in Formel (I) haben, umsetzt.

6. Verfahren zur Herstellung der Organosiliciumverbindungen gemäß Anspruch 1, **dadurch gekennzeichnet, daß** man mindestens ein Silan der allgemeinen Formel VIII - XI,
Q-[S-G-Si(Alkoxy)₃] (VIII)
(Alkoxy)₃Si-G-S-C(=O)-Z-C(=O)-S-G-Si(Alkoxy)₃ (IX)
(Alkoxy)₃Si-G-S-C(=S)-Z-C(=S)-S-G-Si(Alkoxy)₃ (X)
(Alkoxy)₃Si-G-S-C(=NR)-Z-C(=NR)-S-G-Si(Alkoxy)₃ (XI)
in denen G, Q, und Z die gleichen Bedeutungen wie in Formel (I) haben und Alkoxy unabhängig voneinander (C₁-C₂₄)-Alkoxy ist,
mit Verbindungen der allgemeinen Formel XII,
(HO-CX¹X²-CX¹X³-)₃N (XII)
in der X¹, X², und X³ die gleichen Bedeutungen wie in Formel (I) haben,
unter Abspaltung von (Alkoxy)-H umsetzt und (Alkoxy)-H vom Reaktionsgemisch abtrennt.

7. Kautschukmischungen, **dadurch gekennzeichnet, daß** sie Kautschuk, Füllstoff, gegebenenfalls weitere Kautschukhilfsmittel, sowie mindestens eine Organosiliciumverbindung gemäß Anspruch 1 oder 2 enthalten.

8. Verwendung von Kautschukmischungen gemäß Anspruch 7 zur Herstellung von Formkörpern.

9. Verwendung von Kautschukmischungen gemäß Anspruch 7 zur Herstellung von Luftreifen, Reifenlaufflächen, gummihaltigen Reifenbestandteilen, Kabelmänteln, Schläuchen, Treibriemen, Förderbändern, Walzenbelägen, Reifen, Schuhsohlen, Dichtungsringen und Dämpfungselementen.

## Claims

1. Organosilicon compounds of the general formula (I),
Q-[S-G-Si (-O-CX¹X²-CX¹X³-)₃N] (I)
in which Q is SiX⁴₃₋ₜX⁵ₜ-, where t = 0, 1 or 2, Y-C(=O)-Z-C(=O)-, Y-C(=S)-Z-C(=S)-, Y-C(=NR)-Z-C(=NR)-, Y-C(=O)-, Y-C(=S)-, Y-C(=NR)-, Y-S (=O) -, Y-S (=O) ₂-, (X⁶)(X⁷)P(=S)-, (X⁶)(X⁷)P(=O)-, X⁸-C(=O)-, R-C(=S)-, R-C(=NR)-, R-S-C (=NR) -, R-S-C(=O)-, R-S-C(=S)-, (X⁹)₂N-C(=O)-, (X⁹) ₂N-C (=S)-R-NR-C (=NR) -, (X⁸)₂N-C(=O)-, (X⁸)₂N-C(=S)-, (X⁸) HN-C (=O) -, (X⁸) NH-C (=S) -, R-O-C (=O) -, X⁹-O-C (=S) -, R-O-C(=NR)-, R-S(=O)-, R-S(=O)₂-, R-O-S(=O)₂-, R-NR-S(=O)₂-, R-S-S(=O)₂-, R-S-S(=O)-, R-O-S(=O)-, R-NR-S(=O)-, (R-S-)₂P(=O)-, (R-S-)₂P(=S)-, (R-NR-)₂P(=S)-, (R-NR-)₂P(=O)-, R-(R-S-)P(=O)-, R-(R-O-)P(=O)-, R- (R-S-) P (=S) -, R-(R-O-)P(=S)-, R-(R-NR-)P(=O)-, R- (R-NR-) P (=S) -, (R-NR-)(R-S-)P(=O)-, (R-O-)(R-NR-)P(=O)-, (R-O-)(R-S-)P(=O)-, (R-O-)(R-S-)P(=S)-, (R-NR-)(R-S-)P(=S)-, (R-O-)(R-NR-P(=S), (R-O-)(Y)P(=O)-, (R-O-) (Y) P (=S) -, (R-S-)(Y)P(=O)-, (R-S-)(Y)P(=S)-, (R-NR-)(Y)P(=O)-, (R-NR-)(Y)P(=S)-, R-(Y)P(=O)-, R-(Y)P(=S)-, Y₂P(=O)-, Y₂P (=S) - or Y₂P (NR) -,
R are identical or different and are hydrogen (H), a straight-chain, cyclic or branched, substituted or unsubstituted, saturated or unsaturated monovalent (C₁-C₂₄) -hydrocarbon chain,
an unsubstituted or -NH₂, HS-, Cl- or Br-substituted (C₆-C₂₄) -aryl group or
an unsubstituted or -NH₂, HS-, Cl- or Br-substituted (C₇-C₂₄)-aralkyl group,
Y are identical or different and are [-S-G-Si(-O-CX¹X²-CX¹X³-)₃N],
G are identical or different and
when Q is C₆H₅-C (=O) -
G is a straight-chain, cyclic or branched, substituted or unsubstituted, saturated or unsaturated divalent (C₃-C₃₀)-hydrocarbon chain; optionally, the hydrocarbon chains may contain unsaturated moieties or may be substituted by them,
and for all other Q
G is a straight-chain, cyclic or branched, substituted or unsubstituted, saturated or unsaturated divalent (C₃-C₂₀)-hydrocarbon chain; optionally, the hydrocarbon chains may contain unsaturated moieties or may be substituted by them,
Z is a straight-chain, cyclic or branched, substituted or unsubstituted, saturated or unsaturated divalent (C₁-C₂₄)-hydrocarbon chain; optionally, the hydrocarbon chains may contain unsaturated moieties or may be substituted by them, or is a divalent, aliphatic or aromatic, saturated or unsaturated hydrocarbon chain functionalized with at least two NH groups,
X¹, X² and X³, in each case independently of one another, denote hydrogen (-H), (C₁-C₁₆) -alkyl or aryl,
X⁴ and X⁵, in each case independently of one another, denote hydrogen (-H), a straight-chain, cyclic or branched, substituted or unsubstituted, saturated or unsaturated monovalent (C₁-C₂₄) -hydrocarbon chain,
a (C₁-C₁₈) -alkoxy group, an aryl group, an alkylether group O- (CR^{I}2- CR^{I}₂) -O-Alk or alkylpolyether group O- (CR^{I}₂- CR^{I}₂O)_{y}-Alk, where y = 2-25, R¹, independently of one another, are H or an alkyl group,
Alk is a linear or branched, saturated or unsaturated alkyl chain having 1-30 carbon atoms (C1-C30),
an aralkyl group,
a halogen,
a radical Alk-(COO),
or Y,
X⁶ and X⁷, in each case independently of one another, denote
hydrogen (-H), -OH, -SH,
a straight-chain, cyclic or branched, substituted or unsubstituted, saturated or unsaturated monovalent (C₁-C₂₄)-hydrocarbon chain,
a (C₄-C₂₄)-alkoxy group, an aryl group, an alkylether group O- (CR^{I}₂- CR^{I}₂) -O-Alk or
alkylpolyether group O- (CR^{I}₂- CR^{I}₂₀) _{y}-Alk,
an aralkyl group,
a halogen or
a radical Alk-(COO),
X⁸ are identical or different and denote hydrogen (H), a straight-chain, cyclic or branched, substituted or unsubstituted, saturated or unsaturated monovalent (C₂-C₂₄) -hydrocarbon chain,
an -NH₂, HS-, Cl-, Br-substituted (C₆-C₂₄) -aryl group, an unsubstituted (C₆-C₂₄) -aryl group or
an unsubstituted or -NH₂, HS-, Cl- or Br-substituted (C₇-C₂₄) -aralkyl group,
X⁹ are identical or different and denote hydrogen (H), a straight-chain, cyclic or branched, substituted or unsubstituted, saturated or unsaturated monovalent (C₄-C₂₄) -hydrocarbon chain,
an -NH₂, HS-, Cl- or Br-substituted (C₆-C₂₄) -aryl group,
an unsubstituted (C₇-C₂₄) -aryl group or
an unsubstituted or -NH₂, HS-, Cl- or Br-substituted (C₇-C₂₄) -aralkyl group.

2. Organosilicon compounds according to Claim 1, **characterized in that** they are applied or mixed to an inert organic or inorganic support or are subjected to preliminary reaction with an organic or inorganic support.

3. Process for the preparation of the organosilicon compounds according to Claim 1, **characterized in that** at least one organosilicon compound of the general formula (II),
X¹⁰ [S-G-Si(-O-CX¹X²-CX¹X³-)₃N] (II)
in which R, Y, Z, X⁴, X⁵, X⁶, X⁷, X⁸, X⁹ and t have the same meanings as in formula (I) and X¹⁰ is H, alkali metal, alkaline earth metal or ammonium cation, is reacted with at least one compound selected from the group consisting of 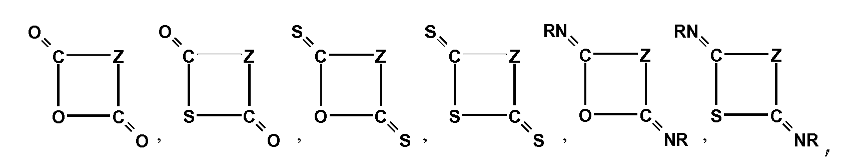 Y-C(=O)-O-C(=O)-Y, Y-C(=S)-O-C(=S)-Y, Y-C(=NR)-O-C(=NR)-Y, Y-C(=O)-S-C(=O)-Y, Y-C (=S) -S-C (=S) -Y, Y-C (=NR) -S-C(=NR)-Y, Y-S(=O)-O-S(=O)-Y, Y-S(=O)₂-O-S(=O)₂-Y, X⁸-C(=O)-O-C(=O)-X⁸, X⁸-C(=O)-S-C(=O)-X⁸, R-C(=S)-O-C(=O)-R, R-C(=S)-S-C(=O)-R, R-S-C(=O)-O-C(=O)-S-R, R-S-C(=O)-S-C(=O)-S-R, R-S-C(=S)-O-C(=S)-S-R, R-S-C(=S)-S-C(=S)-S-R, R-O-C(=O)-O-C(=O)-OR, R-O-C(=O)-S-C(=O)-OR, R-O-C(=S)-O-C(=S)-OR, R-0-C(=S)-S-C(=S)-OR, R-S (=O)-O-S (=O)-R, R-S(=O)-S-S(=O)-R, R-O-S (=O)-O-S (=O)-O-R, R-O-S(=O)-S-S(=O)-O-R, R-O-S(=S)-O-S(=S)-O-R, R-O-S(=S)-S-S(=S)-O-R, R-S-S(=O)-O-S(=O)-S-R, R-S-S(=O)-S-S(=O)-S-R, R-S-S(=S)-O-S(=S)-S-R, R-S-S(=S)-S-S(=S)-S-R, R-S(=O)₂-O-S(=O)₂-R, R-S (=O)₂-S-S (=O)₂-R, R-S(=S)₂-O-S(=S)₂-R, R-S(=S)₂-S-S(=S)₂-R, R-O-S (=O) *₂-O-S* (=O) ₂-O-R, R-O-S(=O) ₂-S-S(=O)₂-O-R, R-O-S(=S)₂-O-S(=S)₂-O-R, R-O-S(=S)₂-S-S(=S)₂-O-R, R-S-S(=O)₂-O-S(=O)₂-S-R, R-S-S(=O)₂-S-S(=O)₂-S-R, R-S-S(=S)₂-O-S(=S)₂-S-R, R-S-S(=S)₂-S-S(=S)₂-S-R, SiX⁴ₛX⁵₂₋ₛ (Y) -S-SiX⁴ₛX⁵₂₋ₛ (Y), SiX⁴₃₋ₜX⁵ₜ-S-SiX⁴₃₋ₜX⁵ₜ, Y₂SiX⁴-S-SiX⁵Y₂, Y₂P (=O) -S-P (=O) Y₂, Y₂P(=S)-S-P(=S)Y₂,
SiX⁴₃₋ₜX^{s}ₜ-halogen, halogen-C(=) -Z-C(=) -halogen, halogen-C(=S)-Z-C(=S)-halogen, halogen-C(=NR)-Z-C(=NR)-halogen, Y-C(=) -Z-C(=) -halogen, Y-C (=S) -2-C (=S) -halogen, Y-C(=NR)-Z-C(=NR)-halogen, halogen-C(=O)-halogen, halogen-C(=S)-halogen, halogen-C(=NR)-halogen, halogen-S(=O)-halogen, halogen-S(=O)₂-halogen, Y-C(=O)-halogen, Y-C(=S)-halogen, Y-C(=NR)-halogen, Y-S(=O)-halogen, Y-S(=O)₂-halogen, (X⁶) (X⁷) P (=S) -halogen, (X⁶) (X⁷) P(=O) -halogen, X⁸-C (=O) -halogen, R-C (=S) -halogen, R-C(=NR)-halogen, R-S-C(=NR)-halogen, R-S-C(=O)-halogen, R-S-C (=S) -halogen, (X⁹) ₂N-C (=O) -halogen, (X⁹) ₂N-C (=S) - halogen, R-NR-C(=NR)-halogen, R-O-C(=O)-halogen, X⁹-O-C(=S)-halogen, R-O-C(=NR)-halogen, R-S(=O)-halogen, R-S(=O)₂-halogen, R-O-S(=O)₂-halogen, R-NR-S (=O) ₂*-* halogen, R-S-S(=O)₂-halogen, R-S-S(=O)-halogen, R-O-S(=O)-halogen, R-NR-S(=O)-halogen, (R-S-)₂P(=O)-halogen, (R-S-)₂P(=S)-halogen, (R-NR-)₂P(=S)-halogen, (R-NR-)₂P(=O)-halogen, R-(R-S-)P(=O)-halogen, R- (R-O-) P (=O) -halogen, R-(R-S-)P(=S)-halogen, R- (R-O-) P (=S) -halogen, R-(R-NR-)P(=O)-halogen,. R- (R-NR-) P (=S) -halogen, (R-NR-)(R-S-)P(=O)-halogen, (R-O-)(R-NR-)P(=O)-halogen, (R-O-)(R-S-)P(=O)-halogen, (R-O-) (R-S-) P (=S) -halogen, (R-NR-)(R-S-)P(=S)-halogen, (R-O-)(R-NR-)P(=S)-halogen, (R-O-)P(=O)(O-R)₂, (R-O-)P(=S) (O-R) ₂, (R-S-) P (=O) (O-R)₂, (R-S-) P (=S) (O-R) ₂, (R-NR-) P (=O) (O-R) ₂, (R-NR-) P (=S) (O-R) ₂, R-P(=O)(O-R)₂, R-P (=S) (O-R) ₂, (R-O-) (Y) P (=O) -halogen, (R-0-) (Y) P (=S) -halogen, (R-S-) (Y) P (=O) -halogen, (R-S-) (Y) P (=S) -halogen, (R-NR-)(Y)P(=O)-halogen, (R-NR-) (Y) P (=S) -halogen, R-(Y)P(=O)-halogen, R- (Y) P (=S) -halogen, P (=O) (halogen) ₃, P (=S) (halogen)₃, P (NR) (halogen) ₃, Y-P (=O) (halogen) ₂, Y-P (=S) (halogen)₂, Y-P (NR) (halogen) ₂, Y₂P (=O) -halogen, Y₂P (=S) -halogen, Y₂P (NR) -halogen,
SiX⁴₃₋ₜX⁵ₜ-O-R, SiX⁴₂-(O-R)₂, Six⁵- (O-R)₃, R-O-C(=O)-Z-C(=O)-O-R, R-O-C(=S)-Z-C(=S)-O-R, R-O-C(=NR)-Z-C(=NR)-O-R, halogen-C(=) -Z-C(=) -O-R, halogen-C(=S)-2-C(=S)-O-R, halogen-C(=NR)-Z-C(=NR)-O-R, R-O-C(=O)-Z-C(=O)-O-R, R-O-C(=S)-Z-C(=S)-O-R, R-O-C(=NR)-Z-C(=NR)-O-R, Y-C(=O)-Z-C(=O)-O-R, Y-C(=S)-Z-C(=S)-O-R, Y-C(=NR)-Z-C(=NR)-O-R, halogen-C(=O)-O-R, halogen-C(=S)-O-R, halogen-C(=NR)-OR, halogen-S(=O)-O-R, halogen-S (=O)₂-O-R, R-O-C(=O)-O-R, R-O-C(=S)-O-R, R-O-C(=NR)-O-R, R-O-S(=O)-O-R, R-O-S(=O)₂-O-R, Y-C(=O)-O-R, Y-C(=S)-O-R, Y-C(=NR)-O-R, Y-S(=O)-OR, Y-S (=O) ₂-O-R, (X⁶) (X⁷) P (=S) -O-R, (X⁶)(X⁷)P(=O)-O-R, X⁸-C(=O)-O-R, R-C(=S)-O-R, R-C(=NR)-O-R, R-S-C(=NR)-O-R, R-S-C(=O)-O-R, R-S-C(=S)-O-R, (X⁹) ₂N-C (=O) -O-R, (X⁹) ₂N-C(=S)-O-R, R-NR-C(=NR)-O-R, X⁹-O-C (=S) -O-R, R-S(=O)-O-R, R-S(=O)₂-O-R, R-NR-S(=O)₂-O-R, R-S-S(=O)₂-O-R, R-S-S(=O)-O-R, R-NR-S(=O)-O-R, (R-NR-)₂P(=S)-O-R, (R-NR-)₂P(=O)-OR, R-(R-S-)P(=O)-O-R, R-(R-S-)P(=S)-O-R, R-(R-NR-)P(=O)-O-R, R-(R-NR-)P(=S)-O-R, (R-NR-)(R-S-)P(=O)-O-R, (R-O-)(R-NR-)P(=O)-O-R, (R-NR-) (R-S-) P (=S) -O-R, (R-S-)P(=O)(O-R)₂, (R-S-)P(=S)(O-R)₂, (R-NR-)P(=O)(O-R)₂, (R-NR-)P(=S)(O-R)₂, R-P(=O)(O-R)₂, R-P (=S) (O-R) ₂, (R-S-)(Y)P(=O)-O-R, (R-S-)(Y)P(=S)-O-R, (R-NR-)(Y)P(=O)-O-R, (R-NR-)(Y)P(=S)-O-R, R-(Y)P(=) -O-R, R-(Y)P(=S)-O-R, P(=O)(O-R)₃, P (=S) (O-R) ₃, P (NR) (O-R) ₃, Y-P(=O)(O-R)₂, Y-P (=S) (O-R) ₂, Y-P (NR) (O-R) ₂, Y₂P(=O)-O-R, Y₂P(=S)-O-R or Y₂P (NR) -O-R, SiX⁴ ₃₋ₜX⁵ₜ-S-R, SiX⁴₂- (S-R) ₂, Six⁵- (S-R) ₃, R-O-C(=O)-Z-C(=O)-S-R, R-O-C(=S)-Z-C(=S)-S-R, R-O-C(=NR)-Z-C(=NR)-S-R, halogen-C(=O)-Z-C(=O)-S-R, halogen-C(=S)-2-C(=S)-S-R, halogen-C (=NR) -2-C (=NR) -S-R, R-S-C(=O)-Z-C(=O)-S-R, R-S-C (=S) -2-C (=S) -S-R, R-S-C (=NR) -2-C (=NR) -S-R, Y-C(=O)-Z-C(=O)-S-R, Y-C (=S ) -2-C (=S ) -S-R, Y-C (=NR) -2-C (=NR) -S-R, halogen-C(=O)-S-R, halogen-C(=S)-S-R, halogen-C(=NR)-S-R, halogen-S(=O)-S-R, halogen-S (=O) ₂-S-R, R-S-C(=O)-S-R, R-S-C(=S)-S-R, R-S-C(=NR)-S-R, R-S-S(=O)-S-R, R-S-S (=O) ₂-S-R, Y-C(=O)-S-R, Y-C(=S)-S-R, Y-C(=NR)-S-R, Y-S (=O) -S-R, Y-S (=O) ₂-S-R, (X⁶) (X⁷) P (=S) -S-R, (X⁶) (X⁷) P (=O) -S-R, X⁸-C (=O) -S-R, R-C (=S) -S-R, R-C(=NR)-S-R, (X⁹) ₂N-C (=O) -S-R, (X⁹) ₂N-C (=S) -S-R, R-NR-C (=NR) -S-R, X⁹-O-C(=S)-S-R, R-S(=O)-S-R, R-S(=O)₂-S-R, R-NR-S(=O)₂-S-R, R-NR-S(=O)-S-R, (R-NR-)₂P(=S)-S-R, (R-NR-)₂P(=O)-S-R, R-(R-O-)P(=O)-S-R, R-(R-O-)P(=S)-S-R, R-(R-NR-)P(=O)-S-R, R-(R-NR-)P(=S)-S-R, (R-O-)(R-NR-)P(=O)-S-R, (R-O-)(R-NR-)P(=S)-S-R, (R-O-)P(=O)(S-R)₂, (R-O-)P(=S)(S-R)₂, (R-S-)P(=O)(S-R)₂, (R-NR-)P(=O)(S-R)₂, (R-NR-)P(=S)(S-R)₂, R-P(=O)(S-R)₂, R-P(=S)(S-R)₂, (R-O-)(Y)P(=O)-S-R, (R-O-) (Y) P (=S) -S-R, (R-NR-)(Y)P(=O)-S-R, (R-NR-)(Y)P(=S)-S-R, R-(Y)P(=O)-S-R, R-(Y)P(=S)-S-R, P(=O)(S-R)₃, P(=S)(S-R)₃, P(NR)(S-R)₃, Y-P(=O)(S-R)₂, Y-P(=S)(S-R)₂, Y-P(NR)(S-R)₂, Y₂P(=O)-S-R, Y₂P (=S) -S-R or Y₂P (NR) -S-R, in which R, Y, Z, X⁴, X⁵, X⁶, X⁷, X⁸, X⁹ and t have the same meanings as in formula (I) and s is 1 or 2.

4. Process for the preparation of the organosilicon compounds according to Claim 1, **characterized in that** a compound of the general formula (IV),
Q (-SH) (IV)
in which Q has the same meaning as in formula (I), is subjected to an addition reaction with an organosilicon compound containing at least one double bond (=) and of the general formula (V),
CX¹X²=CX²-G¹-Si(O-CX¹X²-CX¹X³)₃N (V)
in which X¹, X² and X³ have the same meanings as in formula (I), -CX¹X²-CHX²-G¹ or HCX¹X²-CX²(-)-G¹ being G.

5. Process for the preparation of the organosilicon compounds according to Claim 1, **characterized in that** a compound of the general formula (VI),
Q(-S-X¹⁰) (VI)
in which Q has the same meaning as in formula (I) and X¹⁰ has the same meaning as in formula (II), is reacted with a compound of the general formula (VII),
halogen-G-Si (O-CX¹X²-CX¹X³)₃N (VII)
in which X¹, X², X³ and G have the same meanings as in formula (I).

6. Process for the preparation of the organosilicon compounds according to Claim 1, **characterized in that** at least one silane of the general formulae VIII - XI,
Q- [S-G-Si (alkoxy) ₃] (VIII)
(alkoxy)₃Si-G-S-C(=O)-Z-C(=O)-S-G-Si(alkoxy)₃ (IX)
(alkoxy)₃Si-G-S-C(=S)-Z-C(=S)-S-G-Si(alkoxy)₃ (X)
(alkoxy)₃Si-G-S-C(=NR)-Z-C(=NR)-S-G-Si(alkoxy)₃ (XI)
in which G, Q, and Z have the same meanings as in formula (I) and alkoxy, independently of one another, are (C₁-C₂₄) -alkoxy,
is reacted with compounds of the general formula XII,
(HO-CX¹X²XCX¹X³-)₃N (XII)
in which X¹, X², and X³ have the same meanings as in formula (I),
with elimination of (alkoxy)-H, and (alkoxy)-H is separated from the reaction mixture.

7. Rubber blends, **characterized in that** they contain rubber, filler, optionally further rubber auxiliaries, and at least one organosilicon compound according to Claim 1 or 2.

8. Use of rubber blends according to Claim 7 for the production of mouldings.

9. Use of rubber blends according to Claim 7 for the production of pneumatic tyres, tyre treads, rubber-containing tyre constituents, cable sheaths, hoses, drive belts, conveyor belts, roll coverings, tyres, shoe soles, sealing rings and damping elements.

## Revendications

1. Composés organosiliciés de formule générale (I),
Q-[S-G-Si(-O-CX¹X²-CX¹X³-)₃N] (I)
dans laquelle Q représente SiX⁴₃₋ₜX⁵ₜ-, où t = 0, 1 ou 2, Y-C (=O) Z-C (=O) -, Y-C (=S) - Z-C (=S) -, Y-C(=NR)-Z-C(=NR)-, Y-C(=O)-, Y-C(=S)-, Y-C(=NR)-, Y-S(=O)-, Y-S(=O)₂-, (X⁶)(X⁷)P(=S)-, (X⁶)(X⁷)P(=O)-, X⁸-C(=O)-, R-C(=S)-, R-C(=NR)-, R-S-C(=NR)-, R-S-C(=O)-, R-S-C(=S)-, (X⁹)₂N-C(=O)-, (X⁹)₂N-C(=S)-, R-NR-C(=NR)-, (X⁸2N-C(=O)-, (X⁸)₂N-C(=S)-, (X⁸)HN-C(=O)-, (X⁸)HN-C(=S)-, R-O-C(=O)-, X⁹-O-C(=S)-, R-O-C(=NR)-, R-S(=O)-, R-S(=O)₂-, R-O-S(=O)₂-, R-NR-S(=O)₂-, R-S-S(=O)₂-, R-S-S(=O)-, R-O-S(=O)-, R-NR-S(=O)-, (R-S-)₂P(=O)-, (R-S-)₂P(=S)-, (R-NR-)₂P(=S)-, (R-NR-)₂P(=O)-, R-(R-S-)P(=O)-, R-(R-O-)P(=O)-, R-(R-S-)P(=S)-, R-(R-O-)P(=S)-, R-(R-NR-)P(=O)-, R-(R-NR-)P(=S)-, (R-NR-)(R-S-)P(=O)-, (R-O-)(R-NR-)P(=O)-, (R-O-)(R-S-)P(=O)-, (R-O-)(R-S-)P(=S)-, (R-NR-)(R-S-)P(=S)-, (R-O-)(R-NR-)P(=S)-, (R-O-)(Y)P(=O)-, (R-O-)(Y)P(=S)-, (R-S-)(Y)P(=O)-, (R-S-)(Y)P(=S)-, (R-NR-)(Y)P(=O)-, (R-NR-)(Y)P(=S)-, R-(Y)P(=O)-, R-(Y)P(=S)-, Y₂P(=O)-, Y₂P(=S)- ou Y₂P(NR)-,
R, le même ou différent, est un atome d'hydrogène (H), une chaîne hydrocarbonée en C₁-C₂₄ à une liaison, non ramifiée, cyclique ou ramifiée, saturée ou insaturée, substituée ou non substituée,
un groupe aryle en C₆-C₂₄ non substitué ou substitué par -NH₂, HS-, Cl-, Br- ou
un groupe aralkyle en C₇-C₂₄ non substitué ou substitué par -NH₂, HS-, Cl-, Br-,
Y est le même ou différent et représente
[-S-G-Si(-O-CX¹X²-CX¹X ³-)₃N),
G est le même ou différent et
lorsque Q représente le groupe C₆H₅-C(=O)-
G est une chaîne hydrocarbonée en C₃-C₃₀ à deux liaisons, non ramifiée, cyclique ou ramifiée, saturée ou insaturée, substituée ou non substituée, les chaînes hydrocarbonées peuvent éventuellement contenir des fragments insaturés ou être substituées par de tels fragments,
ou pour tous les autres Q
G est une chaîne hydrocarbonée en C₃-C₂₀ à deux liaisons, non ramifiée, cyclique ou ramifiée, saturée ou insaturée, substituée ou non substituée, les chaînes hydrocarbonées peuvent éventuellement contenir des fragments insaturés ou être substituées par de tels fragments,
Z est une chaîne hydrocarbonée en C₁-C₂₄ à deux liaisons, non ramifiée, cyclique ou ramifiée, saturée ou insaturée, substituée ou non substituée, les chaînes hydrocarbonées peuvent éventuellement contenir des fragments insaturés ou être substituées par de tels fragments, ou est une chaîne hydrocarbonée aliphatique ou aromatique à deux liaisons, saturée ou insaturée, fonctionnalisée avec au moins deux groupes NH,
X¹, X² et X³ représentent, chacun indépendamment, un atome d'hydrogène (-H), un groupe aryle ou alkyle en C₁-C₁₆,
X⁴ et X⁵ représentent chacun, indépendamment l'un de l'autre, un atome d'hydrogène (-H), une chaîne hydrocarbonée en C₁-C₂₄ à une liaison, non ramifiée, cyclique ou ramifiée, saturée ou insaturée, substituée ou non substituée,
un groupe alcoxy en C₁-C₁₈, un groupe aryle, un groupe alkyléther O-(CR^{I}₂-CR^{I}₂)-O-Alk ou alkylpolyéther O-(CR^{I}₂-CR^{I}₂O)_{y}-Alk, où y = 2-25,
R^{I} est, chaque fois indépendamment, H ou un groupe alkyle,
Alk est une chaîne alkyle linéaire ou ramifiée, saturée ou insaturée, ayant de 1 à 30 atomes de carbone (en C₁-C₃₀),
ou représentent un groupe aralkyle,
un atome d'halogène,
un radical Alk-(COO),
ou Y,
X⁶ et X⁷ représentent chacun, indépendamment l'un de l'autre,
un atome d'hydrogène (-H), -OH, -SH,
une chaîne hydrocarbonée en C₁-C₂₄ à une liaison, non ramifiée, cyclique ou ramifiée, saturée ou insaturée, substituée ou non substituée,
un groupe alcoxy en C₄-C₂₄, un groupe aryle, un groupe alkyléther O-(CR^{I}₂-CR^{I}₂)-O-Alk ou alkylpolyéther O-(CR^{I}₂-CR^{I}₂O)_{y}-Alk,
un groupe aralkyle,
un atome d'halogène ou
un radical Alk-(COO),
X⁸ est le même ou différent et représente un atome d'hydrogène (H),
une chaîne hydrocarbonée en C₂-C₂₄ à une liaison, non ramifiée, cyclique ou ramifiée, saturée ou insaturée, substituée ou non substituée,
un groupe aryle en C₆-C₂₄ substitué par -NH₂, HS-, Cl-, Br-,
un groupe aryle en C₆-C₂₄ non substitué ou
un groupe aralkyle en C₇-C₂₄ non substitué ou substitué par -NH₂, HS-, Cl-, Br-,
X⁹ est le même ou différent et représente un atome d'hydrogène (H),
une chaîne hydrocarbonée en C₄-C₂₄ à une liaison, non ramifiée, cyclique ou ramifiée, saturée ou insaturée, substituée ou non substituée,
un groupe aryle en C₆-C₂₄ substitué par -NH₂, HS-, Cl-, Br-,
un groupe aryle en C₇-C₂₄ non substitué ou
un groupe aralkyle en C₇-C₂₄ non substitué ou substitué par -NH₂, HS-, Cl-, Br-.

2. Composés organosiliciés selon la revendication 1, **caractérisés en ce qu'**ils sont fixés sur un support organique ou inorganique inerte ou mélangés ou ont préalablement réagi avec un support organique ou inorganique.

3. Procédé pour la préparation des composés organosiliciés selon la revendication 1, **caractérisé en ce qu'**on fait réagir au moins un composé organosilicié de formule générale (II),
X¹⁰[S-G-Si(-O-CX¹X²-CX²X³-)₃N] (II)
dans laquelle R, Y, Z, X⁴, X⁵, X⁶, X⁷, X⁸, X⁹ et t ont les mêmes significations que dans la formule (I) et X¹⁰ représente H, un métal alcalin, un métal alcalino-terreux ou un cation ammonium, avec au moins un composé choisi dans l'ensemble 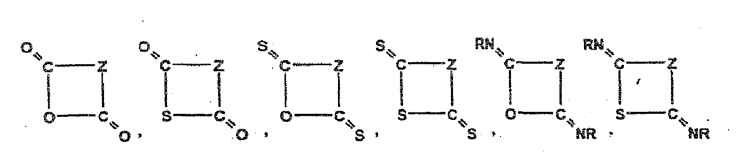 Y-C(=O)-O-C(=O)-Y, Y-C(=S)-O-C(=S)-Y, Y-C(=NR)-O-C(=NR)-Y, Y-C(=O)-S-C(=O)-Y, Y-C(=S)-S-C(=S)-Y, Y-C(=NR)-S-C(=NR)-Y, Y-S(=O)-O-S(=O)-Y, Y-S(=O)₂-O-S(=O)₂-Y, X⁸-C(=O)-O-C(=O)-X⁸, X⁸-C(=O)-S-C(=O)-X⁸, R-C(=S)-O-C(=O)-R, R-C(=S)-S-C(=O)-R, R-S-C(=O)-O-C(=O)-S-R, R-S-C(=O)-S-C(=O)-S-R, R-S-C(=S)-O-C(=S)-S-R, R-S-C(=S)-S-C(=S)-S-R, R-O-C(=O)-O-C(=O)-OR, R-O-C(=O)-S-C(=O)-OR, R-O-C(=S)-O-C(=S)-OR, R-O-C(=S)-S-C(=S)-OR, R-S(=O)-O-S(=O)-R, R-S(=O)-S-S(=O)-R, R-O-S(=O)-O-S(=O)-O-R, R-O-S(=)-S-S(=O)-O-R, R-O-S(=S)-O-S(=S)-O-R, R-O-S(=S)-S-S(=S)-O-R, R-S-S(=O)-O-S(=O)-S-R, R-S-S(=O)-S-S(=O)-S-R, R-S-S(=S)-O-S(=S)-S-R, R-S-S(=S)-S-S(=S)-S-R, R-S(=O)₂-O-S(=O)₂-R, R-S(=O)₂-S-S(=O)₂-R, R-S(=S)₂-O-S(=S)₂-R, R-S(=S)₂-S-S(=S)₂-R, R-O-S(=O)₂-O-S(=O)₂-O-R, R-O-S(=O)₂-S-S(=O)₂-O-R, R-O-S(=S)₂-O-S(=S)₂-O-R, R-O-S(=S)₂-S-S(=S)₂-O-R, R-S-S(=O)₂-O-S(=O)₂-S-R, R-S-S(=O)₂-S-S(=O)₂-S-R, R-S-S(=S)₂-O-S(=S)₂-S-R, R-S-S(=S)₂-S-S(=S)₂-S-R, SiX⁴ₛX⁵₂₋ₛ(Y)-S-SiX⁴ₛX⁵₂₋ₛ(Y), SiX⁴₃₋ₜX⁵ₜ₋S-SiX⁴₃₋ₜX⁵ₜ, Y₂SiX⁴-S-SiX⁵Y₂, Y₂P(=O)-S-P(=O)Y₂, Y₂P(=S)-S-P(=S)Y₂,
SiX⁴₃₋ₜX⁵ₜ-halogène, halogène-C(=O)-2-C(=O)-halogène, halogène-C(=S)-Z-C(=S)-halogène, halogène-C(=NR)-2-C(=NR)-halogène, Y-C(=O)-Z-C(=O)-halogène, Y-C(=S)-Z-C(=S)-halogène, Y-C(=NR)-Z-C(=NR)-halogène, halogène-C(=O)-halogène, halogène-C(=S)-halogène, halogène-C(=NR)-halogène, halogène-S(=O)-halogène, halogène-S(=O)₂-halogène, Y-C(=O)-halogène, Y-C(=S)-halogène, Y-C(=NR)-halogène, Y-S(=O)-halogène, Y-S(=O)₂-halogène, (X⁶)(X⁷)P(=S)-halogène, (X⁶)(X⁷)P(=O)-halogène, X⁸-C(=O)-halogène, R-C(=S)-halogène, R-C(=NR)-halogène, R-S-C(=NR)-halogène, R-S-C(=O)-halogène, R-S-C(=S)-halogène, (X⁹) ₂N-C (=O) -halogène, (X⁹) ₂N-C (=S) -halogène, R-NR-C(=NR)-halogène, R-O-C(=O)-halogène, X⁹-O-C(=S)-halogène, R-0-C(=NR)-halogène, R-S(=O)-halogène, R-S(=O)₂-halogène, R-O-S(=O)₂-halogène, R-NR-S(=O)₂-halogène, R-S-S(=O)₂-halogène, R-S-S(=O)-halogène, R-O-S(=O)-halogène, R-NR-S(=O)-halogène, (R-S-)₂P(=O)-halogène, (R-S-)₂P(=S)-halogène, (R-NR-)₂P(=S)-halogène, (R-NR-)₂P(=O)-halogène, R-(R-S-)P(=O)-halogène, R-(R-O-)P(=O)-halogène, R-(R-S-)P(=S)-halogène, R-(R-O-)P(=S)-halogène, R-(R-NR-)P(=O)-halogène, R-(R-NR-)P(=S)-halogène, (R-NR-)(R-S-)P(=O)-halogène, (R-O-)(R-NR-)P(=O)-halogène, (R-O-)(R-S-)P(=O)-halogène, (R-O-)(R-S-)P(=S)-halogène, (R-NR-)(R-S-)P(=S)-halogène, (R-O-)(R-NR-)P(=S)-halogène, (R-O-)P(=O)(O-R)₂, (R-O-)P(=S)(O-R)₂, (R-S-)P(=O)(O-R)₂, (R-S-)P(=S)(O-R)₂, (R-NR-)P(=O)(O-R)₂, (R-NR-)P(=S)(O-R)₂, R-P(=O)(O-R)₂, R-P(=S)(O-R)₂, (R-O-)(Y)P(=O)-halogène, (R-O-)(Y)P(=S)-halogène, (R-S-)(Y)P(=O)-halogène, (R-S-)(Y)P(=S)-halogène, (R-NR-)(Y)P(=O)-halogène, (R-NR-)(Y)P(=S)-halogène, R-(Y)P(=O)-halogène, R-(Y)P(=S)-halogène, P(=O)(halogène)₃, P(=S)(halogène)₃, P(NR)(halogène)₃, Y-P(=O)(halogène)₂, Y-P(=S)(halogène)₂, Y-P(NR)(halogène)₂, Y₂P(=O)-halogène, Y₂P(=S)-halogène, Y₂P(NR)-halogène, SiX⁴₃₋ₜX⁵t-O-R, SiX⁴₂-(O-R)₂, SiX⁵- (O-R) ₃, R-O-C(=O)-Z-C(=O)-O-R, R-O-C(=S)-Z-C(=S)-O-R, R-O-C(=NR)-Z-C(=NR)-O-R, halogène-C(=O)-Z-C(=O)-O-R, halogène-C(=S)-Z-C(=S)-O-R, halogène-C(=NR)-Z-C(=NR)-O-R, R-O-C(=O)-Z-C(=O)-O-R, R-O-C(=S)-Z-C(=S)-O-R, R-O-C(=NR)-Z-C(=NR)-O-R, Y-C(=O)-Z-C(=O)-O-R, Y-C(=S)-Z-C=S)-O-R, Y-C(=NR)-Z-C(=NR)-O-R, halogène-C(=O)-O-R, halogène-C(=S)-O-R, halogène-C(=NR)-OR, halogène-S(=O)-O-R, halogène-S(=O)₂-O-R, R-O-C(=O)-O-R, R-O-C(=S)-O-R, R-O-C(=NR)-O-R, R-O-S(=O)-O-R, R-O-S(=O)₂-O-R, Y-C(=O)-O-R, Y-C(=S)-O-R, Y-C(=NR)-O-R, Y-S(=O)-O-R, Y-S(=O)₂-O-R, (X⁶)(X⁷)P(=S)-O-R, (X⁶)(X⁷)P(=O)-O-R, X⁸-C(=O)-O-R, R-C(=S)-O-R, R-C(=NR)-O-R, R-S-C(=NR)-O-R, R-S-C(=O)-O-R, R-S-C(=S)-O-R, (X⁹)₂N-C(=O)-O-R, (X⁹)₂N-C(=S)-O-R, R-NR-C(=NR)-O-R, X⁹-O-C(=S)-O-R, R-S(=O)-O-R, R-S(=O)₂-O-R, R-NR-S(=O)₂-O-R, R-S-S(=O)₂-O-R, R-S-S(=O)-O-R, R-NR-S(=O)-O-R, (R-NR-)₂P(=S)-O-R, (R-NR-)₂P(=O)-O-R, R-(R-S-)P(=O)-O-R, R-(R-S-)P(=S)-O-R, R-(R-NR-)P(=O)-O-R, R-(R-NR-)P(=S)-O-R, (R-NR-)(R-S-)P(=O)-O-R, (R-O-)(R-NR-)P(=O)-O-R, (R-NR-)(R-S-)P(=S)-O-R, (R-S-)P(=O)(O-R)₂, (R-S-)P(=S)(O-R)₂, (R-NR-)P(=O)(O-R)₂, (R-NR-)P(=S)(O-R)₂, R-P(=O)(O-R)₂, R-P(=S)(O-R)₂, (R-S-)(Y)P(=O)-O-R, (R-S-)(Y)P(=S)-O-R, (R-NR-)(Y)P(=O)-O-R, (R-NR-)(Y)P(=S)-O-R, R-(Y)P(=O)-O-R, R-(Y)P(=S)-O-R, P(=O)(O-R)₃, P(=S)(O-R), P(NR)(O-R), Y-P(=O)(O-R)₂, Y-P(=S)(O-R)₂, Y-P(NR)(O-R)₂, Y₂P(=O)-O-R, Y₂P(=S)-O-R ou Y₂P(NR)-O-R, SiX⁴₃₋ₜX⁵ₜ-S-R, SiX⁴2-(S-R)₂, SiX⁵-(S-R)₃, R-O-C(=O)-Z-C(=O)-S-R, R-O-C(=S)-2-C(=S)-S-R, R-O-C(=NR)-Z-C(=NR)-S-R, halogène-C(=O)-Z-C(=O)-S-R, halogène-C(=S)-Z-C(=S)-S-R, halogène-C (=NR) -2-C (=NR) -S-R, R-S-C(=O)-Z-C(=O)-S-R, R-S-C (=S) -Z-C (=S) -S-R, R-S-C (=NR) -Z-C (=NR) -S-R, Y-C(=O)-Z-C(=O)-S-R, Y-C (=S) -Z-C (=S) -S-R, Y-C (=NR) -Z-C (=NR) -S-R, halogène-C(=O)-S-R, halogène-C(=S) -S-R, halogène-C(=NR)-S-R, halogène-S(=O)-S-R, halogène-S(=O)₂-S-R, R-S-C(=O)-S-R, R-S-C(=S)-S-R, R-S-C(=NR)-S-R, R-S-S(=O)-S-R, R-S-S(=O)₂-S-R, Y-C(=O)-S-R, Y-C(=S)-S-R, Y-C(=NR)-S-R, Y-S(=O)-S-R, Y-S(=O)₂-S-R, (X⁶)(X⁷)P(=S)-S-R, (X⁶)(X⁷)P(=O)-S-R, X⁸-C(=O)-S-R, R-C(=S)-S-R, R-C(=NR)-S-R, (X⁹)₂N-C(=O)-S-R, (X⁹)₂N-C(=S)-S-R, R-NR-C(=NR)-S-R, X⁹-O-C(=S)-S-R, R-S(=O)-S-R, R-S(=O)₂-S-R, R-NR-S(=O)₂-S-R, R-NR-S(=O)-S-R, (R-NR-)₂P(=S)-S-R, (R-NR-)₂P(=O)-S-R, R-(R-O-)P(=O)-S-R, R-(R-O-)P(=S)-S-R, R-(R-NR-)P(=O)-S-R, R-(R-NR-)P(=S)-S-R, (R-O-)(R-NR-)P(=O)-S-R, (R-O-)(R-NR-)P(=S)-S-R, (R-O-)P(=O)(S-R)₂, (R-O-)P(=S)(S-R)₂, (R-S-)P(=O)(S-R)₂, (R-NR-)P(=O)(S-R)₂, (R-NR-)P(=S)(S-R)₂, R-P(=O)(S-R)₂, R-P(=S)(S-R)₂, (R-O-)(Y)P(=O)-S-R, (R-O-)(Y)P(=S)-S-R, (R-NR-)(Y)P(=O)-S-R, (R-NR-)(Y)P(=S)-S-R, R-(Y)P(=O)-S-R, R-(Y)P=S)-S-R P(=O)(S-R)₃, P(=S)(S-R), P(NR)(S-R), Y-P(=O)(S-R)₂, Y-P(=S)(S-R)₂, Y-P(NR)(S-R)₂,Y₂P(=O)-S-R, Y₂P(=S)-S-R ou Y₂P(NR)-S-R, R, Y, Z, X⁴, X ⁵ X ⁶, X⁷, X⁸, X⁹ et t ayant les mêmes significations que dans la formule (I) et s étant 1 ou 2.

4. Procédé pour la préparation des composés organosiliciés selon la revendication 1, **caractérisé en ce qu'**on fixe par addition un composé de formule générale (IV),
Q (-SH) (IV)
dans laquelle Q a la même signification que dans la formule (I), sur un composé organosilicié comportant au moins une double liaison (=), de formule générale (V),
CX¹X²=CX²-G¹-Si (O-CX¹X²-CX¹X³)₃N (V)
dans laquelle X¹ X² et X³ ont les mêmes significations que dans la formule (I), -CX¹X²-CHX²-G¹ ou HCX¹X²-CX²(-)-G¹ étant identique à G.

5. Procédé pour la préparation des composés organosiliciés selon la revendication 1, **caractérisé en ce qu'**on fait réagir un composé de formule générale (VI) ,
Q(-S-X¹⁰) (VI)
dans laquelle Q a la même signification de dans la formule (I) et X¹⁰ a la même signification que dans la formule (II), avec un composé de formule générale (VII),
halogène-G-Si(O-CX¹X²-CX¹X³)₃N (VII)
dans laquelle X¹, X², X³ et G ont les mêmes significations que dans la formule (I).

6. Procédé pour la préparation des composés organosiliciés selon la revendication 1, **caractérisé en ce qu'**on fait réagir au moins un silane de formules générales VIII - XI,
Q-[S-G-Si(alcoxy)₃] (VIII)
(alcoxy)₃Si-G-S-C(=O)-Z-C(=O)-S-G-Si(alcoxy)₃ (IX)
(alcoxy)₃Si-G-S-C(=S)-Z-C(=S)-S-G-Si(alcoxy)₃ (X)
(alcoxy)₃Si-G-S-C(=NR)-Z-C(=NR)-S-G-Si(alcoxy)₃ (XI)
dans lesquelles G, Q et Z ont les mêmes significations que dans la formule (I) et alcoxy est, chaque fois indépendamment, un groupe alcoxy en C₁-C₂₄,
avec des composés de formule générale XII,
(HO-CX¹X²-CX¹X³-)₃N (XII)
dans laquelle X¹, X² et X³ ont les mêmes significations que dans la formule (I),
avec élimination de (alcoxy)-H et séparation de (alcoxy)-H d'avec le mélange réactionnel.

7. Compositions de caoutchouc, **caractérisées en ce qu'**elles contiennent du caoutchouc, une charge, éventuellement d'autres adjuvants pour caoutchouc, ainsi qu'au moins un composé organosilicié selon la revendication 1 ou 2.

8. Utilisation de compositions de caoutchouc selon la revendication 7, pour la production de corps moulés.

9. Utilisation de compositions de caoutchouc selon la revendication 7, pour la fabrication de pneumatiques à air, de bandes de roulement de pneumatiques, de composants de pneumatiques contenant du caoutchouc vulcanisé, de gaines de câbles, de tuyaux souples, de courroies d'entraînement, de bandes transporteuses, de revêtements de cylindres, de pneumatiques, de semelles de chaussures, de rondelles d'étanchéité et d'éléments amortisseurs.
